# EUROPEAN PATENT APPLICATION

(11) **EP 4 834 736 A1**
(43) Date of publication of application: **04.11.2026**
(21) Application number: 24911807.6
(22) Date of filing: 21.06.2024
(51) Int. Cl.: B62D 49/06, A01B 71/02, B62D 49/00

(54) **WORK VEHICLE**

(30) Priority: 27.12.2023 JP 2023220484
(71) Applicant: KUBOTA CORPORATION, Osaka-shi, Osaka 530-0011 (JP)
(72) Inventor: SAKANO,Tomoyoshi, Sakai-shi, Osaka 590-0908 (JP); HIBINO, Tsuyoshi, Sakai-shi, Osaka 590-0908 (JP); MIYAZAKI, Makoto, Sakai-shi, Osaka 590-0908 (JP); KAWABATA, Masahiro, Sakai-shi, Osaka 590-0908 (JP); FUKUDA, Ryosuke, Sakai-shi, Osaka 590-0908 (JP)
(74) Representative: Cabinet Beau de Loménie
(86) International application number: PCT/JP2024/022576
(87) International publication number: WO 2025/141908

(57) **Abstract**

To provide a working vehicle capable of outputting power generated by a power supply apparatus upward with respect to a traveling machine body to transmit the power to a working device. A working vehicle (1, 1A) includes a traveling machine body (100), a power supply apparatus (4) mounted in or on the traveling machine body (100), a mount (400) to allow a working device (200) including a power input (280) to receive an input of power to be attached to the traveling machine body (100), and to allow at least the power input (280) to be attached on the traveling machine body (100), and a power transmission mechanism (600) to output power generated by the power supply apparatus (4) upward with respect to the traveling machine body (100) such that the power is transmittable to the working device (200).

## Description

### Technical Field

The present invention relates to working vehicles to perform work such as agricultural work.

### Background Art

The working vehicle disclosed in PTL 1 has been known. The working vehicle (tractor) disclosed in PTL 1 includes a traveling machine body, a power supply apparatus (engine) mounted on the vehicle body, an output shaft (PTO shaft) to rearwardly take power generated by the power supply apparatus, and a mount (three-point linkage mechanism) for attaching a working device (cultivator) to a rear portion of the traveling machine body.

### Citation List

### Patent Literature

PTL 1: Japanese Unexamined Patent Application Publication No. 2016-15936

### Summary of Invention

### Technical Problem

The working vehicle described above is capable of outputting power generated by the power supply apparatus rearward with respect to the traveling machine body through the output shaft to transmit the power to the working device attached to the mount. However, the working vehicle is not capable of outputting power generated by the power supply apparatus upward with respect to the traveling machine body to transmit the power to the working device.

The present invention was made in view of the above issue, and an object thereof is to provide working vehicles each of which is configured to output power generated by the power supply apparatus upward with respect to the traveling machine body to transmit the power to the working device.

### Solution to Problem

A working vehicle according to an example embodiment of the present invention includes a traveling machine body, a power supply apparatus mounted in or on the traveling machine body, a mount to allow a working device including a power input to receive an input of power to be attached to the traveling machine body, and to allow at least the power input to be attached on the traveling machine body, and a power transmission mechanism to output power generated by the power supply apparatus upward with respect to the traveling machine body such that the power is transmittable to the working device.

The power transmission mechanism may include an upward output shaft extending upward to output power generated by the power supply apparatus upward with respect to the traveling machine body.

The working vehicle may further include a horizontal output shaft to output power generated by the power supply apparatus forward, rearward or laterally. The upward output shaft may branch from an intermediate portion of the horizontal output shaft and extends upward.

The working vehicle may further include a horizontal output shaft to output power generated by the power supply apparatus forward, rearward or laterally. The power transmission mechanism may include a changing mechanism to allow the horizontal output shaft to be changed to an upward shaft that extends upward.

The changing mechanism may include a lifting device to raise and lower a second working device located forward or rearward of the traveling machine body. The lifting device may be configured to, when the second working device is not attached to the lifting device, change the horizontal output shaft to an upward shaft.

The working vehicle may further include a horizontal output shaft to output power generated by the power supply apparatus forward, rearward or laterally. The power transmission mechanism may include a gear transmission mechanism to take power from an intermediate portion of the horizontal output shaft and output the power upward with respect to the traveling machine body.

The working vehicle may further include a horizontal output shaft to output power generated by the power supply apparatus forward, rearward or laterally. The power transmission mechanism may include a belt transmission mechanism to take power from an intermediate portion of the horizontal output shaft and output the power upward with respect to the traveling machine body.

The working vehicle may further include a working device to be attached to the mount. The working device may include the power input to receive an input of the power output upward from the power transmission mechanism with respect to the traveling machine body.

The working device may include, as the power input, a downward input shaft to be connected to the upward output shaft.

The working device may include, as the power input, a downward input shaft to be connected to the horizontal output shaft which is in the form of the upward shaft.

The gear transmission mechanism may include an output gear to output power upward with respect to the traveling machine body, the power being taken from the intermediate portion of the horizontal output shaft. The working device may include, as the power input, an input gear to be engaged with the output gear.

The belt transmission mechanism may include an output pulley to take power from the intermediate portion of the horizontal output shaft, and a belt wound around the output pulley to transmit power from the output pulley. The working device may include, as the power input, an input pulley with the belt wound thereon to receive power transmitted from the output pulley.

A working vehicle includes a traveling machine body, a power supply apparatus mounted in or on the traveling machine body, a working device including a power input to receive an input of power, a mount to allow the working device to be attached to the traveling machine body and allow at least the power input to be attached on the traveling machine body, and a power transmission mechanism to output power generated by the power supply apparatus upward with respect to the traveling machine body such that the power is transmittable to the working device. Advantageous Effects of Invention

With the working vehicle according to the present invention, it is possible to output power generated by the power supply apparatus upward with respect to the traveling machine body to transmit the power to the working device.

### Brief Description of Drawings

[FIG. 1] FIG. 1 is a perspective view illustrating an embodiment of a working vehicle.
[FIG. 2] FIG. 2 is a left side view illustrating an embodiment of the working vehicle.
[FIG. 3] FIG. 3 is a right side view illustrating an embodiment of the working vehicle.
[FIG. 4] FIG. 4 is a front view illustrating an embodiment of the working vehicle.
[FIG. 5] FIG. 5 is a rear view illustrating an embodiment of the working vehicle.
[FIG. 6] FIG. 6 is a plan view illustrating an embodiment of the working vehicle.
[FIG. 7] FIG. 7 is a block diagram illustrating an example of an entire configuration of the working vehicle.
[FIG. 8] FIG. 8 is a perspective view of a frame structure.
[FIG. 9] FIG. 9 is an exploded perspective view of the frame structure.
[FIG. 10] FIG. 10 is a perspective view illustrating a working vehicle with a vehicle body raised.
[FIG. 11] FIG. 11 is a front perspective view illustrating an embodiment of a harvesting machine (working vehicle in which a harvester is attached to a traveling machine body).
[FIG. 12] FIG. 12 is a left side view illustrating an embodiment of a harvesting machine (working vehicle in which a harvester is attached to a traveling machine body).
[FIG. 13] FIG. 13 is a right side view illustrating an embodiment of a harvesting machine (working vehicle in which a harvester is attached to a traveling machine body).
[FIG. 14] FIG. 14 is a rear perspective view illustrating an embodiment of a harvesting machine (working vehicle in which a harvester is attached to a traveling machine body).
[FIG. 15] FIG. 15 is a left side view illustrating another embodiment of a harvesting machine (working vehicle in which a harvester is attached to a traveling machine body).
[FIG. 16] FIG. 16 is a perspective view of a harvester as seen from below.
[FIG. 17] FIG. 17 is a side view illustrating a first example of structure of attachment of a harvester to a traveling machine body.
[FIG. 18] FIG. 18 is a side view illustrating a second example of structure of attachment of a harvester to a traveling machine body.
[FIG. 19] FIG. 19 is a side view illustrating a third example of structure of attachment of a harvester to a traveling machine body.
[FIG. 20] FIG. 20 is a front view illustrating the third example of structure of attachment of the harvester to the traveling machine body.
[FIG. 21] FIG. 21 is a side view illustrating a fourth example of structure of attachment of the harvester to the traveling machine body.
[FIG. 22] FIG. 22 is a front view illustrating the fourth example of structure of attachment of the harvester to the traveling machine body.
[FIG. 23] FIG. 23 is an explanatory view for a configuration that allows a projection to appear.
[FIG. 24] FIG. 24 is a vertical sectional view of a locking mechanism and a to-be-fixed portion as seen from the side.
[FIG. 25] FIG. 25 is a vertical sectional view of the locking mechanism and the to-be-fixed portion as seen from the front.
[FIG. 26] FIG. 26 illustrates a state (left figure) in which the locking mechanism is not actuated, and a state (right figure) after the locking mechanism is actuated.
[FIG. 27] FIG. 27 is an explanatory view of a first example of a method of attaching a harvester to a traveling machine body.
[FIG. 28] FIG. 28 is an explanatory view of the first example of the method of attaching the harvester to the traveling machine body.
[FIG. 29] FIG. 29 is an explanatory view of the first example of the method of attaching the harvester to the traveling machine body.
[FIG. 30] FIG. 30 is an explanatory view of the first example of the method of attaching the harvester to the traveling machine body.
[FIG. 31] FIG. 31 is an explanatory view of the first example of the method of attaching the harvester to the traveling machine body.
[FIG. 32] FIG. 32 is a plan view of a rest.
[FIG. 33] FIG. 33 is a plan view of a variation of a rest.
[FIG. 34] FIG. 34 is an explanatory view of an example of a method of detaching a harvester from a traveling machine body.
[FIG. 35] FIG. 35 is an explanatory view of an example of the method of detaching the harvester from the traveling machine body.
[FIG. 36] FIG. 36 is an explanatory view of a second example of a method of attaching a harvester to a traveling machine body.
[FIG. 37] FIG. 37 is an explanatory view of the second example of the method of attaching the harvester to the traveling machine body.
[FIG. 38] FIG. 38 is an explanatory view of the second example of the method of attaching the harvester to the traveling machine body.
[FIG. 39] FIG. 39 is an explanatory view of the second example of the method of attaching the harvester to the traveling machine body.
[FIG. 40] FIG. 40 is an explanatory view of a third example of a method of attaching a harvester to a traveling machine body.
[FIG. 41] FIG. 41 is an explanatory view of the third example of the method of attaching the harvester to the traveling machine body.
[FIG. 42] FIG. 42 is an explanatory view of the third example of the method of attaching the harvester to the traveling machine body.
[FIG. 43] FIG. 43 is an explanatory view of the third example of the method of attaching the harvester to the traveling machine body.
[FIG. 44] FIG. 44 is an explanatory view of a fourth example of a method of attaching the harvester to the traveling machine body.
[FIG. 45] FIG. 45 is an explanatory view of the fourth example of the method of attaching the harvester to the traveling machine body.
[FIG. 46] FIG. 46 is an explanatory view of the fourth example of the method of attaching the harvester to the traveling machine body.
[FIG. 47] FIG. 47 is an explanatory view of the fourth example of the method of attaching the harvester to the traveling machine body.
[FIG. 48] FIG. 48 is a view illustrating an example (first example) of a power transmission path of a harvesting machine (working vehicle in which a harvester is attached to a traveling machine body).
[FIG. 49] FIG. 49 is a view illustrating an example (second example) of a power transmission path of a harvesting machine (working vehicle in which a harvester is attached to a traveling machine body).
[FIG. 50] FIG. 50 is a view illustrating: a traveling machine body including a first example of a power transmission mechanism; and a harvester attached to the traveling machine body.
[FIG. 51] FIG. 51 is a view illustrating a state where an upward output shaft and a downward input shaft are connected via a shaft coupling.
[FIG. 52] FIG. 52 is a view illustrating a traveling machine body including a second example of a power transmission mechanism.
[FIG. 53] FIG. 53 is a view illustrating a state where a horizontal output shaft is changed to an upward shaft which extends upward.
[FIG. 54] FIG. 54 is a view illustrating the configuration of a harvester attached to a traveling machine body including the second example of the power transmission mechanism.
[FIG. 55] FIG. 55 is a view illustrating a state where the horizontal output shaft changed to upward, and the downward input shaft are connected via a shaft coupling.
[FIG. 56] FIG. 56 is a plan view illustrating a state where a projection of the horizontal output shaft is connected to a lower link and a top link via a connecting member.
[FIG. 57] FIG. 57 is a view illustrating: the traveling machine body including a third example of a power transmission mechanism; and a harvester attached to the traveling machine body.
[FIG. 58] FIG. 58 is a view illustrating a state where an output gear provided in the traveling machine body and an input gear provided in the harvester are engaged.
[FIG. 59] FIG. 59 is a view illustrating: a traveling machine body including a fourth example of a power transmission mechanism; and a harvester attached to the traveling machine body.
[FIG. 60] FIG. 60 is a view illustrating a state before a belt is wrapped around an output pulley provided in the traveling machine body and an input pulley provided in the harvester.
[FIG. 61] FIG. 61 is a state where a belt is wrapped around the output pulley provided in the traveling machine body and the input pulley provided in the harvester, and a tension pulley is brought into contact with the outer surface of the belt.
[FIG. 62] FIG. 62 is a view illustrating an example (first example) of the power transmission path of the harvesting machine (working vehicle in which the harvester is attached to the traveling machine body) when the harvester is a digging machine that digs up crops.
[FIG. 63] FIG. 63 is a view illustrating an example (second example) of the power transmission path of the harvesting machine (working vehicle in which the harvester is attached to the traveling machine body) when the harvester is a digging machine.
[FIG. 64] FIG. 64 is a view illustrating an example (first example) of the power transmission path of the harvesting machine (working vehicle in which the harvester is attached to the traveling machine body) when the harvester is a pulling up machine.
[FIG. 65] FIG. 65 is a view illustrating an example (second example) of the power transmission path of the harvesting machine (working vehicle in which the harvester is attached to the traveling machine body) when the harvester is a pulling up machine.

### Description of Embodiments

Hereinafter, preferred embodiments of a working vehicle 1 according to the present invention will be described. The work performed by the working vehicle 1 includes, e.g., work related to agriculture, work related to industry (such as civil engineering or architecture), and work related to transportation, but is not limited to such work. In the preferred embodiments of the present invention, the work performed by the working vehicle 1 is the work (agricultural work) related to agriculture. Hereinafter, as an example, the case will be described where the work performed by the working vehicle 1 is agricultural work. In this case, the working vehicle 1 is an agricultural working vehicle.

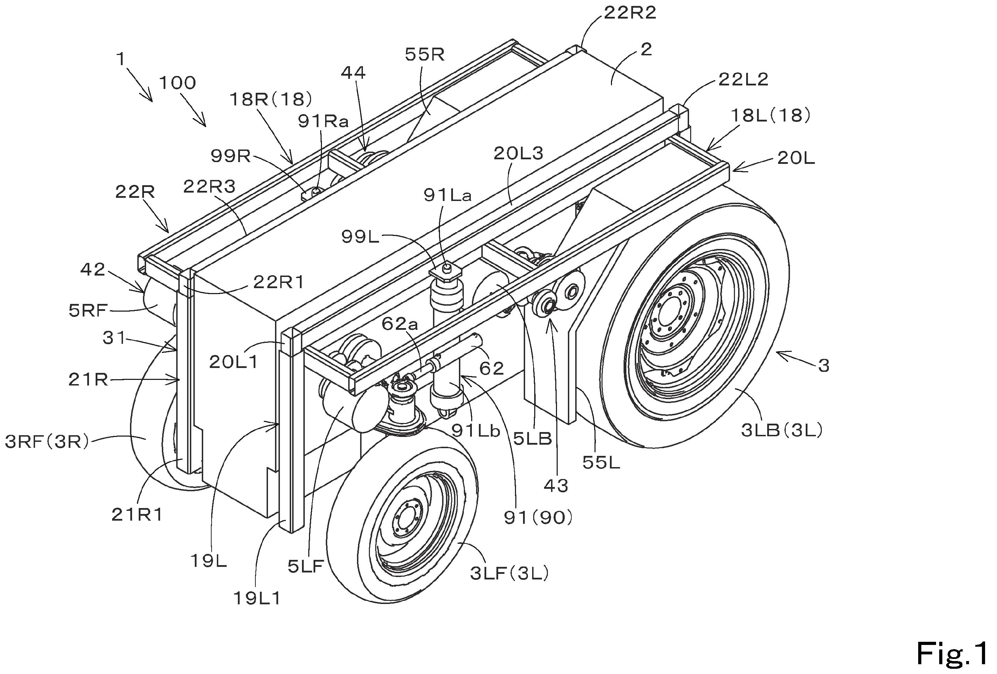

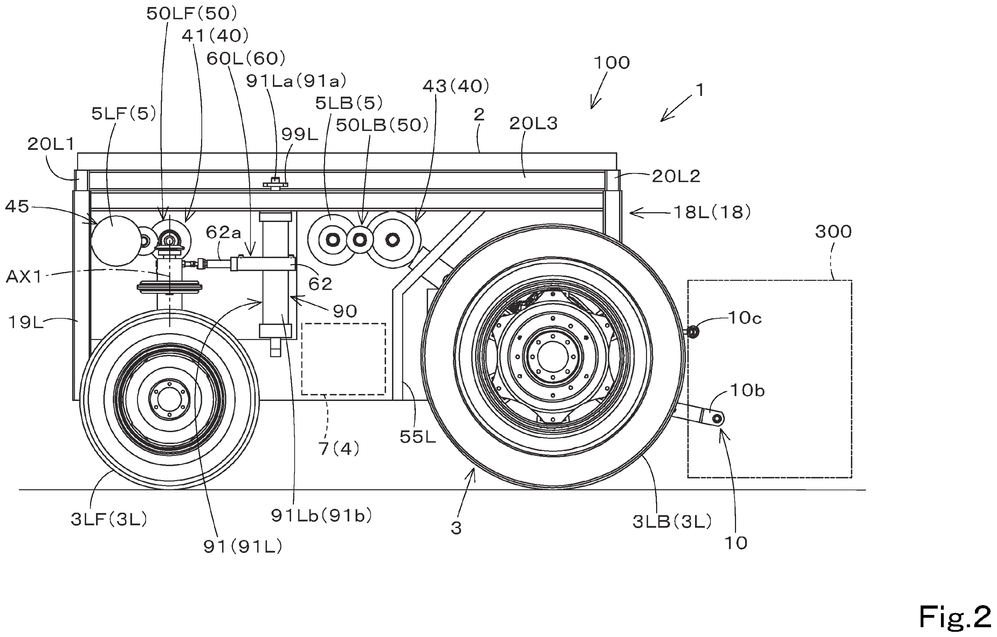

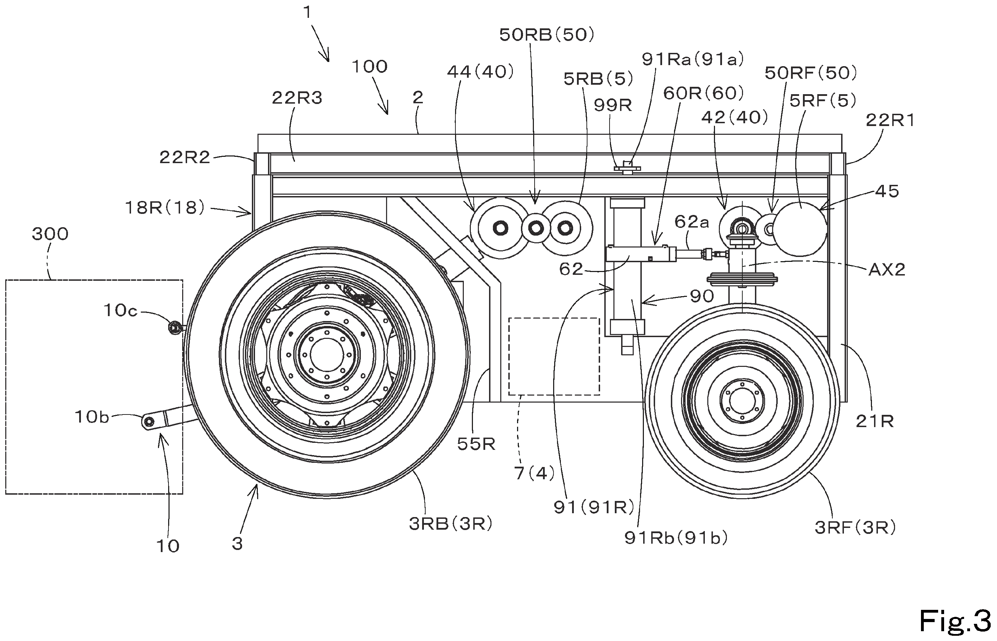

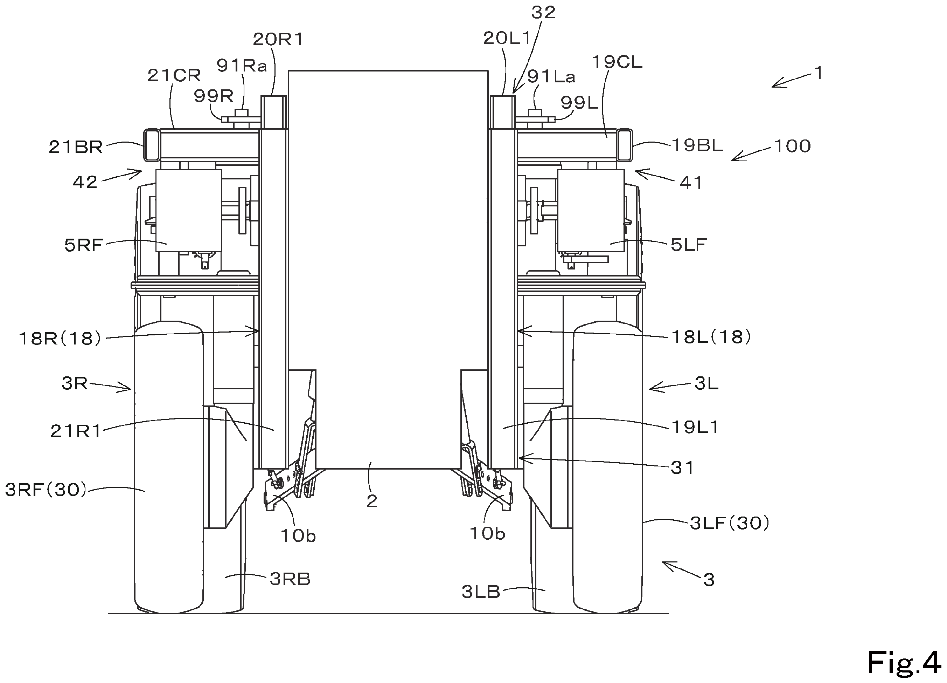

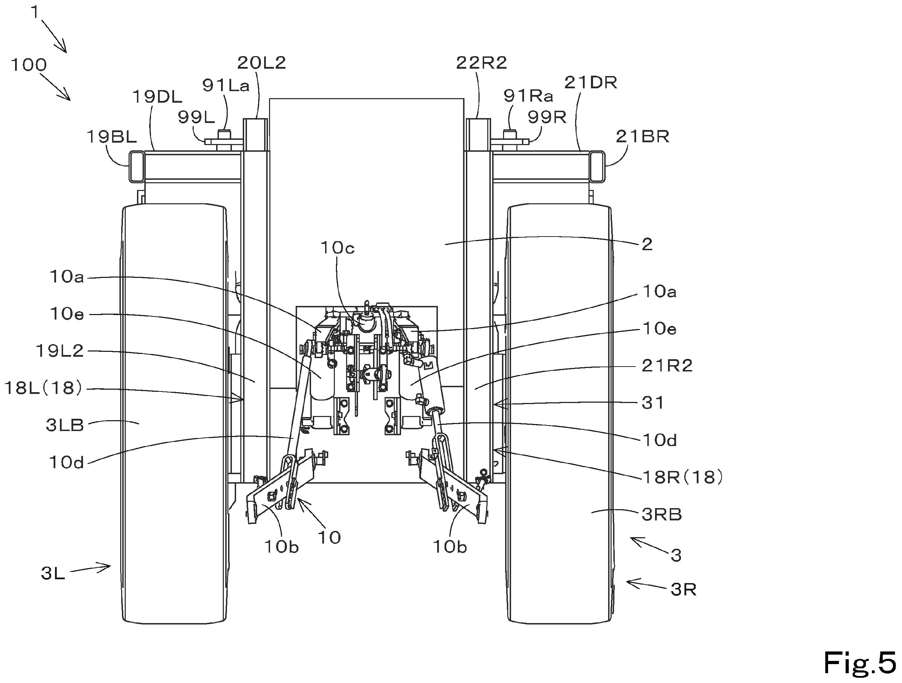

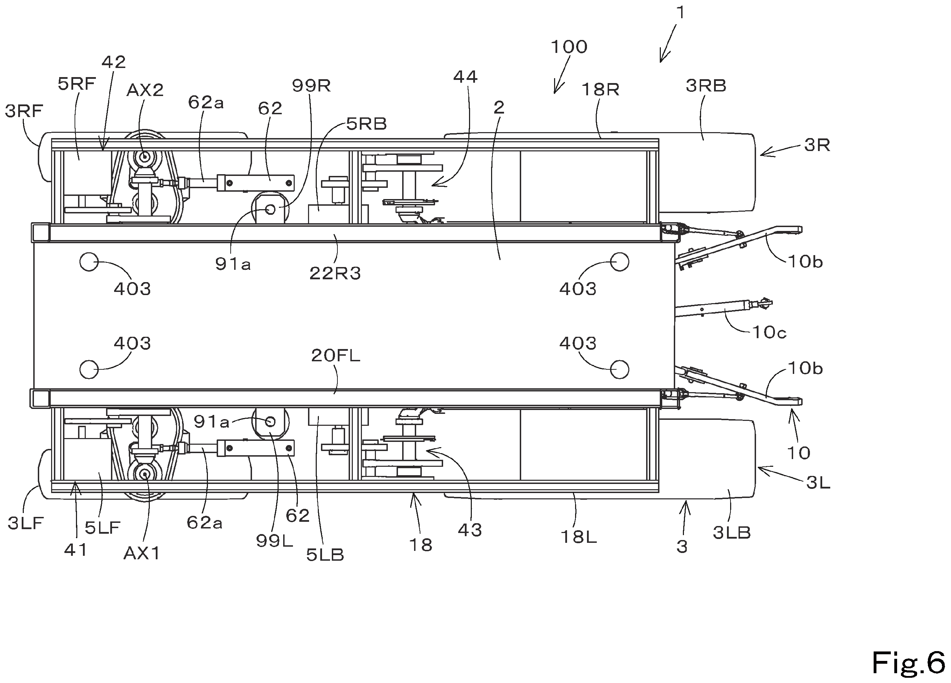

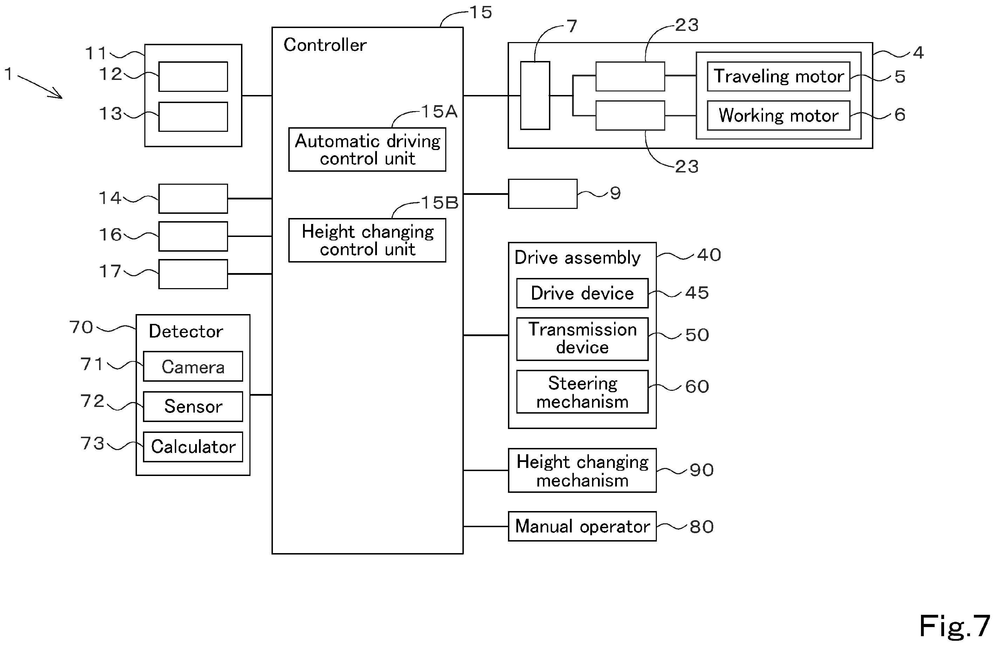

FIGS. 1 to 7 each illustrates a view illustrating another embodiment of the working vehicle 1. FIG. 1 is a perspective view of the working vehicle 1. FIG. 2 is a left side view of the working vehicle 1. FIG. 3 is a right side view of the working vehicle 1. FIG. 4 is a front view of the working vehicle 1. FIG. 5 is a rear view of the working vehicle 1. FIG. 6 is a plan view of the working vehicle 1. FIG. 7 is a block diagram illustrating the entire configuration of the working vehicle 1.

As illustrated in FIGS. 1 to 6, the working vehicle 1 includes a traveling machine body 100, and a power supply apparatus 4 (see FIG. 2, FIG. 3) mounted in or on the traveling machine body 100. The traveling machine body 100 includes a vehicle body 2, and a traveling device 3 to support the vehicle body 2 such that the vehicle body 2 is allowed to travel. In the present embodiment, the vehicle body 2 is in a substantially rectangular parallelepiped shape having an internal space. However, the shape of the vehicle body 2 is not limited to the substantially rectangular parallelepiped shape. Various devices and pieces of equipment are housed in the internal space of the vehicle body 2.

As illustrated in FIGS. 2 and 3, the power supply apparatus 4 to drive the traveling device 3 is mounted (housed) in the internal space of the vehicle body 2. The power supply apparatus 4 generates power to drive the traveling device 3, and the power is supplied to the traveling device 3. As illustrated in FIG. 7, the power supply apparatus 4 includes a motor 5 and a battery 7. In the present embodiment, as the power supply apparatus 4, the battery 7 is mounted (housed) in the vehicle body 2.

The motor 5 is a traveling motor that generates power to drive the traveling device 3. The motor 5 is an electric motor driven by electricity. An inverter 23 is connected to the motor 5. The inverter 23 controls the rotation of the motor 5 based on a control signal from the later-described controller 15. The battery 7 stores the electricity to be supplied to the motor 5. However, the power supply apparatus 4 may include an engine instead of the motor 5. Alternatively, the power supply apparatus 4 may include fuel cells.

As illustrated in FIG. 7, the power supply apparatus 4 includes a motor 6 serving as a working motor in addition to the motor 5 serving as a traveling motor. The working motor generates power to drive devices and mechanisms which are different from the traveling device 3. The motor 6 is an electric motor driven by the electricity supplied from the battery 7. The rotation of the motor 6 can be controlled by the inverter 23. Hereinafter, the motor 5 may be referred to as the "traveling motor 5", and the motor 6 may be referred to as the "working motor 6".

The motors (the traveling motor 5 and the working motor 6) can be mounted on the vehicle body 2. The traveling motor 5 and the working motor 6 can be driven independently from each other. The working motor 6 is a motor to drive a hydraulic pump for actuating the later-described hydraulic cylinder. In addition, the working motor 6 also serves as a motor to drive an external output shaft.

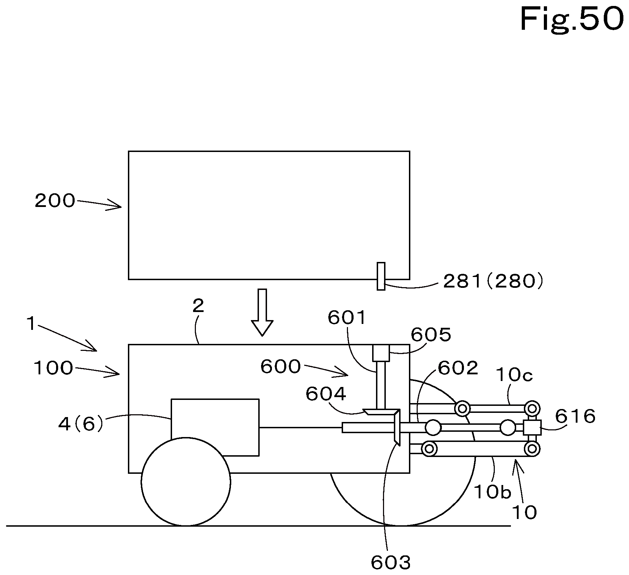

The external output shaft is an output shaft for taking the power of the working motor 6 to the outside of the vehicle body 2. Thus, the working vehicle 1 includes an external output shaft to take the power from the working motor 6 to the outside of the vehicle body 2. The external output shaft is, e.g., a PTO shaft. As the external output shaft, the working vehicle 1 includes the later-described upward output shaft 601 and/or horizontal output shaft 602 (see FIGS. 50 to 61). The upward output shaft 601 and the horizontal output shaft 602 will be described in detail later.

The working motor 6 may be a hydraulic motor. The hydraulic motor is driven by the hydraulic fluid supplied from a hydraulic pump. In this case, for example, the hydraulic pump is driven by the traveling motor 5, the hydraulic motor (the working motor 6) is driven by the hydraulic fluid supplied from the hydraulic pump, and the external output shaft is driven by driving the hydraulic motor. Alternatively, the working vehicle 1 may include a working motor 6 which is a hydraulic motor, separately from the working motor 6 which is an electric motor.

As described above, the battery 7 which is part of the power supply apparatus 4 is housed in the vehicle body 2 (see FIG. 2 and FIG. 3). Although not illustrated, the vehicle body 2 further houses a cooling system (a radiator, a fan, a water pump, a compressor and the like) that cools the power supply apparatus 4 (the motor 5, the motor 6, the battery 7 and the like); and a hydraulic system (a control valve and the like) to actuate the later-described hydraulic cylinders (cylinder 62 and lifting cylinder 91) and the like based on a control signal from the controller 15.

The vehicle body 2 is allowed to travel by driving the traveling device 3. As illustrated in FIG. 4, FIG. 5 and the like, the traveling device 3 includes a left traveling device 3L provided leftward of the vehicle body 2, and a right traveling device 3R provided rightward of the vehicle body 2. The vehicle body 2 is between the left traveling device 3L and the right traveling device 3R. As illustrated in FIG. 2, the left traveling device 3L includes a left front wheel 3LF and a left rear wheel 3LB. As illustrated in FIG. 3, the right traveling device 3R includes a right front wheel 3RF and a right rear wheel 3RB. Hereinafter, for the purpose of illustration, the left front wheel 3LF, the right front wheel 3RF, the left rear wheel 3LB, and the right rear wheel 3RB may be collectively referred to as the "wheels 30".

The wheels 30 (the left front wheel 3LF, the right front wheel 3RF, the left rear wheel 3LB, and the right rear wheel 3RB) are located laterally of the vehicle body 2. The left front wheel 3LF and the left rear wheel 3LB are located leftward of the vehicle body 2. The right front wheel 3RF and the right rear wheel 3RB are located rightward of the vehicle body 2. In the traveling machine body 100 of the working vehicle 1 in the present embodiment, the size (the diameter and width) of the rear wheels (the left rear wheel 3LB and the right rear wheel 3RB) is larger than the size (diameter and width) of the front wheels (the left front wheel 3LF and the right front wheel 3RF). However, the size of the front wheels (the left front wheel 3LF and the right front wheel 3RF) may be the same as the size of the rear wheels (the left rear wheel 3LB and the right rear wheel 3RB), or the size of the front wheels may be larger than the size of the rear wheels.

In the present embodiment, the traveling device 3 is a wheel traveling device in which the front wheels (the left front wheel 3LF and the right front wheel 3RF) and the rear wheels (the left rear wheel 3LB and the right rear wheel 3RB) are all tires. However, the traveling device 3 may be a crawler traveling device in which the left traveling device 3L and the right traveling device 3R are crawlers, or the traveling device 3 may be a traveling device in which one of the front wheels and the rear wheels are wheels, and the other are crawlers.

As illustrated in FIGS. 1 to 3, the traveling machine body 100 of the working vehicle 1 includes a fender 55L to cover upper and forward areas of the left rear wheel 3LB, and a fender 55R to cover upper and forward areas of the right rear wheel 3RB. The fenders 55L and 55R are attached to the later-described frame structure 18. Although not illustrated, the traveling machine body 100 may include a fender to cover the front wheels (the left front wheel 3LF and the right front wheel 3RF).

As illustrated in FIG. 7, the working vehicle 1 includes a transmission 9. The transmission 9 can change the driving force of the traveling device 3 by changing speed stages. In addition, the transmission 9 can switch between forward drive and reverse drive of the traveling device 3. The transmission 9 may include a transmission clutch that can switch between a four-wheel drive state (4WD) and a two-wheel drive state (2WD), the four-wheel drive state allowing all four wheels (the left front wheel 3LF, the right front wheel 3RF, the left rear wheel 3LB, and the right rear wheel 3RB) to be driven, and the two-wheel drive state allowing only the rear wheels (the left rear wheel 3LB and the right rear wheel 3RB) or only the front wheels (the left front wheel 3LF and the right front wheel 3RF) to be driven.

The working vehicle 1 includes a lifting device 10 to which a working device 300 different from the later-described working device 200 is attached, the lifting device 10 being able to be raised and lowered. Hereinafter, for the purpose of illustration, another working device 300 is referred to as the "second working device 300". As illustrated in FIGS. 2 and 3, the second working device 300 can be detachably attached to the lifting device 10. The lifting device 10 is provided in a rear portion of the vehicle body 2. FIG. 5 is a rear view of the lifting device 10. However, the lifting device 10 may be provided in a front portion or a side portion (a left portion or a right portion) of the vehicle body 2.

The type of the second working device 300 attached to the lifting device 10 is not limited to a specific one. The second working device 300 includes, e.g., a device to perform work (agricultural work) related to agriculture, a device to perform work related to civil engineering, a device to perform work related to architecture, and a device to perform work related to transportation.

The second working device 300 that performs agricultural work includes, e.g., a spreader to spread a substance to be spread such as a fertilizer or an agricultural chemical, a seeder to plant seeds, a cultivator to cultivate the soil, a tiller (plow) to till the soil, a weed remover to remove weeds, and a ridging machine to ridge the soil surface.

The second working device 300 attached to the lifting device 10 can be driven by the power transmitted from the external output shaft (the later-described upward output shaft 601 and/or horizontal output shaft 602) for taking off the power of the working motor 6 to the outside of the vehicle body 2. When the second working device 300 is an electric working device, the second working device 300 may be driven by the electricity taken from the battery 7 to the outside of the vehicle body 2 through an electricity line, instead of being driven by the power taken from the external output shaft.

The lifting device 10 includes a three-point linkage mechanism. Specifically, as illustrated in FIG. 5, the lifting device 10 includes a lift arm 10a, a lower link 10b, a top link 10c, a lift rod 10d, and a lift cylinder 10e. The front end of the lift arm 10a is supported on an upper rear portion of the vehicle body 2 swingably upward or downward. The lift arm 10a is swung (raised or lowered) by driving the lift cylinder 10e. The lift cylinder 10e includes a hydraulic cylinder. The lift cylinder 10e is connected to a hydraulic pump (not illustrated) via a control valve (not illustrated).

The hydraulic pump is driven by the working motor 6. The control valve is a solenoid valve such that opening and closing of a flow path is controlled by the controller 15. The lift cylinder 10e can be extended and retracted by the control valve controlling the flow of the hydraulic fluid discharged from the hydraulic pump.

The front end of the lower link 10b is supported on a lower rear portion of the vehicle body 2 swingably upward or downward. The front end of the top link 10c is supported on a rear portion of the vehicle body 2 swingably upward or downward, the rear portion being above the lower link 10b. The lift rod 10d connects the lift arm 10a and the lower link 10b. The second working device 300 is connected to a rear portion of the lower link 10b and a rear portion of the top link 10c. When the lift cylinder 10e is driven (extended or retracted), the lift arm 10a is raised or lowered as well as the lower link 10b connected to the lift arm 10a through the lift rod 10d is raised or lowered. Thus, the second working device 300 is swung (raised or lowered) upward or downward around a front portion of the lower link 10b, as a fulcrum.

The second working device 300 attached to the lifting device 10 is towed and moved by the working vehicle 1 with travel of the working vehicle 1. Note that instead of the second working device 300, a carriage or the like that transports agricultural crops may be attached to the lifting device 10.

As illustrated in FIG. 7, the working vehicle 1 includes a positioning device 11. The positioning device 11 can detect the position (measured position information including the latitude and longitude) of the vehicle body 2 by a satellite positioning system (positioning satellites) such as D-GPS, GPS, GLONASS, Hokuto, Galileo, or Michibiki. Specifically, the positioning device 11 receives satellite signals (such as the positions of the positioning satellites, transmission time, and correction information) transmitted from the positioning satellites, and detects the position (for example, the latitude and longitude) of the vehicle body 2 based on the satellite signals.

The positioning device 11 includes a receiver 12, and an inertial measurement unit (IMU) 13. The receiver 12 is a device including an antenna and being configured to receive the satellite signals transmitted from the positioning satellites, and the device is attached to the vehicle body 2. The IMU 13 includes an acceleration sensor to detect an acceleration, and a gyroscope sensor to detect an angular velocity. The IMU 13 is attached to the vehicle body 2. The IMU 13 can detect the roll angle, pitch angle, yaw angle and the like of the vehicle body 2. Note that the yaw angle may be detected by installing a plurality of positioning devices 11.

As illustrated in FIG. 7, the working vehicle 1 includes a communication device 14. The communication device 14 includes a communication circuit to perform communication via an in-vehicle network, and a wireless communication circuit to perform wireless communication. The wireless communication circuit can directly or indirectly communicate with an external equipment by Wireless Fidelity (Wi-Fi, registered trademark), Bluetooth Low Energy (BLE, registered trademark), Low Power, Wide Area (LPWA), Low-Power Wide-Area Network (LPWAN) and the like of IEEE802.11 series which is a communication standard. As another example, the communication device 14 may be provided with a communication circuit that can indirectly communicate with an external equipment by, e.g., a mobile phone communication network or a data communication network and the like. The external equipment is, e.g., a personal computer, a smartphone, a tablet computer, a PDA or a server and the like. The external equipment may include, e.g., the later-described manual operator 80.

As illustrated in FIG. 7, the working vehicle 1 includes the controller 15. The controller 15 is mounted on the traveling machine body 100. The controller 15 performs various controls on the working vehicle 1. The controller 15 includes an arithmetic unit (such as a CPU) and a storage (such as a RAM or a ROM). The storage may include an external memory provided outside the controller 15. The controller 15 is connected to various devices and mechanisms illustrated in FIG. 7 through an in-vehicle network (in-vehicle LAN) such as a Controller Area Network (CAN), or a communication line.

The controller 15 controls the operation of various devices and mechanisms communicably connected to the controller 15, by the arithmetic unit executing various control programs stored in the storage. The function of the later-described control units (automatic driving control unit 15A, and height changing control unit 15B) of the controller 15 is implemented by the arithmetic unit executing a predetermined control program stored in the storage.

As illustrated in FIG. 7, the controller 15 includes the automatic driving control unit 15A. The automatic driving control unit 15A controls the automatic driving of the traveling machine body 100. Thus, the traveling machine body 100 includes the controller 15 that performs automatic driving. The automatic driving control unit 15A can perform line automatic driving control and autonomous driving control. In the line automatic driving control, the automatic driving control unit 15A controls the operation of the later-described steering mechanism 60, transmission 9, motor 5 and the like such that the traveling machine body 100 (vehicle body 2) moves along a preset travel scheduled line.

In the autonomous driving control, the automatic driving control unit 15A sets the travel direction (steering direction) and the vehicle speed (speed) of the vehicle body 2 by the positioning device 11 and the like based on results of sensing (detection of an object) the surroundings of the traveling machine body 100 (vehicle body 2), and controls the operation of the steering mechanism 60, the transmission 9, the motor 5 and the like such that the set steering and vehicle speed are achieved.

Note that the line automatic driving control and the autonomous driving control may be switched by a switch or the like. Alternatively, the automatic driving control unit 15A may be configured to perform either the line automatic driving control or the autonomous driving control. However, the configuration of the automatic driving control unit 15A is not limited to the one described above.

The controller 15 of the traveling machine body 100 includes the automatic driving control unit 15A, and thus the working vehicle 1 can perform automatic driving (unmanned driving) without an operator on board. Thus, the traveling machine body 100 in the illustrated embodiment includes no operator's seat where an operator is seated. However, the working vehicle 1 may perform automatic driving with an operator on board. Alternatively, the working vehicle 1 may be driven to travel with an operator on board. When the working vehicle 1 is driven by an operator on board, the vehicle body 2 is provided with an operator's seat.

As illustrated in FIG. 7, the working vehicle 1 includes an illumination device 16. The illumination device 16 is provided in the vehicle body 2. The illumination device 16 includes a headlight that illuminates at least the area ahead of the vehicle body 2. In addition to the headlight, the illumination device 16 may include a plurality of work lights that illuminate the periphery of the vehicle body 2. The work lights can illuminate, for example, the side areas (leftward area and rightward area) of the vehicle body 2 and the rearward area of the vehicle body 2. In addition, the illumination device 16 may include a status indicator light, left and right lights, a brake light and the like

As illustrated in FIG. 7, the working vehicle 1 includes a notification device 17. The notification device 17 notifies people in the periphery of the vehicle body 2 of danger (such as approach of the vehicle body 2) by sound and light or the like. The notification device 17 is a speaker, a warning light and the like.

As illustrated in FIGS. 1 to 6 and the like, the traveling machine body 100 includes a frame structure 18 that is provided at the periphery of the vehicle body 2 and attached to the vehicle body 2. The frame structure 18 includes a left frame 18L and a right frame 18R. The left frame 18L and the right frame 18R are located laterally of the vehicle body 2.

The left frame 18L is provided leftward of the vehicle body 2. The left frame 18L extends in the up-down direction along the vehicle body 2. The left frame 18L also extends in the front-rear direction along the vehicle body 2. The left frame 18L connects the left front wheel 3LF and the left rear wheel 3LB.

The right frame 18R is provided rightward of the vehicle body 2. The right frame 18R extends in the up-down direction along the vehicle body 2. The right frame 18R also extends in the front-rear direction along the vehicle body 2. The right frame 18R connects the right front wheel 3RF and the right rear wheel 3RB.

As illustrated in FIG. 4, the vehicle body 2 is provided between the left frame 18L and the right frame 18R in a front view. In other words, the vehicle body 2 is located in an area between the left frame 18L and the right frame 18R.

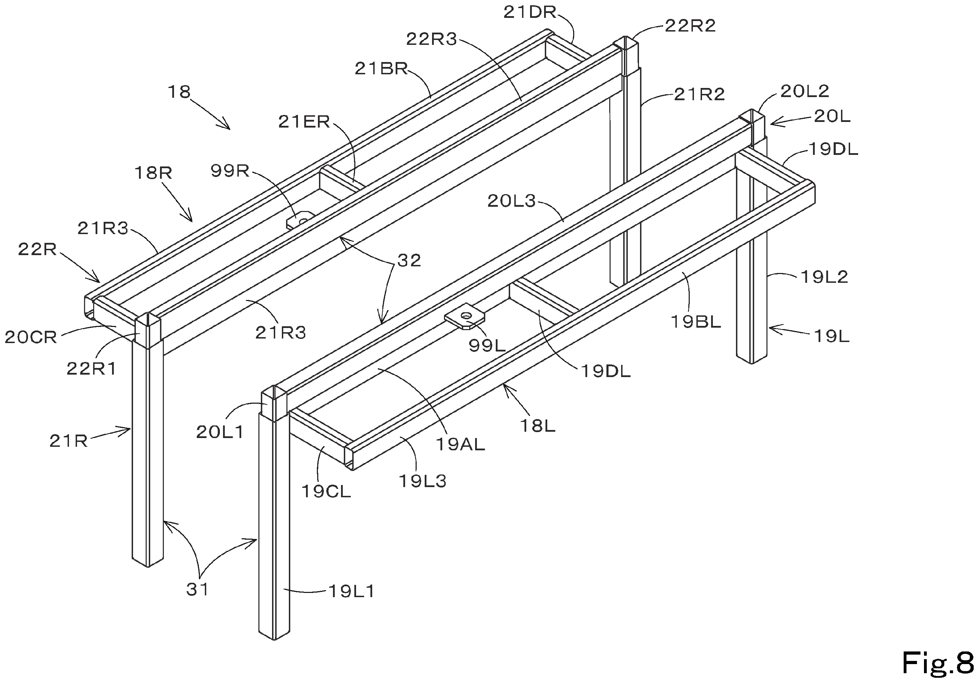

As illustrated in FIG. 8, the left frame 18L includes a first left frame 19L and a second left frame 20L. The first left frame 19L includes a first front pillar 19L1, a first rear pillar 19L2, and a first connector 19L3. The first front pillar 19L1 and the first rear pillar 19L2 are spaced apart in the front-rear direction, and extend in parallel to each other in the up-down direction. As illustrated in FIG. 1 and FIG. 4, the first front pillar 19L1 is located leftward of a front portion of the vehicle body 2. As illustrated in FIG. 5, the first rear pillar 19L2 is located leftward of a rear portion of the vehicle body 2. The first front pillar 19L1 and the first rear pillar 19L2 are in a tubular (square tubular) shape.

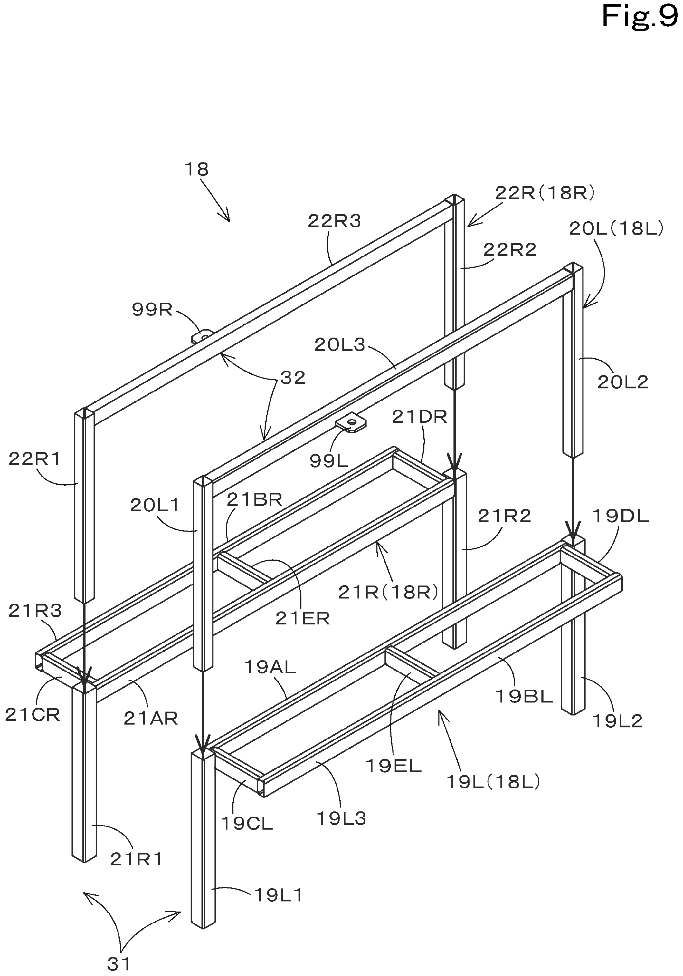

As illustrated in FIG. 9, the first connector 19L3 connects the first front pillar 19L1 and the first rear pillar 19L2. The first connector 19L3 includes a frame member 19AL, a frame member 19BL, a frame member 19CL, a frame member 19DL, and a frame member 19EL. The frame member 19AL extends in the front-rear direction, and connects an upper portion of the first front pillar 19L1 and an upper portion of the first rear pillar 19L2. The frame member 19BL is leftward of the frame member 19AL and extends in the front-rear direction. The frame member 19CL connects a front portion of the frame member 19AL and a front portion of the frame member 19BL. The frame member 19DL connects a rear portion of the frame member 19AL and a rear portion of the frame member 19BL. The frame member 19EL connects an intermediate portion of the frame member 19AL in the front-rear direction and an intermediate portion of the frame member 19BL in the front-rear direction.

As illustrated in FIG. 9, the second left frame 20L includes a second front pillar 20L1, a second rear pillar 20L2, and a second connector 20L3. The second front pillar 20L1 and the second rear pillar 20L2 are spaced apart in the front-rear direction, and extend in parallel to each other in the up-down direction. The second connector 20L3 connects the second front pillar 20L1 and the second rear pillar 20L2. The second connector 20L3 extends in the front-rear direction, and connects an upper portion of the second front pillar 20L1 and an upper portion of the second rear pillar 20L2.

As indicated by a downward arrow in FIG. 9, the second front pillar 20L1 is inserted into the inside of the tubular first front pillar 19L1 from above. The second rear pillar 20L2 is inserted into the inside of the tubular first rear pillar 19L2 from above. Thus, the first left frame 19L and the second left frame 20L are combined (see FIG. 8). The second front pillar 20L1 can be moved in the up-down direction along the first front pillar 19L1. The second rear pillar 20L2 can be moved in the up-down direction along the first rear pillar 19L2. Thus, the second left frame 20L can be moved in the up-down direction with respect to the first left frame 19L.

As illustrated in FIG. 9, the right frame 18R includes a first right frame 21R and a second right frame 22R. The first right frame 21R includes a first front pillar 21R1, a first rear pillar 21R2, and a first connector 21R3. The first front pillar 21R1 and the first rear pillar 21R2 are spaced apart in the front-rear direction, and extend in parallel to each other in the up-down direction. As illustrated in FIG. 1 and FIG. 4, the first front pillar 21R1 is located rightward of a front portion of the vehicle body 2. As illustrated in FIG. 5, the first rear pillar 21R2 is located rightward of a rear portion of the vehicle body 2. The first front pillar 21R1 and the first rear pillar 21R2 are in a tubular (square tubular) shape.

The first connector 21R3 connects the first front pillar 21R1 and the first rear pillar 21R2. The first connector 21R3 includes a frame member 21AR, a frame member 21BR, a frame member 21CR, a frame member 21DR, and a frame member 21ER. The frame member 21AR extends in the front-rear direction, and connects an upper portion of the first front pillar 21R1 and an upper portion of the first rear pillar 21R2. The frame member 21BR is rightward of the frame member 21AR, and extends in the front-rear direction. The frame member 21CR connects a front portion of the frame member 21AR and a front portion of the frame member 21BR. The frame member 21DR connects a rear portion of the frame member 21AR and a rear portion of the frame member 21BR. The frame member 21ER connects an intermediate portion of the frame member 21AR in the front-rear direction and an intermediate portion of the frame member 21BR in the front-rear direction.

The second right frame 22R includes a second front pillar 22R1, a second rear pillar 22R2, and a second connector 22R3. The second front pillar 22R1 and the second rear pillar 22R2 are spaced apart in the front-rear direction, and extend in parallel to each other in the up-down direction. The second connector 22R3 connects the second front pillar 22R1 and the second rear pillar 22R2. The second connector 22R3 extends in the front-rear direction, and connects an upper portion of the second front pillar 22R1 and an upper portion of the second rear pillar 22R2.

As indicated by a downward arrow in FIG. 9, the second front pillar 22R1 is inserted into the inside of the tubular first front pillar 21R1 from above. The second rear pillar 22R2 is inserted into the inside of the tubular first rear pillar 21R2 from above. Thus, the first right frame 21R and the second right frame 22R are combined (see FIG. 8). The second front pillar 22R1 can be moved in the up-down direction along the first front pillar 21R1. The second rear pillar 22R2 can be moved in the up-down direction along the first rear pillar 21R2. Thus, the second right frame 22R can be moved in the up-down direction with respect to the first right frame 21R.

The vehicle body 2 is attached to the second left frame 20L and the second right frame 22R. A left portion (left side surface) of the vehicle body 2 is attached to the second left frame 20L. A right portion (right side surface) of the vehicle body 2 is attached to the second right frame 22R. Specifically, the left portion (the left side surface) of the vehicle body 2 is attached to the second connector 20L3 of the second left frame 20L. A right portion (right side surface) of the vehicle body 2 is attached to the second connector 22R3 of the second right frame 22R.

The method of attaching the vehicle body 2 to the second left frame 20L (the second connector 20L3) and the second right frame 22R (the second connector 22R3) is not limited to a specific one, and, for example, the vehicle body 2 may be detachably attached by a fastener such as a bolt, or attached by welding or adhesive bonding and the like.

As described above, the vehicle body 2 is attached to the second left frame 20L and the second right frame 22R, and thus can be moved integrally with the left frame 18L and the right frame 18R. Thus, when the left frame 18L and the right frame 18R are moved in the up-down direction with respect to the first left frame 19L and the first right frame 21R, the vehicle body 2 is moved in the up-down direction along with the second left frame 20L and the second right frame 22R.

The frame structure 18 includes a fixed frame 31 to which the traveling device 3 is attached, and a movable frame 32 attached to the vehicle body 2. The fixed frame 31 is not moved in the up-down direction. The movable frame 32 is movable in the up-down direction. In the frame structure 18, the second left frame 20L and the second right frame 22R are each movable frame 32. The first left frame 19L and the first right frame 21R are each fixed frame 31. The vehicle body 2 is moved, that is, raised or lowered along with the movable frame 32 in the up-down direction with respect to the fixed frame 31.

The later-described height changing mechanism 90 changes the height of the vehicle body 2 that is the distance of the vehicle body 2 from the ground surface by raising or lowering the movable frame 32 with respect to the fixed frame 31. The traveling device 3 is attached to the fixed frame 31. Specifically, the left traveling device 3L is attached to the first left frame 19L. The right traveling device 3R is attached to the first right frame 21R. When the movable frame 32 is raised or lowered with respect to the fixed frame 31, the vehicle body 2 is raised or lowered with respect to the traveling device 3. Thus, the height of the vehicle body 2 that is the distance of the vehicle body 2 from the ground surface is changed.

Note that the configuration of the frame structure 18 is not limited to the illustrated configuration. For example, the frame structure 18 may include a connection frame that connects the second left frame 20L and the second right frame 22R. In this case, the connection frame can connect, e.g., an upper portion of the second left frame 20L and an upper portion of the second right frame 22R. In this case, the connection frame is also a movable frame 32.

As illustrated in FIG. 7, the working vehicle 1 includes a drive assembly 40 to drive the wheels (the left front wheel 3LF, the right front wheel 3RF, the left rear wheel 3LB, and the right rear wheel 3RB). The drive assembly 40 includes: a drive device 45 to generate power; a transmission mechanism 50 to transmit the power generated by the drive device 45 to the wheels 30; and a steering mechanism 60 to change the direction of the wheels (the left front wheel 3LF and the right front wheel 3RF). In the present embodiment, the steering mechanism 60 is a mechanism to change the direction of the front wheels (the left front wheel 3LF and the right front wheel 3RF), but may be a mechanism to change the direction of the rear wheels (the left rear wheel 3LB and the right rear wheel 3RB). Alternatively, the steering mechanism 60 may be a mechanism to change both the direction of the front wheels and the direction of the rear wheels.

As illustrated in FIGS. 2 and 3, the drive assembly 40 includes a first drive assembly 41 to drive the left front wheel 3LF, a second drive assembly 42 to drive the right front wheel 3RF, a third drive assembly 43 to drive the left rear wheel 3LB, and a fourth drive assembly 44 to drive the right rear wheel 3RB. The first drive assembly 41, the second drive assembly 42, the third drive assembly 43 and the fourth drive assembly 44 each include the later-described drive device 45 and transmission mechanism 50. The first drive assembly 41 and the second drive assembly 42 each include the later-described steering mechanism 60. The drive assemblies are attached to the frame structure 18.

In the present embodiment, the drive device 45 is a motor. Specifically, the drive device 45 is the traveling motor 5 described above. In other words, the motors included in the drive device 45 are the same as the motors included in the above-described power supply apparatus 4. As described below, the motor 5 included in the drive device 45 of the drive assembly 40 includes a motor 5LF, a motor 5RF, a motor 5LB, and a motor 5RB.

As illustrated in FIG. 2, the first drive assembly 41 includes a motor 5LF, and a transmission mechanism 50LF to transmit the power of the motor 5LF to the left front wheel 3LF. The transmission mechanism 50LF is a gear mechanism or the like including a plurality of gears. When the first drive assembly 41 drives the motor 5LF, the power of the motor 5LF is transmitted to the left front wheel 3LF through the transmission mechanism 50LF.

As illustrated in FIG. 3, the second drive assembly 42 includes a motor 5RF, and a transmission mechanism 50RF to transmit the power of the motor 5RF to the right front wheel 3RF. The transmission mechanism 50RF is a gear mechanism or the like including a plurality of gears. When the second drive assembly 42 drives the motor 5RF, the power of the motor 5RF is transmitted to the right front wheel 3RF through the transmission mechanism 50RF.

As illustrated in FIG. 2, the third drive assembly 43 includes a motor 5LB, and a transmission mechanism 50LB to transmit the power of the motor 5LB to the left rear wheel 3LB. The transmission mechanism 50LB is a gear mechanism or the like including a plurality of gears. When the third drive assembly 43 drives the motor 5LB, the power of the motor 5LB is transmitted to the left rear wheel 3LB through the transmission mechanism 50LB.

As illustrated in FIG. 3, the fourth drive assembly 44 includes a motor 5RB, and a transmission mechanism 50RB to transmit the power of the motor 5RB to the right rear wheel 3RB. The transmission mechanism 50RB is a gear mechanism or the like including a plurality of gears. When the fourth drive assembly 44 drives the motor 5RB, the power of the motor 5RB is transmitted to the right rear wheel 3RB through the transmission mechanism 50RB.

As illustrated in FIG. 7, the drive assembly 40 includes a steering mechanism 60 to change the direction of the wheels 30. In the present embodiment, the steering mechanism 60 is a mechanism to change the direction of the front wheels (the left front wheel 3LF and the right front wheel 3RF) among the wheels 30. As illustrated in FIG. 2 and FIG. 3, the steering mechanism 60 includes a left steering mechanism 60L to change the direction of the left front wheel 3LF, and a right steering mechanism 60R to change the direction of the right front wheel 3RF.

As illustrated in FIG. 2, the first drive assembly 41 includes the left steering mechanism 60L. As illustrated in FIG. 3, the second drive assembly 42 includes the right steering mechanism 60R. The left steering mechanism 60L can rotate the left front wheel 3LF around an axis AX1 by driving the cylinder 62 to extend or retract a rod 62a. Similarly, the right steering mechanism 60R can rotate the right front wheel 3RF around an axis AX2 by driving the cylinder 62 to extend or retract the rod 62a. In this manner, the travel direction of the traveling machine body 100 can be changed by driving the steering mechanism 60 to change the direction of the left front wheel 3LF and the right front wheel 3RF.

Note that as another embodiment of the drive device 45, the motor of the drive device 45 may be an in-wheel motor. In this case, all the left front wheel 3LF, the right front wheel 3RF, the left rear wheel 3LB, and the right rear wheel 3RB may be driven by an in-wheel motor, or part (for example, the left front wheel 3LF and the right front wheel 3RF, or the left rear wheel 3LB and the right rear wheel 3RB) may be driven by an in-wheel motor.

As illustrated in FIG. 7, the working vehicle 1 includes a first detector 70. The first detector 70 detects the situation in the surrounding area of the vehicle body 2. The situation in the surrounding area of the vehicle body 2, detected by the first detector 70 is, e.g., an obstacle and the like that block the path of the vehicle body 2.

As illustrated in FIG. 7, the first detector 70 includes a camera (image pickup device) 71, a sensor 72, and a calculator 73. In the present embodiment, the first detector 70 includes both the camera 71 and the sensor 72, but may include only one of them.

The camera 71 is a charge coupled device (CCD) camera equipped with a CCD image sensor, or a complementary metal oxide semiconductor (CMOS) camera equipped with a CMOS image sensor. The camera 71 is installed in the vehicle body 2 to capture an image of the surrounding area of the vehicle body 2. It is only necessary for the camera 71 to capture an image in at least one or more directions including the travel direction of the vehicle body 2 among the forward, rearward, leftward, and rightward directions of the vehicle body 2. Preferably, the camera 71 is located to capture an image forward, rearward, or laterally (leftward or rightward) of the vehicle body 2. The camera 71 may be located to allow an image to be captured in a direction (e.g., right forward, left forward, front below, or rear below) other than the forward, rearward, and lateral (leftward and rightward) directions of the vehicle body 2.

The camera 71 captures an image of the surrounding area of the vehicle body 2 to generate an image signal. The calculator 73 includes a computer or the like including a signal processing circuit to process the generated image signal. The signal processing circuit detects the state (such as the presence or absence of an object, the position of an object, the type of an object, and the size of an object) of an object based on the image signal output from the camera 71. The object includes the above-mentioned obstacle.

The sensor 72 is an optical sensor, and uses, e.g., light detection and ranging (LiDAR). A LiDAR (laser sensor) emits pulsed measurement light (laser light) millions of times per second from a light source such as a laser diode, and performs scanning in a horizontal direction or a vertical direction by reflecting the measurement light by a rotatable mirror to project the measurement light in a predetermined detection range (sensing range). The LiDAR receives, by a light receiving element, reflected light of the measurement light from an object. The signal processing circuit of the calculator 73 detects the state (such as the presence or absence of an object, the position of an object, the type of an object, and the size of an object) of an object based on a light receiving signal output from the light receiving element of the LiDAR. The object includes the above-mentioned obstacle. The signal processing circuit detects the distance to the object based on the time from emission of the measurement light by the LiDAR until the reflected light is received (time of flight (TOF) method). Note that the distance detection method used by the LiDAR may be a method other than the TOF method.

The sensor 72 may be a sonic sensor. The sensor 72 preferably includes both an optical sensor and a sonic sensor, but may include either one of the sensors. The sonic sensor is, e.g., an airborne ultrasonic sensor such as a sonar. The airborne ultrasonic sensor transmits measurement waves (ultrasonic waves) in a predetermined detection range by a transmitter, and receives, by a receiver, reflection waves which are reflected measurement waves from an object. The signal processing circuit detects the state (such as the presence or absence of an object, the position of an object, the type of an object, and the size of an object) of an object based on the signal output from the receiver. The object includes the above-mentioned obstacle. The signal processing circuit detects the distance to the object based on the time from transmission of measurement waves by the airborne ultrasonic sensor until the reflected waves are received (time of flight (TOF) method). Note that the distance detection method used by the sonic sensor may be a method other than the TOF method.

The above-described sensor 72 is installed in the vehicle body 2 to detect an object in the surrounding area of the vehicle body 2. It is only necessary for the sensor 72 to detect an object in at least one or more directions including the travel direction of the vehicle body 2 among the forward, rearward, leftward, and rightward directions of the vehicle body 2. Preferably, the sensor 72 is located to detect an object forward, rearward, or laterally (leftward or rightward) of the vehicle body 2. The sensor 72 may be located to allow an object to be detected in a direction (e.g., right forward, left forward, front below, or rear below) other than the forward, rearward, and lateral (leftward and rightward) directions of the vehicle body 2.

As illustrated in FIG. 7, the traveling machine body 100 of the working vehicle 1 includes a height changing mechanism 90. The height changing mechanism 90 changes the height of the vehicle body 2 that is the distance of the vehicle body 2 from the ground surface. The height changing mechanism 90 raises and lowers the vehicle body 2 in which the battery 7 is housed. The height changing mechanism 90 raises and lowers the vehicle body 2 at a location between the left traveling device 3L and the right traveling device 3R in the width direction (the lateral direction) of the vehicle body 2. The height changing mechanism 90 changes the height of the vehicle body 2 that is the distance of the vehicle body 2 from the ground surface by raising or lowering the frame structure 18 attached to the vehicle body 2.

As illustrated in FIG. 1 to FIG. 3 and the like, the height changing mechanism 90 includes a lifting cylinder 91. The lifting cylinder 91 raises and lowers the movable frame 32 (the second left frame 20L and the second right frame 22R) of the frame structure 18. The vehicle body 2 is raised and lowered by raising and lowering the movable frame 32. Thus, the vehicle body 2 can be raised and lowered by driving the lifting cylinder 91. In this manner, the height changing mechanism 90 can raise and lower the vehicle body 2. Hereinafter, the height changing mechanism 90 may be referred to as the "lifting mechanism 90".

The lifting cylinder 91 includes a hydraulic cylinder. The lifting cylinder 91 includes a rod 91a that extends and retracts in the up-down direction, and a cylinder tube 91b to which hydraulic fluid to drive the rod 91a is supplied (see FIG. 1 to FIG. 3). The distal end of the rod 91a is connected to the frame structure 18. The lifting cylinder 91 includes a left lifting cylinder 91L and a right lifting cylinder 91R. The left lifting cylinder 91L is located leftward of the vehicle body 2. The right lifting cylinder 91R is located rightward of the vehicle body 2.

As illustrated in FIG. 1 and FIG. 2, a rod 91La of the left lifting cylinder 91L is connected to the second left frame 20L of the frame structure 18. Specifically, the rod 91La of the left lifting cylinder 91L is connected to a left plate 99L fixed to the second left frame 20L. Thus, the left lifting cylinder 91L can raise and lower the second left frame 20L which is a movable frame of the left frame 18L by extending and retracting the rod 91La.

As illustrated in FIG. 1 and FIG. 3, a rod 91Ra of the right lifting cylinder 91R is connected to the second right frame 22R of the frame structure 18. Specifically, the rod 91Ra of the right lifting cylinder 91R is connected to a right plate 99R fixed to the second right frame 22R. Thus, the right lifting cylinder 91R can raise and lower the second right frame 22R which is a movable frame of the right frame 18R by extending and retracting the rod 91Ra.

A cylinder tube 91Lb of the left lifting cylinder 91L is attached to a bracket (not illustrated) fixed to the first left frame 19L. A cylinder tube 91Rb of the right lifting cylinder 91R is attached to a bracket (not illustrated) fixed to the first right frame 21R.

When the rod 91La of the left lifting cylinder 91L is extended or retracted, the second left frame 20L is extended or retracted. When the rod 91Ra of the right lifting cylinder 91R is extended or retracted, the second right frame 22R is raised or lowered. Thus, the frame structure 18 (the movable frame 32) can be raised and lowered with extension and retraction of the rod 91a of the lifting cylinder 91 (the left cylinder 91L and the right cylinder 91R). Since the vehicle body 2 is attached to the frame structure 18 (the movable frame 32), the vehicle body 2 can be raised and lowered with extension and retraction of the rod 91a of the lifting cylinder 91. The height of the vehicle body 2 that is the distance of the vehicle body 2 from the ground surface can be changed by raising or lowering the vehicle body 2.

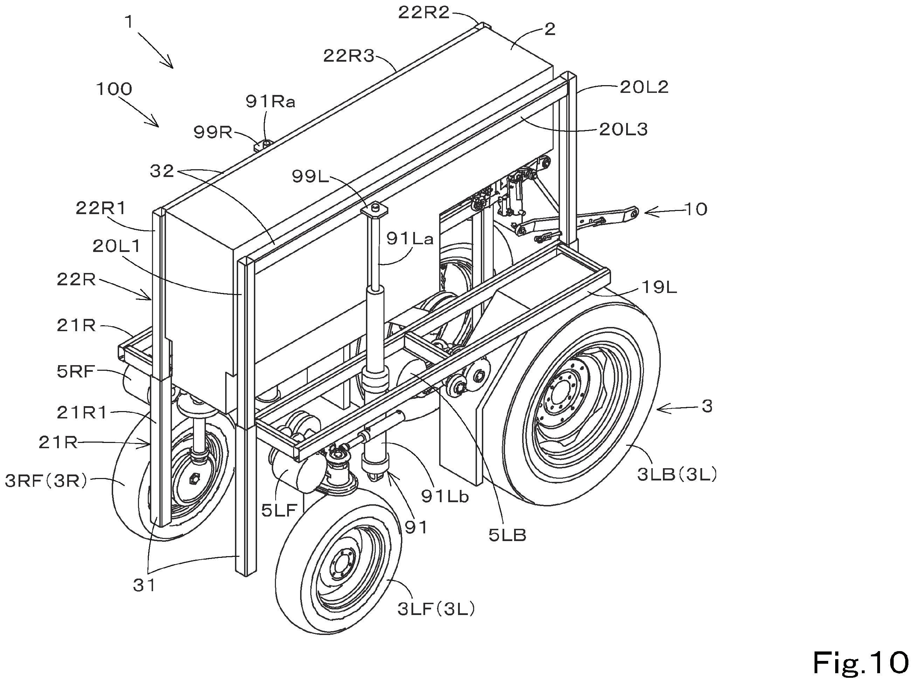

FIG. 10 illustrates a state where the vehicle body 2 is raised by extending the rod 91a of the lifting cylinder 91. With the raise of the vehicle body 2, the lifting device 10 provided in the vehicle body 2 is also raised. Thus, the second working device 300 attached to the lifting device 10 can be raised by raising the vehicle body 2. In addition, the working device 200 (described later) such as a harvester attached to an upper portion of the vehicle body 2 can be raised by raising the vehicle body 2.

The operation of the height changing mechanism (lifting mechanism) 90 is controlled by the controller 15. As illustrated in FIG. 7, the controller 15 includes a height changing control unit 15B. The height changing control unit 15B transmits a control signal to the height changing mechanism 90 by the arithmetic unit of the controller 15 executing a program stored in the storage. The height changing mechanism 90 is driven based on the control signal transmitted from the height changing control unit 15B. That is, the height changing mechanism 90 changes the height of the vehicle body 2 by being driven based on the control by the controller 15.

The height changing mechanism 90 can change the height of the vehicle body 2 to any height within a preset height range. Specifically, the height changing mechanism 90 can change the height of the vehicle body 2 to any height between a first height (see FIG. 1) and a second height (see FIG. 10) higher than the first height. Thus, the preset height range is the range between the first height and the second height. In the present embodiment, the first height is the height of the vehicle body 2 when the rod of the lifting cylinder 91 is the shortest, and the second height is the height of the vehicle body 2 when the rod of the lifting cylinder 91 is the longest.

The first height is the height (lower limit height) of the lower limit of the height of the vehicle body 2, changeable by the height changing mechanism 90. The second height is the height (upper limit height) of the upper limit of the height of the vehicle body 2, changeable by the height changing mechanism 90. The height changing mechanism 90 can change the height of the vehicle body 2 to the first height as the lower limit height, the second height as the upper limit height, and any height (intermediate height) between the upper limit height and the lower limit height.

The height changing mechanism 90 can change the height of the vehicle body 2, for example, in response to indication of the height by a manual operator 80 (see FIG. 7). The manual operator 80 can perform an operation of indicating the height of the vehicle body 2. The manual operator 80 is a device (external equipment) outside the working vehicle 1, and is configured to communicate with the controller 15 in a wireless or wired manner. The manual operator 80 is, for example, a portable device such as a remote control device, a tablet, a smartphone, or a PDA.

The manual operator 80 includes an input unit to receive an indicated height of the vehicle body 2. The input unit is, e.g., a push-button, a rotary dial, and a touch panel. When an operator inputs the height to be indicated via the input unit of the manual operator 80, the indicated input height is transmitted to the controller 15. The controller 15 transmits a control signal to drive the lifting cylinder 91 of the height changing mechanism 90 such that the height of the vehicle body 2 reaches the indicated height. Thus, the height of the vehicle body 2 is changed to the height indicated by the manual operator 80.

As described above, the vehicle body 2 is provided between the left traveling device 3L and the right traveling device 3R. The height changing mechanism 90 raises or lowers the vehicle body 2 between the left traveling device 3L and the right traveling device 3R to change the height of the vehicle body 2. In other words, the vehicle body 2 is moved in the up-down direction through the space between the left traveling device 3L and the right traveling device 3R.

The working vehicle 1 includes the later-described power input 280, mount 400 and power transmission mechanism 600. Here, only an overview of the power input 280, mount 400 and power transmission mechanism 600 will be described, and the details will be described later. The working vehicle 1 includes the mount 400 by which the working device 200 is attachable to the traveling machine body 100, the working device 200 including the power input 280 to which power is input. The mount 400 allows at least the power input 280 of the working device 200 to be attached on the traveling machine body 100. The working vehicle 1 includes the power transmission mechanism 600 to output the power generated by the power supply apparatus 4 upward with respect to the traveling machine body 100 such that the power is transmittable to the working device 200.

The working device 200 attachable to the mount 400 is a working device different from the second working device 300 attached to the above-mentioned lifting device 10. The type of the working device 200 is not limited to a specific one, and a device that performs agricultural work is preferably used. The working device 200 that performs agricultural work includes, e.g., a harvester that performs harvesting work.

Hereinafter, a description will be given assuming that the working device 200 is a harvester that performs harvesting work, and a harvester as an example of the working device 200 is referred to as a "harvester 200". However, the working device is not limited to the harvester. Thus, the following description holds even if the harvester is replaced by the working device except for the description of a configuration specific to the harvester.

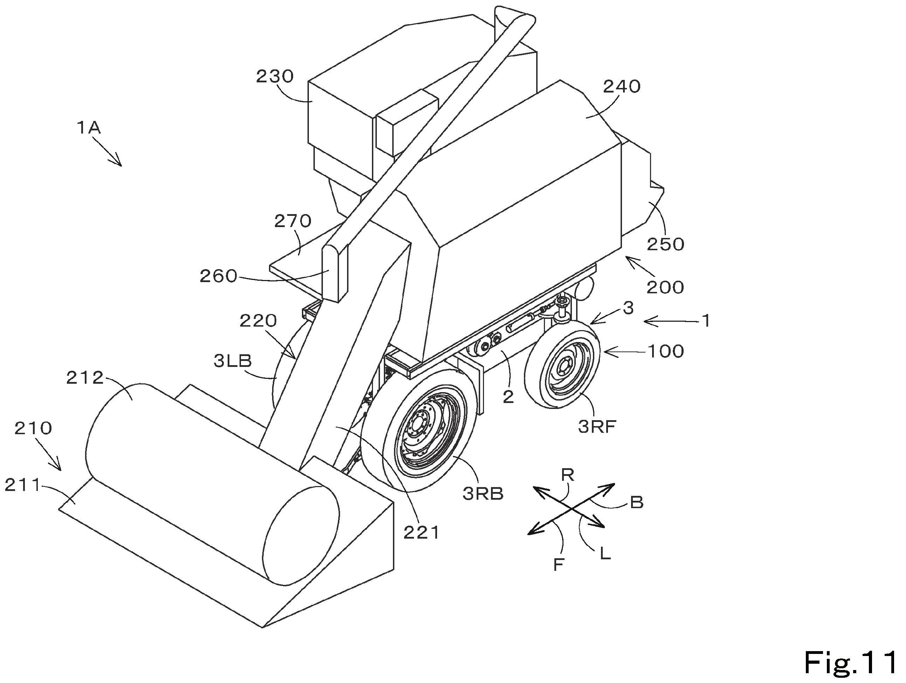

FIG. 11 to FIG. 14 illustrate the working vehicle 1 with the harvester 200 attached to the traveling machine body 100. Hereinafter, the working vehicle with the harvester 200 attached to the traveling machine body 100 is referred to as the "harvesting machine 1A" or "working vehicle 1A" to distinguish from the working vehicle 1 with the harvester 200 detached.

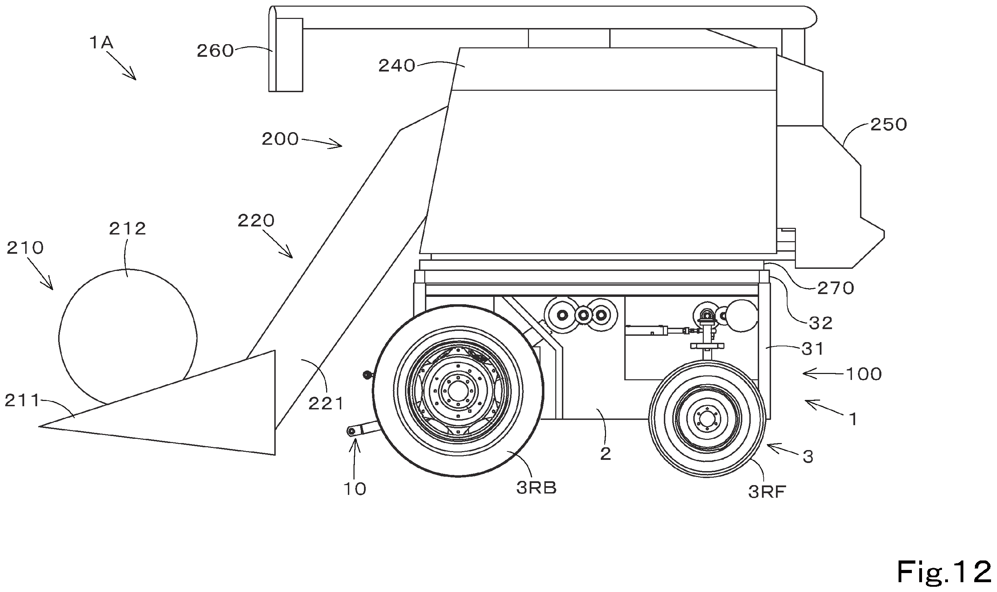

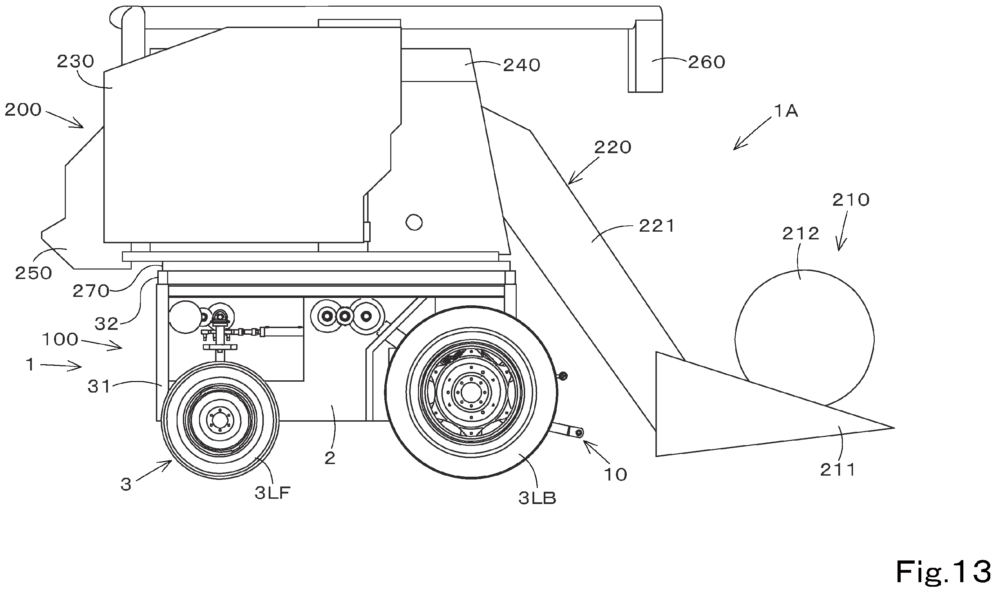

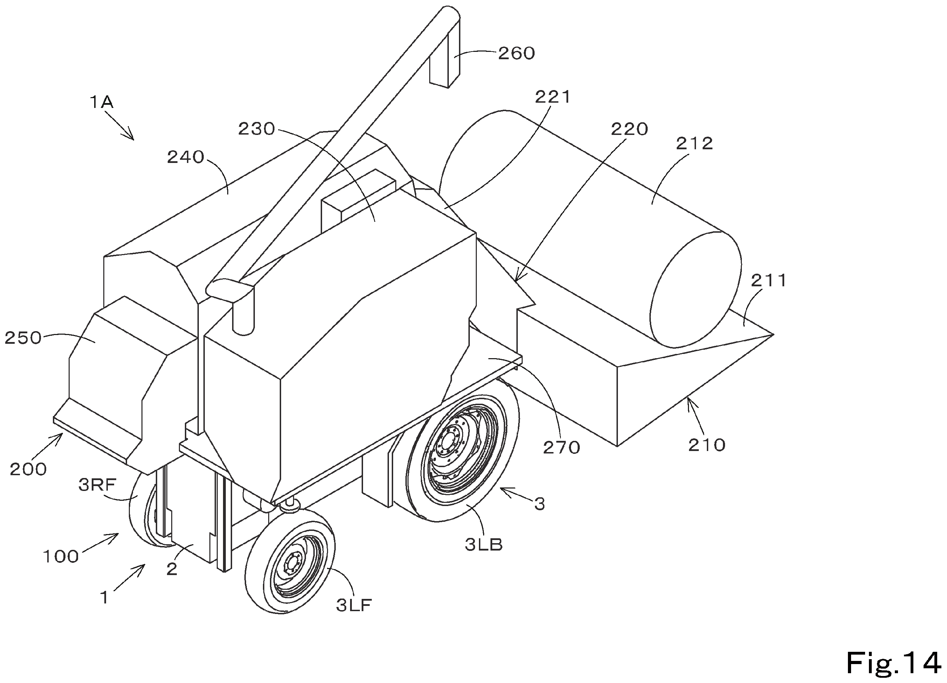

FIG. 11 to FIG. 14 illustrate an embodiment of the harvesting machine (working vehicle) 1A. FIG. 11 is a front perspective view of the harvesting machine 1A. FIG. 12 is a left side view of the harvesting machine 1A. FIG. 13 is a right side view of the harvesting machine 1A. FIG. 14 is a rear perspective view of the harvesting machine 1A. As illustrated in FIG. 11 to FIG. 14, the harvesting machine 1A includes the traveling machine body 100 and the harvester 200. Note that FIG. 11 to FIG. 14 illustrate the configuration of harvester 200 in a simplified manner.

In the present specification, the direction (arrow F direction in FIG. 11) in which the harvesting machine 1A travels at the time of harvesting work is defined as forward direction of the harvesting machine 1A, and the opposite side (arrow B direction in FIG. 11) to the forward direction is defined as rearward direction of the harvesting machine 1A. Therefore, the front side of the harvesting machine 1A includes the front side (such as the later-described harvesting unit 210) of the harvester 200, and the rear side of the harvesting machine 1A includes the rear side (such as the later-described releaser 250) of the harvester 200.

The direction indicated by an arrow L in FIG. 11 is defined as leftward direction of the harvesting machine 1A, and the direction indicated by an arrow R is defined as rightward direction of the harvesting machine 1A. Therefore, the left side of the harvesting machine 1A includes the left side (the later-described thresher 240) of the harvester 200, and the right side of the harvesting machine 1A includes the right side (the later-described housing 230) of the harvester 200.

The harvesting machine 1A in the embodiment illustrated in FIG. 11 to FIG. 14 has a configuration in which the front side of the harvester 200 is provided rearward (on the rear wheel side) of the traveling machine body 100, and the rear side of the harvester 200 is provided forward (on the front wheel side) of the traveling machine body 100. Thus, in the harvesting machine 1A in the embodiment illustrated in FIG. 11 to FIG. 14, the front and rear of the harvesting machine 1A and the harvester 200 are reversed from the front and rear of the traveling machine body 100, and the right and left of the harvesting machine 1A and the harvester 200 are reversed from the right and left of the machine body 100. Thus, the rear wheels of the traveling machine body 100 are located at a front portion of the harvesting machine 1A, and the front wheels of the traveling machine body 100 are located at a rear portion of the harvesting machine 1A. In addition, the right wheels of the traveling machine body 100 are located on the left side of the harvesting machine 1A, and the left wheels of the traveling machine body 100 are located on the right side of the harvesting machine 1A.

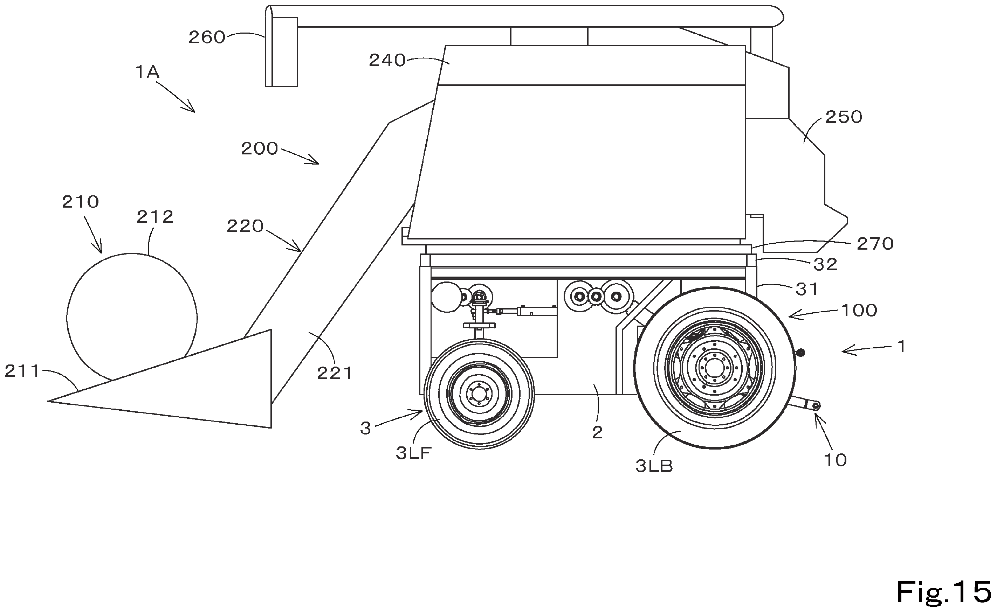

Meanwhile, in another embodiment (such as FIG. 15, FIG. 31, FIG. 39, FIG. 43, and FIG. 47), the front and rear of the harvesting machine 1A and the harvester 200 match the front and rear of the traveling machine body 100, and the right and left of the harvesting machine 1A and the harvester 200 match the right and left of the traveling machine body 100. Thus, the front wheels of the traveling machine body 100 are located at a front portion of the harvesting machine 1A, and the rear wheels of the traveling machine body 100 are located at a rear portion of the harvesting machine 1A. In addition, the left wheels of the traveling machine body 100 are located on the left side of the harvesting machine 1A, and the right wheels of the traveling machine body 100 are located on the right side of the harvesting machine 1A.

The harvester 200 is a device that performs harvesting work of at least one of reaping, digging, and pulling crops with travel of the traveling machine body 100. The crops reaped by the harvester 200 include, e.g., paddy, wheat, soybean, and corn, but are not limited to these. The crops dug by the harvester 200 include, e.g., potato, sweet potato, green onion, and onion, but are not limited to these. The crops pulled by the harvester 200 include, e.g., Japanese radish, burdock, and carrot, but are not limited to these.

The harvester 200 includes a harvesting unit 210, a transporter 220, and a housing 230. In addition, the harvester 200 includes a thresher 240, a releaser 250, and a discharger 260. The harvesting unit 210 performs harvesting work of at least one of reaping, digging, and pulling crops. The harvester 200 performs harvesting work in a state where the vehicle body 2 is lowered (a state where the vehicle body 2 is at the first height). FIG. 11 to FIG. 14 illustrate a state where the vehicle body 2 is lowered.

The harvester 200 included in the harvesting machine 1A in the embodiment illustrated in FIG. 11 to FIG. 14 is a reaping device that performs reaping of crops with travel of the traveling machine body 100. Thus, the harvesting unit 210 performs reaping of crops (such as paddy).

The harvesting unit 210 is located at a front portion (a front portion of the harvesting machine 1A) of the harvester 200. The harvesting unit 210 is provided forward or rearward of the bottom of the traveling machine body 100. In the embodiment illustrated in FIG. 11 to FIG. 14, the harvesting unit 210 is provided rearward (on the rear wheel side) of the traveling machine body 100, but the harvesting unit 210 may be provided forward (on the front wheel side) of the traveling machine body 100 (see FIG. 15). In other words, in the harvesting machine 1A, the direction (direction of the front-rear direction) of attachment of the harvester 200 to the traveling machine body 100 may be opposite to the direction illustrated in FIG. 11 to FIG. 14 (see FIG. 15, FIG. 31, FIG. 39, FIG. 43, and FIG. 47). In this manner, in the harvesting machine 1A, the direction (direction in the front-rear direction) of attachment of the harvester 200 to the traveling machine body 100 is not limited to a specific one, and can be changed according to the type of the harvester 200, the content and the like of the harvesting work.

The harvesting unit 210 includes a grass divider 211, a pulling reel 212, and a cutting device (not illustrated). The grass divider 211 has the function of dividing crops into the right and left with travel of the traveling machine body 100. The pulling reel 212 pulls the crops divided by the grass divider 211 rearward. The cutting device cuts off the base of the crops which have been pulled by the pulling reel 212.

The transporter 220 transports the crops harvested by the harvesting unit 210 to an upper position of the traveling machine body 100. Specifically, the transporter 220 transports the crops harvested by the harvesting unit 210 to an upper position of the traveling machine body 100 from a position forward (rearward) of a lower portion of the traveling machine body 100 forward (or backward). The transporter 220 includes a tubular body 221, and a conveyor located inside the tubular body 221. A front portion of the tubular body 221 is connected to the harvesting unit 210. A rear portion of the tubular body 221 is located above the traveling machine body 100. The transporter 220 (the tubular body 221) extends above the traveling machine body 100 in an upper diagonal direction from a portion connected to the harvesting unit 210. The crops cut by the cutting device of the harvesting unit 210 are moved and transported diagonally above the traveling machine body 100 from a position forward (rearward) of the bottom of the traveling machine body 100 by the conveyor of the transporter 220 through the inside of the tubular body 221.

The housing 230 houses the crop transported by the transporter 220. The housing 230 is, e.g., a grain tank. The housing 230 houses the crop which has been transported by the transporter 220, and has passed through the thresher 240. The thresher 240 is located above the traveling machine body 100 and on the left side of the harvester 200 (the left side of the harvesting machine 1A). The thresher 240 is connected to a rear portion of the tubular body 221. The crop transported through the inside of the tubular body 221 is supplied to the thresher 240, and threshed therein. The rear of the thresher 240 is provided with the releaser 250 that cuts and releases discharged straw produced by the threshing process. The releaser 250 is located at a rear portion of the harvester 200 (a rear portion of the harvesting machine 1A).

The housing 230 houses the grains which have been threshed and selected by the thresher 240. The housing 230 is located above the traveling machine body 100 and on the right side of the harvester 200 (the right side of the harvesting machine 1A). The housing 230 is connected to the discharger 260. The discharger 260 can discharge the crops (grains) housed in the housing 230 to the outside by driving an auger or the like. When the housing (grain tank) 230 becomes full, the crops (grains) housed in the housing 230 are discharged by the discharger 260.

The harvester 200 includes a substrate 270 that supports the component units having the functions related to harvesting (the harvesting unit 210, the transporter 220, the housing 230, the thresher 240, the releaser 250, and the discharger 260). The harvesting unit 210 is located below (forward below the substrate 270) the substrate 270. Specifically, the harvesting unit 210 is located forward below the substrate 270. The front of the transporter 220 is located below the substrate 270. Specifically, the front of the transporter 220 is located forward below the substrate 270. The rear of the transporter 220 is located above the substrate 270. The thresher 240 and the housing 230 are fixed onto the substrate 270.

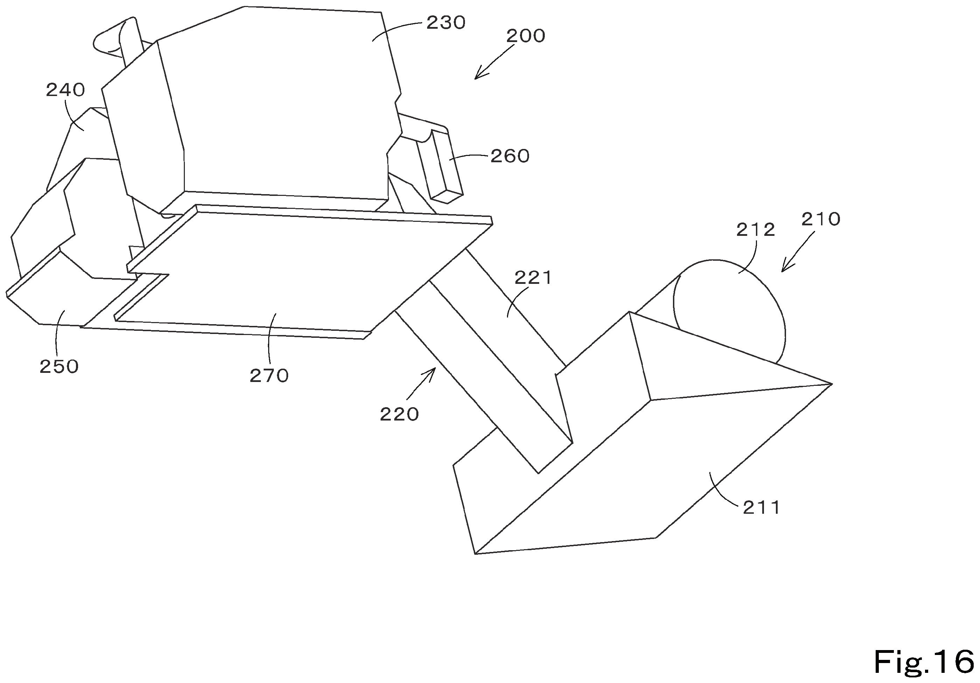

The substrate 270 is, e.g., a substantially rectangular plate in a plan view. In the example illustrated in FIG. 16, the substrate 270 has a shape with part of a rectangle cut out. The shape, size, and thickness of the substrate 270 can be changed as appropriate according to the shape, size, weight and the like of the components (the housing 230 and the thresher 240) of the harvester 200 fixed onto the substrate 270.

The shape, size, and thickness of the substrate 270 can also be changed according to the structure of attachment (described later) of the harvester 200 to the traveling machine body 100. For example, when the later-described recess 501, insertion hole 503, projection 504, groove 505, and the like are provided in the substrate 270, the thickness of the substrate 270 can be increased as necessary.

As illustrated in FIG. 11 to FIG. 14, the harvester 200 can be attached to the top of the traveling machine body 100. Thus, the harvester 200 can be moved with travel of the traveling machine body 100. Thus, the harvester 200 is not provided with a traveling device. That is, since the harvester 200 is attached to the top of the traveling machine body 100, the harvester 200 does not need to be provided with a traveling device. Because the traveling machine body 100 can perform automatic driving, the harvester 200 does not include an operator's seat. The harvester 200 is not provided with either a traveling device or an operator's seat like this, and thus the harvester 200 can be miniaturized and light-weighted.

Note that the mount 400 allows at least the power input 280 included in the harvester 200 to be attached on the traveling machine body 100. Thus, the harvester 200 is attached such that at least the power input 280 is located above the traveling machine body 100. Thus, the harvester 200 can receive, above the traveling machine body 100, the power from the traveling machine body 100. Preferably, the harvester 200 is attached such that at least part (such as the thresher 240) of a drive member to be driven by the power input from the power input 280 is located (above the vehicle body 2) above the traveling machine body 100. Preferably, the harvester 200 is positioned such that at least part of the harvesting unit 210 is located below (in the vicinity of the ground surface) the upper end of the vehicle body 2.

The harvester 200 is constructed as an independent body from the traveling machine body 100, and can be attached to and detached from the traveling machine body 100. As described above, the harvester 200 can be miniaturized and light-weighted, and thus it is possible to easily perform attachment and detachment of the harvester 200 to and from the traveling machine body 100.

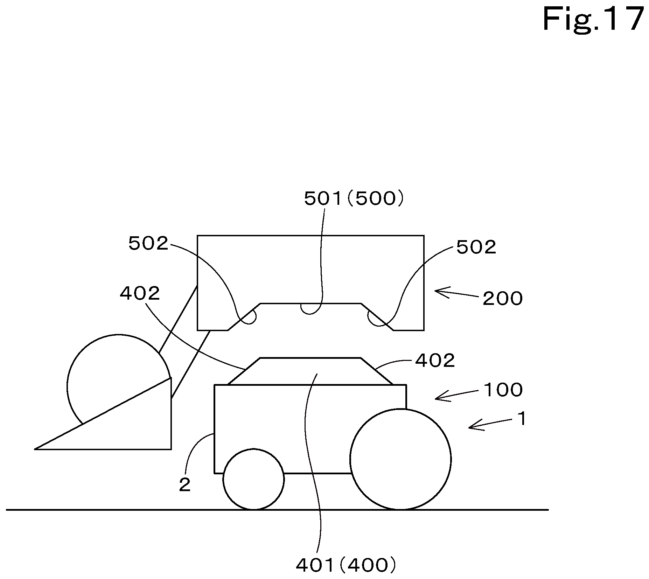

Next, the structure of attachment of the harvester 200 to the traveling machine body 100 will be described. FIG. 17 to FIG. 22 illustrate an example of a structure of attachment of the harvester 200 to the traveling machine body 100. The structure of attachment includes the mount 400 provided in the vehicle body 2, and an attached/detached unit 500 provided in the harvester 200. The mount 400 allows the harvester 200 to be detachably attached to the traveling machine body 100. Thus, in the following description, the mount 400 may be referred to as the "attaching/detaching mechanism 400".

Hereinafter, the structure of attachment of the harvester 200 to the traveling machine body 100 will be described based on FIG. 17 to FIG. 22. Note that the traveling machine body 100 and the harvester 200 illustrated in FIG. 17 to FIG. 22 are simplified figures of the traveling machine body 100 and the harvester 200 illustrated in FIG. 1 to FIG. 6, FIG. 10 to FIG. 14 and the like.

FIG. 17 illustrates a first example of structure of attachment of the harvester 200 to the traveling machine body 100. In the first example of structure of attachment, the attaching/detaching mechanism 400 includes a protrusion 401 raised upward from the upper surface of the traveling machine body 100 (the upper surface of the vehicle body 2). That is, the top of the vehicle body 2 is provided with the protrusion 401 raised upward. The protrusion 401 is configured to be raised and lowered. Specifically, the protrusion 401 is raised and lowered by raising and lowering the vehicle body 2.

The protrusion 401 is raised upward from the upper surface of the vehicle body 2. The protrusion 401 has an upwardly tapered shape. In other words, the protrusion 401 has a shape such that the area in a plan view is smaller at an upper cross section. The protrusion 401 has, e.g., a conical shape, a truncated cone shape, a pyramid shape, a truncated pyramid shape, a semispherical shape and the like. In the embodiment illustrated in FIG. 17, the protrusion 401 has a truncated cone shape or a truncated pyramid shape.

The protrusion 401 has a first inclined surface 402 which is tilted such that the width of the protrusion 401 decreases upward. The first inclined surface 402 is tilted such that the width of the protrusion 401 in the front-rear direction and the lateral direction decreases upward. When the protrusion 401 has a conical shape or a truncated cone shape, the first inclined surface 402 is one curved surface. When the protrusion 401 has a pyramid shape or a truncated pyramid shape, the first inclined surface 402 consists of a plurality of flat surfaces. For example, when the protrusion 401 has a square pyramid shape or a truncated square pyramid shape, the first inclined surface 402 consists of four flat surfaces (the front surface, the rear surface, the left surface, and the right surface).

As illustrated in FIG. 17, the protrusion 401 is preferably provided as a bulge over the entire or substantially entire upper surface of the vehicle body 2. The harvester 200 can be stably attached by providing the protrusion 401 as a bulge over the entire or substantially entire upper surface of the vehicle body 2. However, the size, shape, number of protrusions 401 can be changed as appropriate according to the type and the like of the harvester 200. For example, the protrusion 401 may be provided as a bulge on the upper surface of the vehicle body 2 at multiple positions.

As illustrated in FIG. 17, in the first example of structure of attachment, the attached/detached unit 500 is the recess 501 provided on the lower surface of the harvester 200. The recess 501 is recessed upward from the lower surface of the harvester 200. In other words, the bottom of the harvester (the working device) 200 is provided with the recess 501 into which the protrusion 401 is fitted when the harvester 200 is attached to the vehicle body 2. The size, shape, and number of recesses 501 are set to correspond to the size, shape, and number of protrusions 401.

The recess 501 can be provided in, e.g., the substrate 270 (see FIG. 11 to FIG. 14, and FIG. 16) of the harvester 200. In this case, the thickness of the substrate 270 is set to a thickness sufficient for providing the recess 501. However, the recess 501 may be provided in the lower surface of the area other than the substrate 270 of the harvester 200.

The recess 501 has a second inclined surface 502. The second inclined surface 502 has a shape matching the first inclined surface 402 of the protrusion 401. When the harvester (working device) 200 is attached to the vehicle body 2, the second inclined surface 502 comes into contact (surface contact) with the first inclined surface 402.

The recess 501 is provided at a position on the harvester 200 such that when it is attached to the vehicle body 2, the position corresponding to the protrusion 401 of the attaching/detaching mechanism 400. The protrusion 401 of the attaching/detaching mechanism 400 is fitted in the recess 501. The details will be described later, but the protrusion 401 is fitted in the recess 501 by raising the protrusion 401 to the recess 501 (raising the vehicle body 2 to the harvester 200).

According to the first example of structure of attachment, the harvester 200 can be attached to the top of the vehicle body 2 by fitting the protrusion 401 provided on the upper surface of the vehicle body 2 into the recess 501 provided in the lower surface of the harvester 200. Also, the harvester 200 can be detached from the top of the vehicle body 2 by removing the protrusion 401 from the recess 501.

More specifically, the protrusion 401 can be fitted in the recess 501 by locating the recess 501 above the protrusion 401, and raising the vehicle body 2 or lowering the harvester 200. Thus, the harvester 200 can be attached to the top of the vehicle body 2. In a state where the protrusion 401 is fitted in the recess 501, the protrusion 401 can be removed from the recess 501 by lowering the vehicle body 2 or raising the harvester 200. Thus, the harvester 200 can be detached from the top of the vehicle body 2.

In the above-described first example of structure of attachment, both the first inclined surface 402 and the second inclined surface 502 are preferably provided, but it is sufficient that at least one of them be provided. That is, a configuration may be adopted in which the protrusion 401 includes the first inclined surface 402, but the recess 501 does not include the second inclined surface 502. Alternatively, a configuration may be adopted in which the protrusion 401 does not include the first inclined surface 402, but the recess 501 includes the second inclined surface 502.

The first inclined surface 402 is preferably provided in the entirety (from the upper end to the lower end) of the protrusion 401, but it is sufficient that the first inclined surface 402 be provided in an upper portion (the range from the upper end to an intermediate portion in the up-down direction) of the protrusion 401 including at least the upper end thereof. The second inclined surface 502 is preferably provided in the entirety (from the lower end to the upper end) of the recess 501, but it is sufficient that the second inclined surface 502 be provided in an upper portion (the range from the upper end to an intermediate portion in the up-down direction) of the recess 501 including at least the upper end thereof. That is, it is sufficient that the second inclined surface 502 be provided at a location (range) such that when the protrusion 401 is fitted in the recess 501, the second inclined surface 502 comes into contact with the first inclined surface 402 at the location, which is provided in an upper portion of the protrusion 401 including the upper end thereof.

Instead of providing the first inclined surface 402 in the protrusion 401, chamfering may be performed to remove the corner of the outer peripheral edge of the upper end of the protrusion 401. Instead of providing the second inclined surface 502 in the recess 501, chamfering may be performed to remove the corner of the inner peripheral edge of the lower end of the recess 501.

As a variation of the above-described first example of structure of attachment, the harvester 200 may be provided with the protrusion 401, and the traveling machine body 100 may be provided with the recess 501. In this case, the protrusion 401 is raised downward from the lower surface of the harvester 200 (for example, the lower surface of the substrate 270). The recess 501 is recessed downward from the upper surface of the traveling machine body 100 (the upper surface of the vehicle body 2).

A method of attaching the harvester 200 to the traveling machine body 100 and a method of detaching the harvester 200 from the traveling machine body 100 using the first example of structure of attachment will be described in detail later.

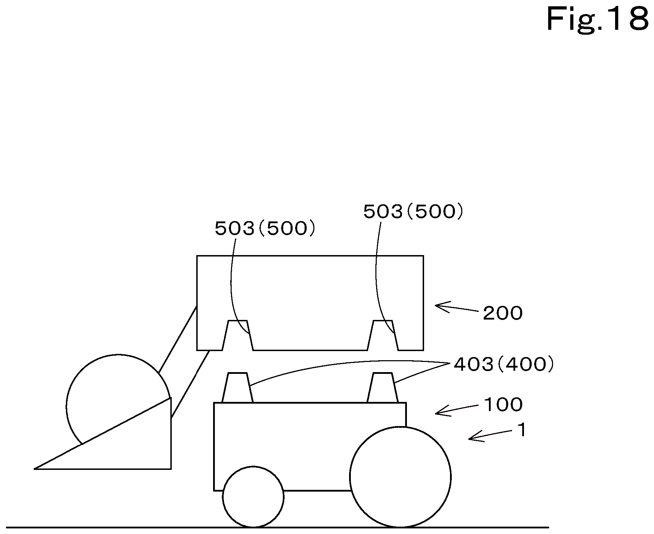

FIG. 18 illustrates a second example of structure of attachment of the harvester 200 to the traveling machine body 100. In the second example of structure of attachment, the attaching/detaching mechanism 400 includes a projection 403 that projects upward from the top of traveling machine body 100. The projection 403 projects upward from the top of the vehicle body 2. The projection 403 projects upward from multiple positions on the upper surface of the vehicle body 2. For example, as illustrated in FIG. 6, the projection 403 can be provided in the vicinity of each of four corners of the upper surface of the vehicle body 2. However, the number and positions of projections 403 can be changed as appropriate according to the type, size and the like of the harvester 200.

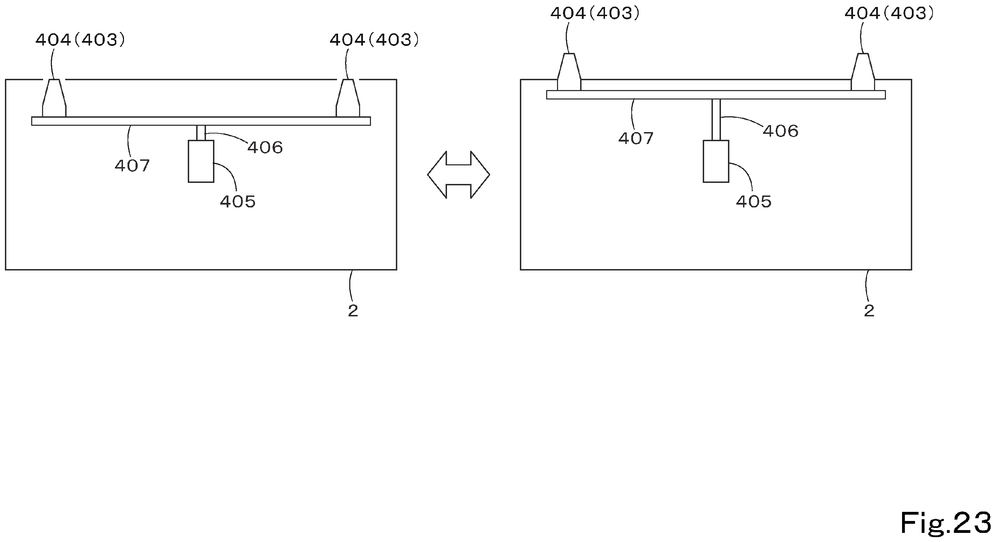

The projection 403 is, e.g., a rod-shaped (such as cylindrical, conical, or truncated conical) pin. The projection 403 may be fixed to the upper surface (the upper surface of the vehicle body 2) of the traveling machine body 100, or may be provided to allow itself to appear from the upper surface (the upper surface of the vehicle body 2) of the traveling machine body 100. When the projection 403 is provided to allow itself to appear, for example, as illustrated in FIG. 23, the pins 404 included in the projection 403 are connected to an upward rod 406 of a cylinder device 405. Thus, it is possible to allow the pins 404 included in the projection 403 to appear from the upper surface (the upper surface of the vehicle body 2) of the traveling machine body 100 by moving (extending or retracting) the rod 406 in the up-down direction. The cylinder device 405 is, e.g., a hydraulic cylinder that can be driven by the hydraulic fluid supplied from the above-mentioned hydraulic pump.

In the example illustrated in FIG. 23, a plurality of (all) pins 404 included in the projection 403 are provided upright on one piece of plate 407, and the plate 407 is connected to the upward rod 406 of the cylinder device 405. Thus, it is possible to allow the plurality of pins 404 to move with the plate 407 simultaneously and appear by moving (extending or retracting) the rod 406 in the up-down direction. However, a configuration may be adopted in which a plurality of cylinder devices 405 are provided, and the plurality of pins 404 are individually connected to respective rods 406 of the cylinder devices 405.

As illustrated in FIG. 18, in the second example of structure of attachment, the attached/detached unit 500 is an insertion hole 503 provided in the bottom of the harvester 200. The shape of the insertion hole 503 corresponds to the shape of the projection 403 of the attaching/detaching mechanism 400. The number and positions of insertion holes 503 correspond to the number and positions of projections 403 of the attaching/detaching mechanism 400.

An insertion hole 503 may be provided in, e.g., the substrate 270 of the harvester 200. When the projection 403 is provided in the vicinity of each of four corners of the upper surface of the vehicle body 2 (see FIG. 6), the insertion hole 503 is provided in the vicinity of each of four corners of the lower surface of the substrate 270. However, the number and positions of insertion holes 503 can be changed according to the number and positions of projections 403. An insertion hole 503 may be provided in the area other than the substrate 270 of the harvester 200.

According to the second example of structure of attachment, the harvester 200 can be attached to the top of the vehicle body 2 by inserting each projection 403 provided on the top of the vehicle body 2 into a corresponding insertion hole 503 provided in the bottom of the harvester 200. The harvester 200 can be detached from the top of the vehicle body 2 by removing each projection 403 from a corresponding insertion hole 503.

When each projection 403 is fixed onto the upper surface of the vehicle body 2, the projection 403 can be inserted into a corresponding insertion hole 503 by locating the insertion hole 503 above the projection 403, and raising the vehicle body 2 or lowering the harvester 200. In a state where the projection 403 is inserted in the insertion hole 503, the projection 403 can be removed from the insertion hole 503 by lowering the vehicle body 2 or raising the harvester 200.

When a configuration is adopted which allows the projection 403 to appear from the upper surface of the vehicle body 2, in a state where the projection 403 does not project from the vehicle body 2, the projection 403 can be inserted into the insertion hole 503 by providing the insertion hole 503 above the projection 403, and moving the projection 403 upward. In a state where the projection 403 is inserted in the insertion hole 503, the projection 403 can be removed from the insertion hole 503 by moving the projection 403 downward.

A method of attaching the harvester 200 to the traveling machine body 100 and a method of detaching the harvester 200 from the traveling machine body 100 using the second example of structure of attachment will be described in detail later.

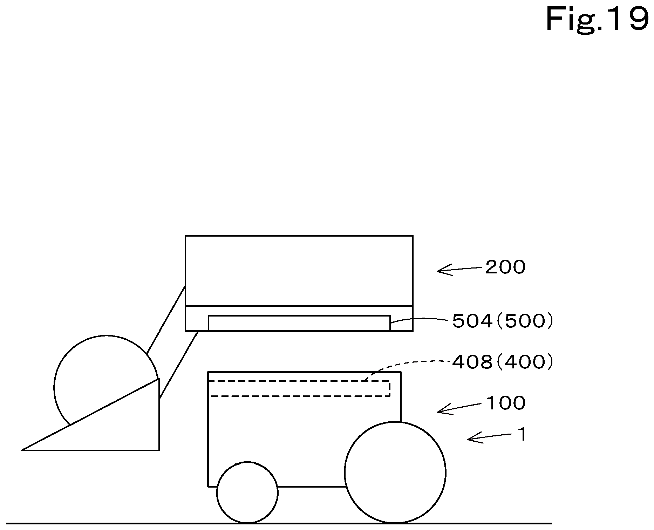

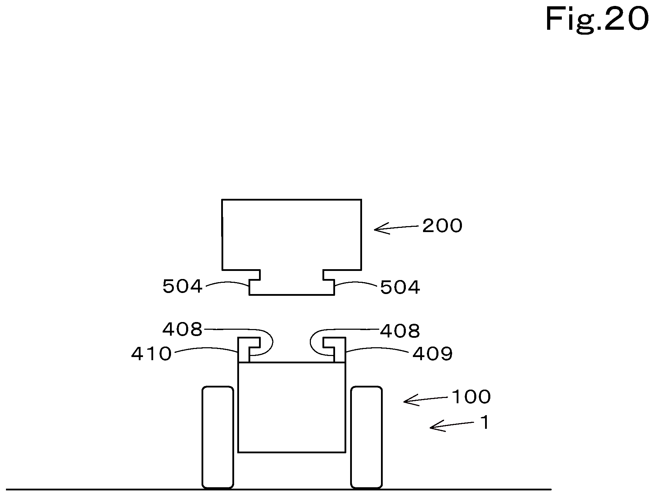

FIG. 19 and FIG. 20 illustrate a third example of structure of attachment of the harvester 200 to the traveling machine body 100. In the third example of structure of attachment, the attaching/detaching mechanism 400 includes a groove 408 that extends in the front-rear direction of the traveling machine body 100. The groove 408 is provided in an upper portion of the vehicle body 2. As illustrated in FIG. 20, the vehicle body 2 is provided with an upper left section 409 that projects upward from the left of the upper surface of the vehicle body 2 and extends in front-rear direction, and an upper right section 410 that projects upward from the right of the upper surface of the vehicle body 2 and extends in front-rear direction. The groove 408 is provided in each of the inner surface (right surface) of the upper left section 409 and the inner surface (left surface) of the upper right section 410.

In the third example of structure of attachment, the attached/detached unit 500 is a projection 504 provided in the harvester 200. The projection 504 is provided in each of a lower portion of the left side surface and a lower portion of the right side surface of the harvester 200. The projection 504 extends in the front-rear direction of the harvester 200. The projection 504 may be provided on the substrate 270 (see FIG. 11 to FIG. 14 and FIG. 16) of the harvester 200. However, the projection 504 may be provided in the area other than the substrate 270 of the harvester 200.

According to the third example of structure of attachment, the harvester 200 can be attached to the top of the vehicle body 2 by sliding and inserting the projection 504 provided on the harvester 200 into the groove 408 provided in the vehicle body 2. The harvester 200 can be detached from the upper portion of the vehicle body 2 by sliding the projection 504 through the groove 408 to remove the projection 504 from the groove 408.

In the above-described third example of structure of attachment, the upper surface and the lower surface of the projection 504 are preferably inclined surfaces in which the width of the projection 504 in the up-down direction decreases toward the outer side (the side facing the groove 408) of the projection 504. In addition, the upper surface and the lower surface of the groove 408 are preferably inclined surfaces in which the width of the groove 408 in the up-down direction increases toward the inward side (the side facing the projection 504) of the groove 408.

In this case, the inclined surface is preferably provided on both the projection 504 and the groove 408, but it is sufficient that the inclined surface be provided on at least one of them. Thus, a configuration may be adopted in which the projection 504 includes an inclined surface, but the groove 408 does not include an inclined surface. Also, a configuration may be adopted in which the projection 504 does not include an inclined surface, but the groove 408 includes an inclined surface.

A method of attaching the harvester 200 to the traveling machine body 100 and a method of detaching the harvester 200 from the traveling machine body 100 using the third example of structure of attachment will be described in detail later.

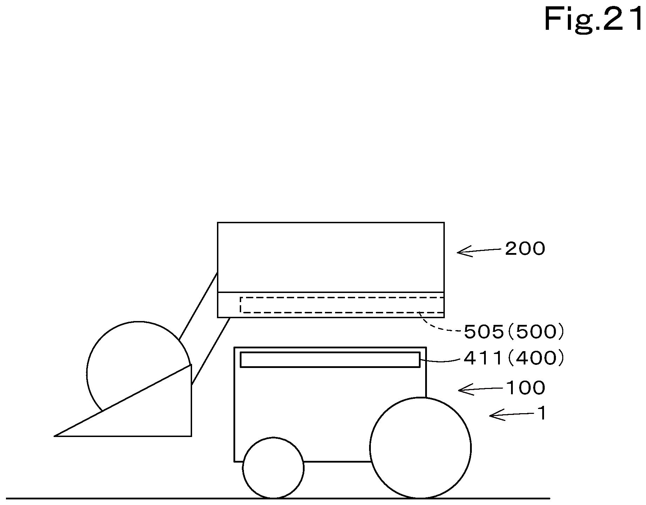

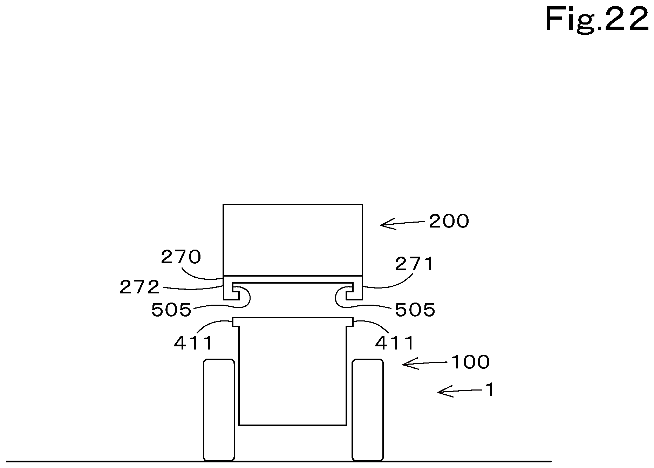

FIG. 21 and FIG. 22 illustrate a fourth example of structure of attachment of the harvester 200 to the traveling machine body 100. In the fourth example of structure of attachment, the attaching/detaching mechanism 400 includes a projection 411 that extends in the front-rear direction of the traveling machine body 100. The projection 411 is provided in each of the top of the left side surface and the top of the right side surface of the vehicle body 2. The projection 411 extends in the front-rear direction of the vehicle body 2.

In the fourth example of structure of attachment, the attached/detached unit 500 is a groove 505 provided in the harvester 200. The groove 505 may be provided in, e.g., the substrate 270. In the example illustrated in FIG. 22, the substrate 270 is provided with a lower left section 271 that projects downward from the left of the lower surface of the substrate 270 and extends in the front-rear direction, and a lower right section 272 that projects downward from the right of the lower surface of the substrate 270 and extends in the front-rear direction. The groove 505 is provided in each of the inner surface (right surface) of the lower left section 271 and the inner surface (left surface) of the lower right section 272. However, the groove 505 may be provided in the area other than the substrate 270 of the harvester 200.

According to the fourth example of structure of attachment, the harvester 200 can be attached to the top of the vehicle body 2 by sliding and inserting the projection 411 provided on the vehicle body 2 into the groove 505 provided in the harvester 200. The harvester 200 can be detached from the top of the vehicle body 2 by sliding the projection 411 through the groove 505 to remove the projection 411 from the groove 505.

In the above-described fourth example of structure of attachment, the upper surface and the lower surface of the projection 411 are preferably inclined surfaces in which the width of the projection 411 in the up-down direction decreases toward the outer side (the side facing the groove 505) of the projection 411. In addition, the upper surface and the lower surface of the groove 505 are preferably inclined surfaces in which the width of the groove 505 in the up-down direction increases toward the inward side (the side facing the projection 411) of the groove 505.

In this case, the inclined surface is preferably provided on both the projection 411 and the groove 505, but it is sufficient that the inclined surface be provided on at least one of them. Thus, a configuration may be adopted in which the projection 411 includes an inclined surface, but the groove 505 does not include an inclined surface. Also, a configuration may be adopted in which the projection 411 does not include an inclined surface, but the groove 505 includes an inclined surface.

A method of attaching the harvester 200 to the traveling machine body 100 and a method of detaching the harvester 200 from the traveling machine body 100 using the fourth example of structure of attachment will be described in detail later.

In the first to fourth examples of structure of attachment described above, the attaching/detaching mechanism 400 preferably has a locking mechanism 420. The locking mechanism 420 is a mechanism that fixes the traveling machine body 100 and the harvester 200 together. Specifically, the locking mechanism 420 is a mechanism that fixes the vehicle body 2 and the harvester 200 together.

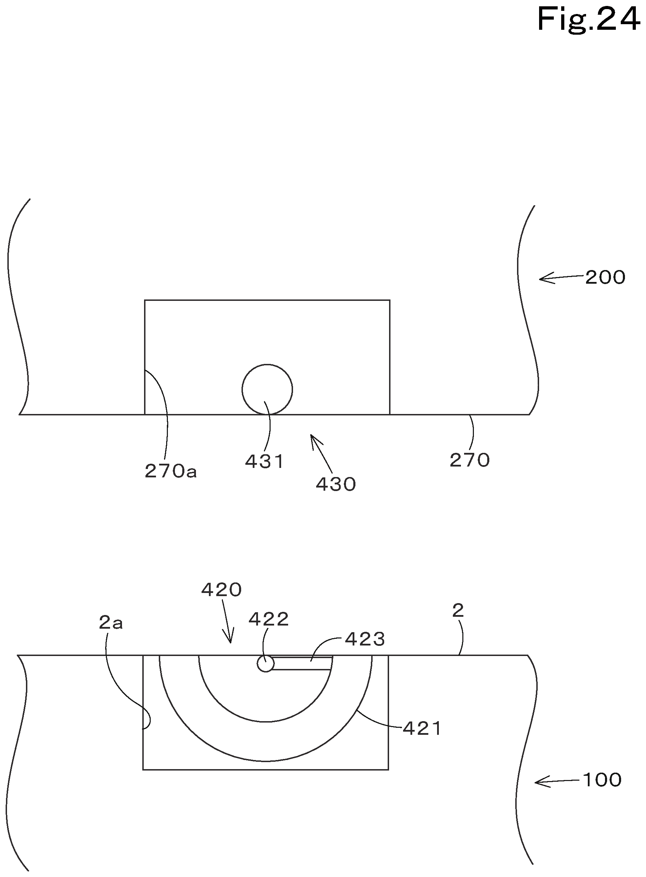

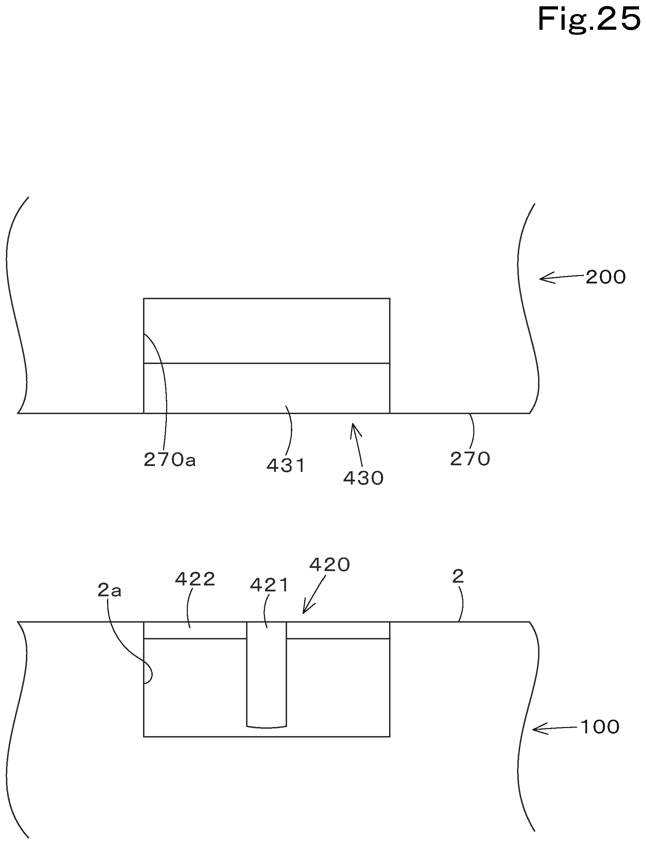

FIG. 24 and FIG. 25 are views illustrating an example of a configuration of the locking mechanism 420, and a to-be-fixed portion 430 fixed by the locking mechanism 420. The locking mechanism 420 is provided in the traveling machine body 100 (specifically, the vehicle body 2). The to-be-fixed portion 430 is provided in the harvester 200.

FIG. 24 is a vertical sectional view of the locking mechanism 420 and the to-be-fixed portion 430 as seen from the side. FIG. 25 is a vertical sectional view of the locking mechanism 420 and the to-be-fixed portion 430 as seen from the front. In FIG. 24 and FIG. 25, hatching is omitted for simplicity of the drawings. Note that the illustrated locking mechanism 420 and to-be-fixed portion 430 are an example, and the configuration of the locking mechanism 420 and the to-be-fixed portion 430 is not limited to this.

The locking mechanism 420 is provided in an upper portion of the vehicle body 2. The locking mechanism 420 includes an arc-shaped locking member 421 in a side view, and a rotating shaft 422 which is the rotational center of the locking member 421. A recess 2a is provided in the upper surface of the vehicle body 2, and the locking member 421 and the rotating shaft 422 are located in the recess 2a. The rotating shaft 422 extends in the lateral direction, and rotates around the shaft in the lateral direction. The rotating shaft 422 is directly or indirectly connected to the output shaft (not illustrated) of a motor, and rotates by driving the motor. The locking member 421 and the rotating shaft 422 are connected via a connector 423. Thus, the locking member 421 rotates around the rotating shaft 422 with the rotation of the rotating shaft 422.

The to-be-fixed portion 430 is provided in a lower portion of the substrate 270 of the harvester 200. The to-be-fixed portion 430 includes a to-be-fixed shaft 431 that extends in the lateral direction. A recess 270a is provided in the lower surface of the substrate 270, and the to-be-fixed shaft 431 is located in the recess 270a. The recess 2a provided in the upper surface of the vehicle body 2, and the recess 270a provided in the lower surface of the substrate 270 are positioned such that when the harvester 200 is attached to the top of the vehicle body 2, the recess 2a and the recess 270a overlap in the up-down direction.

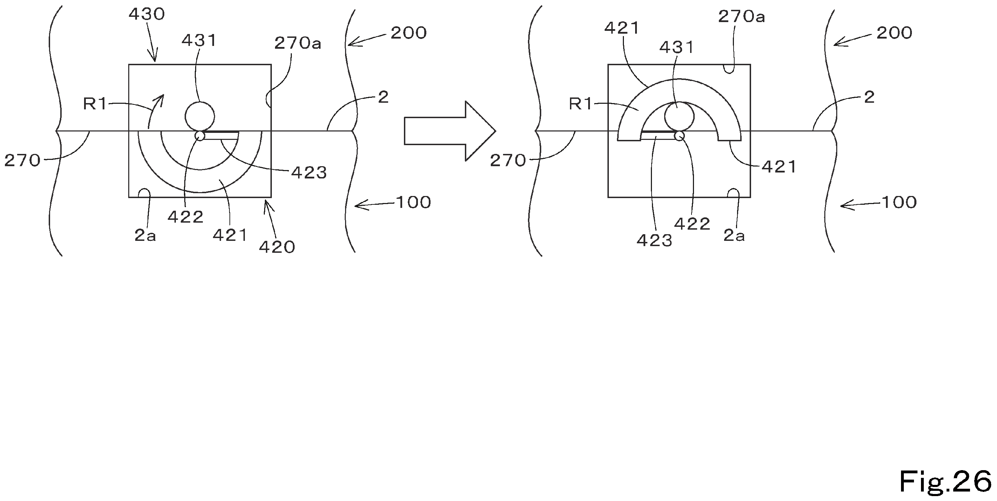

FIG. 26 illustrates a state (left figure) where the locking mechanism 420 is not actuated, and a state (right figure) after the locking mechanism 420 is actuated. In a state where the locking mechanism 420 is not actuated, the locking member 421 of the locking mechanism 420 is in the recess 2a of the vehicle body 2, and does not project from the upper surface of the vehicle body 2. In this state, the locking member 421 is not locked in the to-be-fixed shaft 431 of the to-be-fixed portion 430.

In a state where the locking mechanism 420 is not actuated, when the locking member 421 is rotated (see an arrow R11) with the rotating shaft 422 by driving the motor, the locking member 421 projects upward from the recess 2a of the vehicle body 2, and is locked in the to-be-fixed shaft 431 in the recess 270a of the substrate 270. Thus, the traveling machine body 100 (specifically, the vehicle body 2) and the harvester 200 are fixed together.

In the first example of structure of attachment, in a state where the protrusion 401 provided in the vehicle body 2 is inserted in the recess 501 provided in the harvester 200, the locking mechanism 420 fixes the traveling machine body 100 (specifically, the vehicle body 2) and the harvester 200 together. In the second example of structure of attachment, in a state where the projection 403 provided in the vehicle body 2 is inserted in the insertion hole 503 provided in the harvester 200, the locking mechanism 420 fixes the traveling machine body 100 (specifically, the vehicle body 2) and the harvester 200 together. In the third example of structure of attachment, in a state where the projection 504 provided in the harvester 200 is inserted in the groove 408 provided in the vehicle body 2, the locking mechanism 420 fixes the traveling machine body 100 (specifically, the vehicle body 2) and the harvester 200 together. In the fourth example of structure of attachment, in a state where the projection 411 provided in the vehicle body 2 is inserted in the groove 505 provided in the harvester 200, the locking mechanism 420 fixes the traveling machine body 100 (specifically, the vehicle body 2) and the harvester 200 together.

Note that the locking mechanism 420 may be a mechanism that fixes the movable frame 32 and the harvester 200 which are attached to the vehicle body 2. In this case, the locking mechanism 420 is provided in the movable frame 32. In this case, the traveling machine body 100 and the harvester 200 are fixed together by fixing the movable frame 32 and the harvester 200 together.

The first to fourth examples of structure of attachment described above may be adopted in combination. For example, the traveling machine body 100 is provided with the protrusion 401 in the first example and the projection 403 in the second example, and the harvester 200 is provided with the recess 501 in the first example and the insertion hole 503 in the second example.

As described above, the vehicle body 2 of the traveling machine body 100 includes the attaching/detaching mechanism 400 to allow attachment and detachment of the working device (harvester) 200 to and from the vehicle body 2. The attaching/detaching mechanism 400 includes the above-mentioned locking mechanism 420. Specifically, the attaching/detaching mechanism 400 includes the locking mechanism 420 that, when the working device (harvester) 200 is placed on the vehicle body 2, fixes the working device (harvester) 200 to the vehicle body 2.

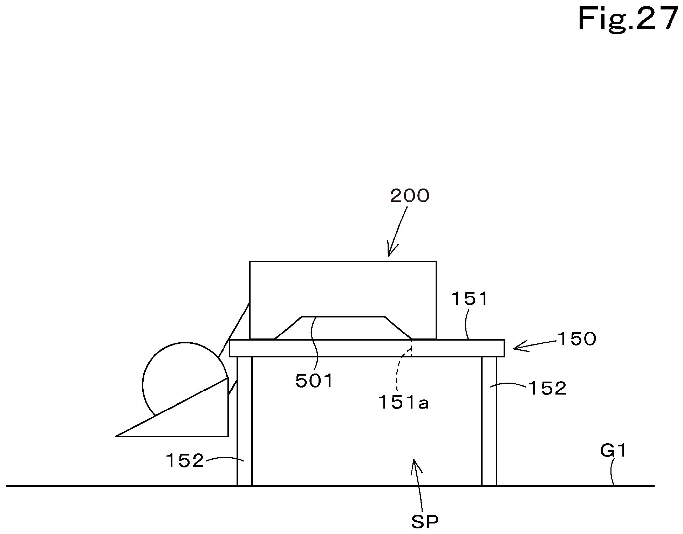

Hereinafter, a method of attaching the harvester 200 to the traveling machine body 100 will be described. FIG. 27 to FIG. 47 illustrate an example of a method of attaching the harvester 200 to the traveling machine body 100. Hereinafter, a method of attaching the harvester 200 to the traveling machine body 100 will be described based on FIG. 27 to FIG. 47. Note that the traveling machine body 100 and the harvester 200 illustrated in FIG. 27 to FIG. 47 are simplified figures of the traveling machine body 100 and the harvester 200 illustrated in FIG. 1 to FIG. 5, FIG. 10 to FIG. 14 and the like.

FIG. 27 to FIG. 31 illustrate a first example of a method of attaching the harvester 200 to the traveling machine body 100. Hereinafter, the first example of attachment method will be described. The first example of attachment method is utilized when the traveling machine body 100 and the harvester 200 have the above-described first example of structure of attachment. In the first example of attachment method, the vehicle body 2 can be raised and lowered by the above-described height changing mechanism (lifting mechanism) 90.

First, as illustrated in FIG. 27, the harvester 200 is held in a state of being elevated from a ground surface G1 (holding step). Specifically, the harvester 200 is held in a state of being elevated from the ground surface G1 by placing the harvester 200 on a rest 150.

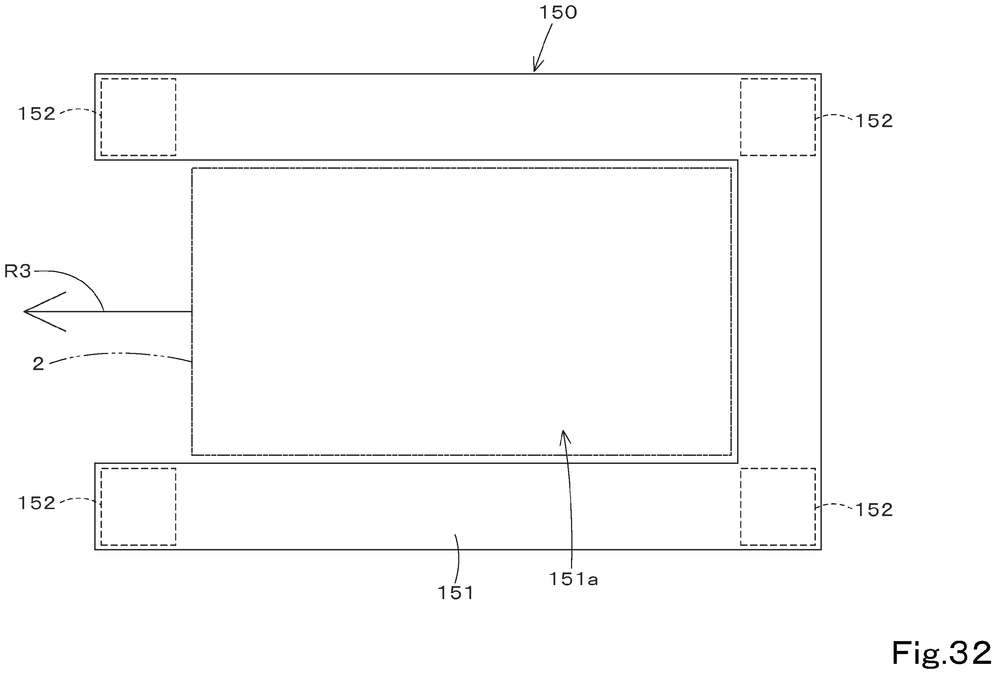

The rest 150 includes an upper plate 151 and pillars 152. The upper plate 151 is a plate on which the harvester 200 is placed. The upper plate 151 is not necessarily made of a board material, and may be a combination of multiple rods in a frame shape. The pillars 152 are provided upright on the ground surface G1 to support the upper plate 151 at a position (height) away from the ground surface G1. Under the upper plate 151 of the rest 150, space SP is provided which can be occupied by the traveling machine body 100. The upper plate 151 is provided with an opening 151a into which an upper portion of the vehicle body 2 is inserted. As illustrated in FIG. 32, the upper plate 151 has a substantially U-shape with a forward opening in a plan view by providing the opening 151a.

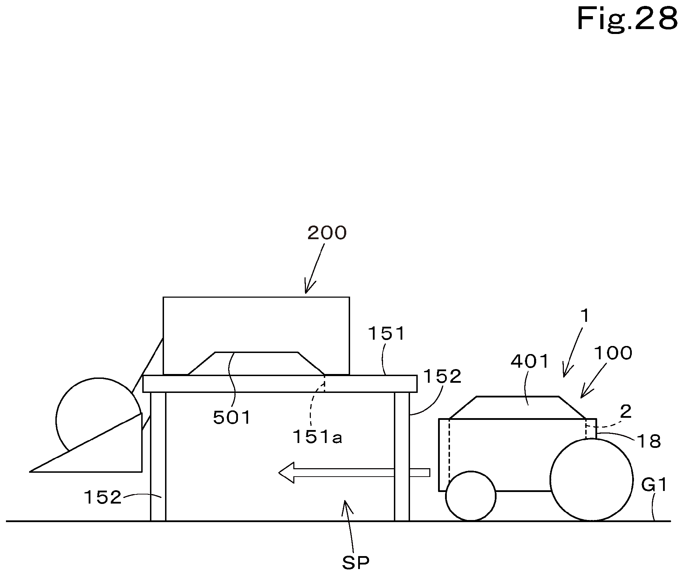

Next, as illustrated in FIG. 28, the vehicle body 2 is located below the harvester 200 by moving the traveling machine body 100 to the area under the harvester 200 (moving step). When the vehicle body 2 is located below the harvester 200, the vehicle body 2 need not be located below the entirety of the harvester 200, and it is sufficient that the vehicle body 2 be located below at least a portion of the harvester 200, the portion being attached to the vehicle body 2. This also applies to another attachment method described later. In this case, the traveling machine body 100 is located in a space SP provided under the upper plate 151 of the rest 150. The moving step is performed in a state where the vehicle body 2 of the traveling machine body 100 is at a height (a height lower than the upper plate 151) at which no contact is made with the upper plate 151. The height of the vehicle body 2 in this state is, e.g., the above-described first height (the lower limit height).

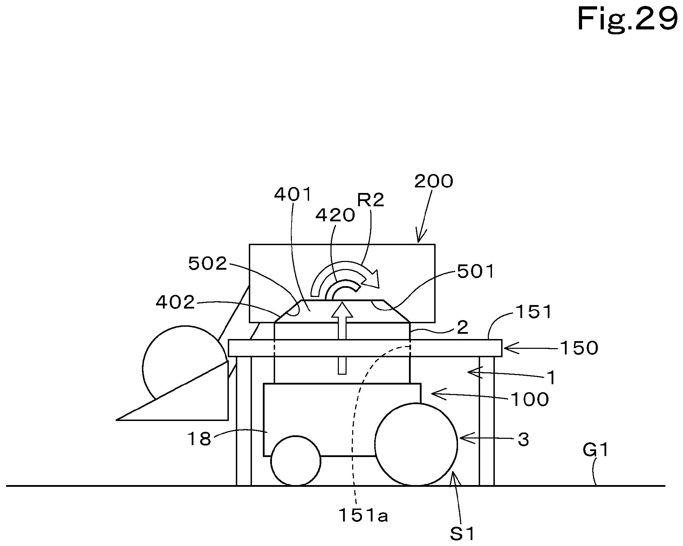

Next, as illustrated in FIG. 29, the harvester (working device) 200 is attached onto the vehicle body 2 by raising the vehicle body 2 located below the harvester 200 (attaching step). In this case, the vehicle body 2 is moved upward with respect to the traveling device 3 and the frame structure 18 (fixed frame 31). In the attaching step, the top of the vehicle body 2 is raised above the rest 150 (above the upper plate 151) through the opening 151a in the upper plate 151. Thus, the harvester 200 is raised with the vehicle body 2 above the rest 150 (above the upper plate 151), and is placed on the top of the vehicle body 2. In this case, the protrusion 401 provided in the vehicle body 2 is fitted in the recess 501 provided in the harvester 200. The protrusion 401 is smoothly fitted into the recess 501 by guiding the first inclined surface 402 to the second inclined surface 502.

When the harvester 200 is raised with the vehicle body 2 above the rest 150, the harvester 200 placed on the vehicle body 2 is located above the rest 150 (above the upper surface of the upper plate 151) (see FIG. 29). The height of the vehicle body 2 in this state is, e.g., the above-mentioned second height (the upper limit height), but may be a height between the first height and the second height.

Subsequently, with the protrusion 401 fitted in the recess 501, the harvester 200 is fixed to the top of the vehicle body 2 by actuating the locking mechanism 420 (see an arrow R2). Thus, the harvester 200 is attached to the vehicle body 2.

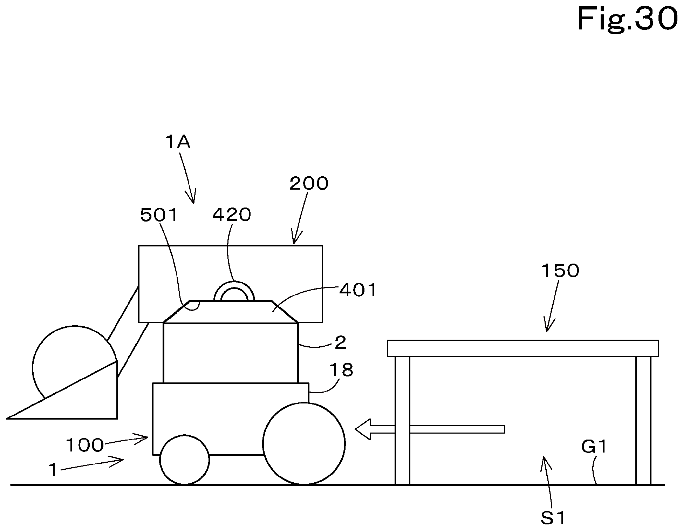

Next, as illustrated in FIG. 30, the traveling machine body 100 with the harvester 200 attached to the vehicle body 2 is moved in a direction away from the rest 150 (move-away step). Thus, the traveling machine body 100 is moved away from the space SP provided under the upper plate 151 of the rest 150. In this case, the vehicle body 2 can be moved away from the rest 150 through the front of the opening 151a (see an arrow R3 in FIG. 32) in a substantially U-shape in a plan view.

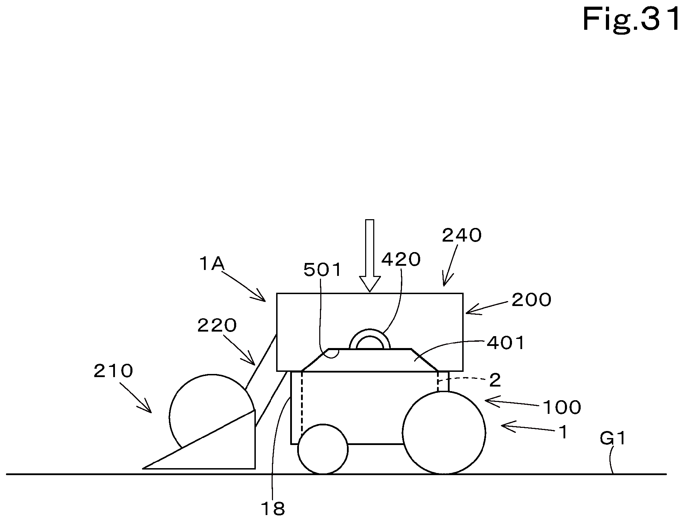

Finally, as illustrated in FIG. 31, the vehicle body 2 with the harvester 200 attached thereto is lowered (lowering step). Thus, the height of the harvester 200 attached to the vehicle body 2 is adjusted to a height suitable for harvesting work. In other words, in the lowering step, the vehicle body 2 is lowered such that the harvester 200 reaches a height suitable for harvesting work. The height of the vehicle body 2 after lowering is, e.g., the above-described first height (the lower limit height).

The operations in the above-described steps (the holding step, the moving step, the attaching step, the move-away step, and the lowering step) are performed, and thus a state where the traveling machine body 100 and harvester 200 are separated proceeds to a state where the traveling machine body 100 and harvester 200 are integrated. In short, the harvesting machine 1A (see FIG. 11 to FIG. 14), that is, the working vehicle 1A including the traveling machine body 100 and the harvester 200 is implemented. Thus, crop harvesting work can be performed using the harvesting machine 1A (working vehicle 1A).

In the first example of attachment method described above, in the holding step, the harvester 200 can be held in a state of being placed on the rest 150. Thus, the harvester 200 can be stably held in a state of being elevated from the ground surface G1. Thus, the attaching step can be stably and securely performed.

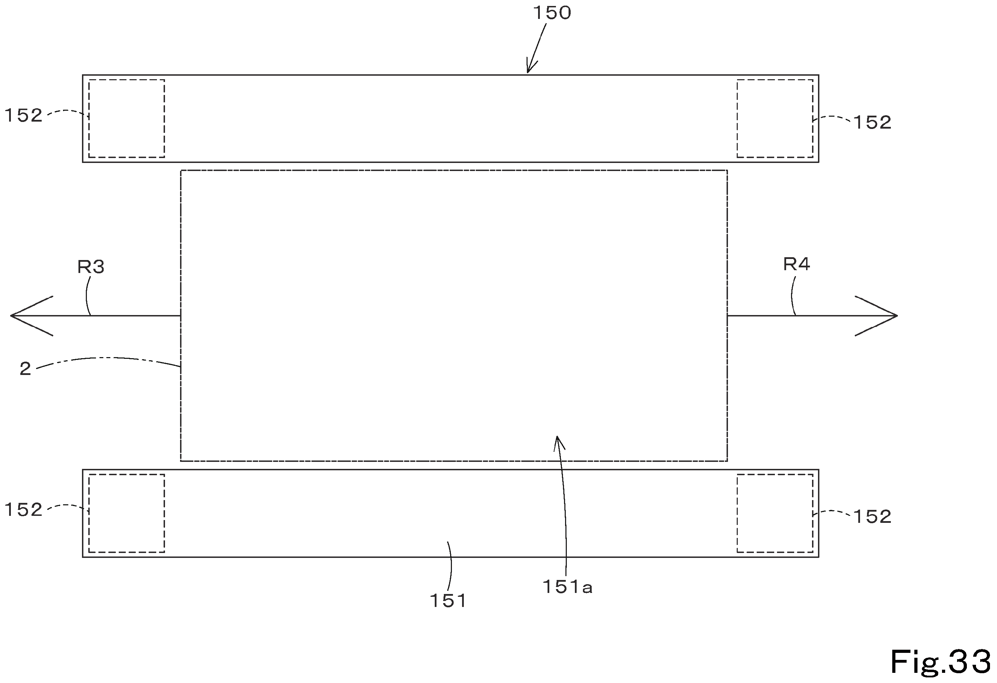

FIG. 33 is a variation of the upper plate 151 to be used in the first example of attachment method described above. The variation of the upper plate 151 has a shape with an opening in each of the front and the rear. In other words, the opening 151a is provided from the front end to the rear end of the upper plate 151. In other words, the upper plate 151 has a shape divided into the left and the right with the opening 151a therebetween. When the variation of the upper plate 151 is used, in the move-away step, the traveling machine body 100 can be moved in the same direction as or a different direction from the direction of entering the space SP in the moving step. When entering the space SP from the rear in the moving step, the traveling machine body 100 can move forward and move away from the rest 150 (see the arrow R3), or can move rearward and move away from the rest 150 (see an arrow R4).

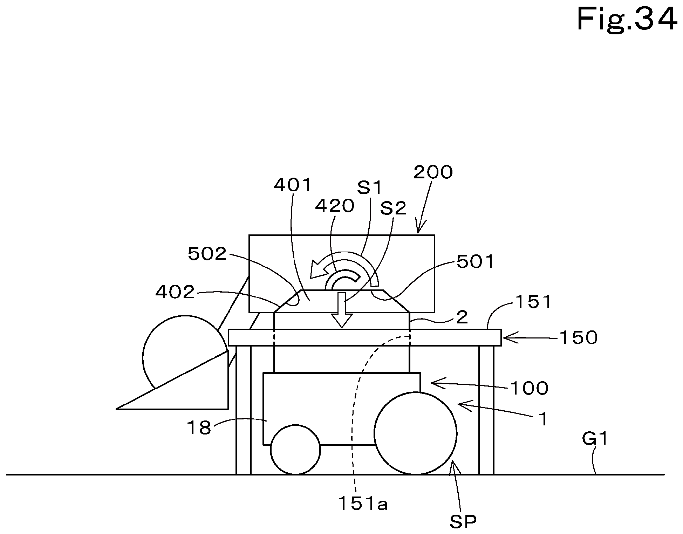

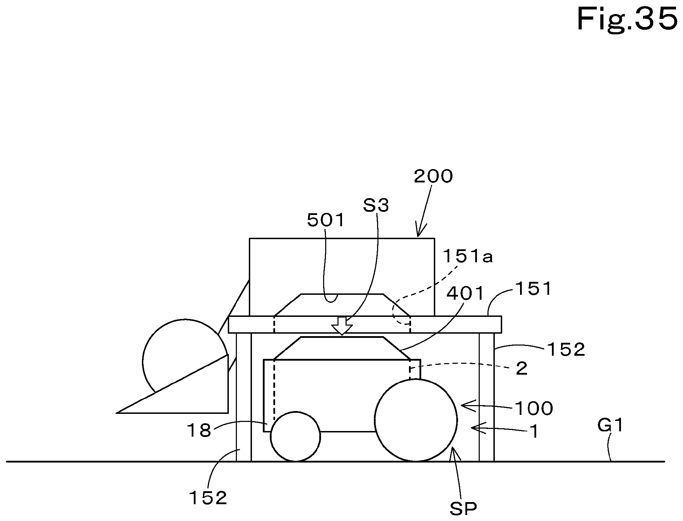

When the harvester (working device) 200 is detached from the traveling machine body 100, as illustrated in FIG. 34, fixing by the locking mechanism 420 is released (see an arrow S1), then in a state where the harvester (working device) 200 attached to the vehicle body 2 is located above the rest 150 (a state of being elevated above the rest 150), the harvester (working device) 200 is lowered with the vehicle body 2 to the rest 150 (see an arrow S2). Thus, the harvester (working device) 200 is placed on the upper surface of the upper plate 151 of the rest 150. Next, as illustrated in FIG. 35, in a state where the harvester (working device) 200 is placed on the upper surface of the upper plate 151 of the rest 150, only the vehicle body 2 is lowered to a position lower than the upper plate 151 (see an arrow S3). Thus, the harvester (working device) 200 can be detached from the vehicle body 2.

In the first example of attachment method described above, the height changing mechanism (lifting mechanism) 90 is used. The raising of the vehicle body 2 in the attaching step is performed by the height changing mechanism 90. In a state where the vehicle body 2 is located below the harvester (working device) 200, the height changing mechanism 90 raises the vehicle body 2, and attaches the harvester (working device) 200 to the vehicle body 2 (see FIG. 29). The height changing mechanism 90 raises the vehicle body 2 with the power supply apparatus 4 including the battery 7 and/or the motor 5, and the power transmission mechanism 600 mounted, and attaches the harvester (working device) 200 to the vehicle body 2.

In a state where the harvester (working device) 200 attached to the vehicle body 2 is located above the rest 150, the height changing mechanism (lifting mechanism) 90 lowers the harvester (working device) 200 with the vehicle body 2 to the rest 150, and thus detaches the harvester (working device) 200 from the vehicle body 2 (see FIG. 34 and FIG. 35).

The first example of attachment method described above can also be used when the traveling machine body 100 and the harvester 200 have the second example of structure of attachment. In this case, in the attaching step, the projection 403 provided in the vehicle body 2 is inserted in the insertion hole 503 provided in the harvester 200, and the harvester 200 is fixed to the top of the vehicle body 2 by actuating the locking mechanism 420 with the projection 403 inserted in the insertion hole 503. Other than this respect, the attachment method for the first example of structure of attachment applies.

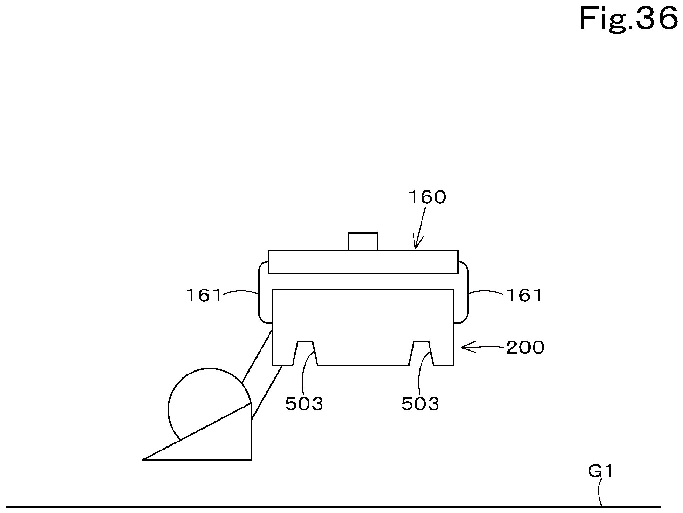

FIG. 36 to FIG. 39 illustrate a second example of a method of attaching the harvester 200 to the traveling machine body 100. Hereinafter, the second example of attachment method will be described. The second example of attachment method is utilized when the traveling machine body 100 and the harvester 200 have the above-described second example of structure of attachment.

First, as illustrated in FIG. 36, the harvester 200 is held in a state of being elevated from the ground surface G1 (holding step). Specifically, the harvester 200 is held in a state of being elevated from the ground surface G1 by hoisting the harvester 200 with a hoisting device 160 such as a crane. The hoisting device 160 includes a holding mechanism that can switch between a state where the harvester 200 is held and a state where holding of the harvester 200 is released. The hoisting device 160 illustrated in FIG. 36 includes a pair of openable and closable holding pawls 161 as a holding mechanism.

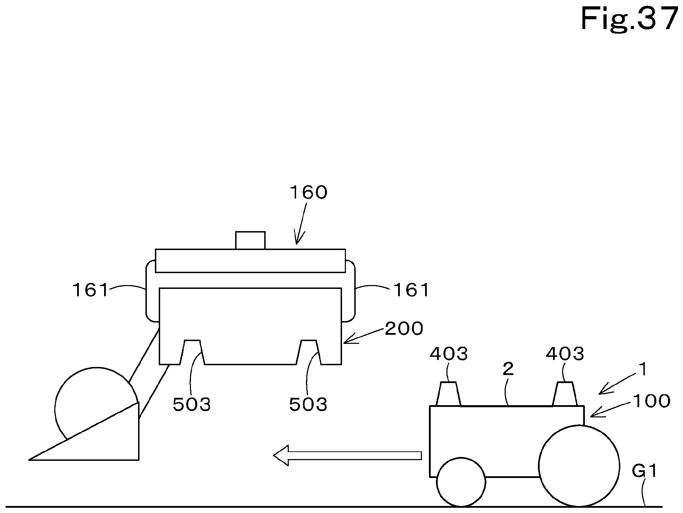

Next, as illustrated in FIG. 37, the vehicle body 2 is located below the harvester 200 by moving the traveling machine body 100 to the area under the harvester 200 (moving step). The moving step is performed in a state where the height of the vehicle body 2 of the traveling machine body 100 is such that the vehicle body 2 is not in contact with the hoisted harvester 200. The height of the vehicle body 2 in this state is, e.g., the above-described first height (the lower limit height), but may be higher than the first height. When the height of the vehicle body 2 is higher than the first height, after the later-described move-away step, the vehicle body 2 with the harvester 200 attached thereto is lowered to the first height.

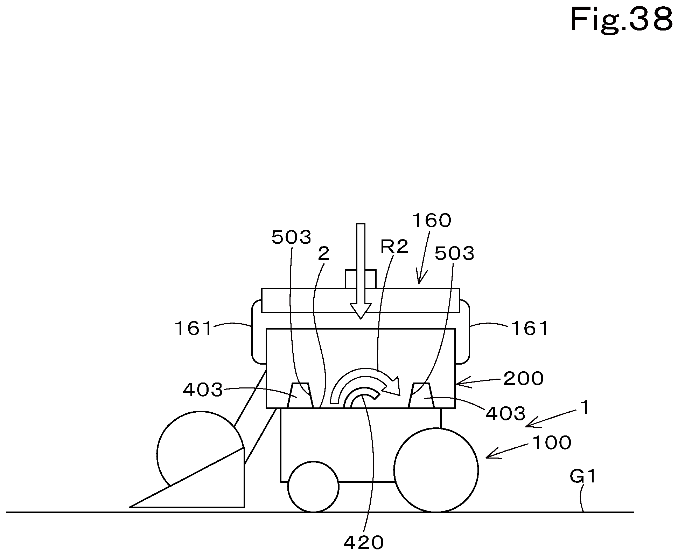

Next, as illustrated in FIG. 38, the harvester 200 is lowered with the hoisting device 160, and the harvester 200 is attached onto the vehicle body 2 (attaching step). In this case, the projection 403 provided in the vehicle body 2 is inserted into the insertion hole 503 provided in the harvester 200. The harvester 200 is fixed to the top of the vehicle body 2 by actuating the locking mechanism 420 (see the arrow R2) with the projection 403 inserted in the insertion hole 503. Thus, the harvester 200 is attached to the vehicle body 2.

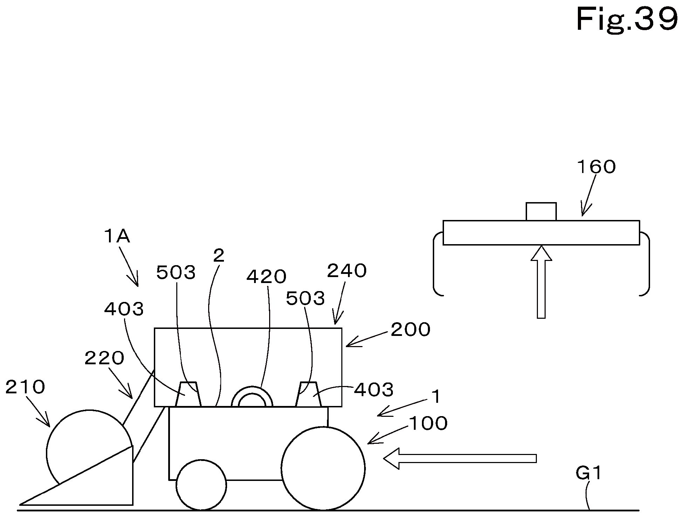

Finally, as illustrated in FIG. 39, along with raising the hoisting device 160 after releasing the holding of the harvester 200 by the hoisting device 160, the traveling machine body 100 with the harvester 200 attached to the vehicle body 2 is moved in a direction away from the hoisting device 160 (move-away step).

The operations in the above-described steps (the holding step, the moving step, the attaching step, and the move-away step) are performed, and thus the harvesting machine (working vehicle) 1A (see FIG. 11 to FIG. 14) including the traveling machine body 100 and the harvester 200 is implemented. In the second example of attachment method, in the holding step, the rest 150 as in the first example does not need to be constructed. Since the rest 150 is not used, attachment work can be performed at various positions.

When the traveling machine body 100 is detached from the harvester 200, fixing by the locking mechanism 420 is released, then the harvester 200 attached to the vehicle body 2 is raised by the hoisting device 160. Thus, the projection 403 provided in the vehicle body 2 is removed from the insertion hole 503 provided in the harvester 200, and thus the harvester 200 can be detached from the vehicle body 2.

The above-described second example of attachment method can also be used when the traveling machine body 100 and the harvester 200 have the first example of structure of attachment. In this case, in the attaching step, the protrusion 401 provided in the vehicle body 2 is fitted in the recess 501 provided in the harvester 200, and the harvester 200 is fixed to the top of the vehicle body 2 by actuating the locking mechanism 420 with the protrusion 401 fitted in the recess 501. Other than this respect, the attachment method for the second example of structure of attachment applies.

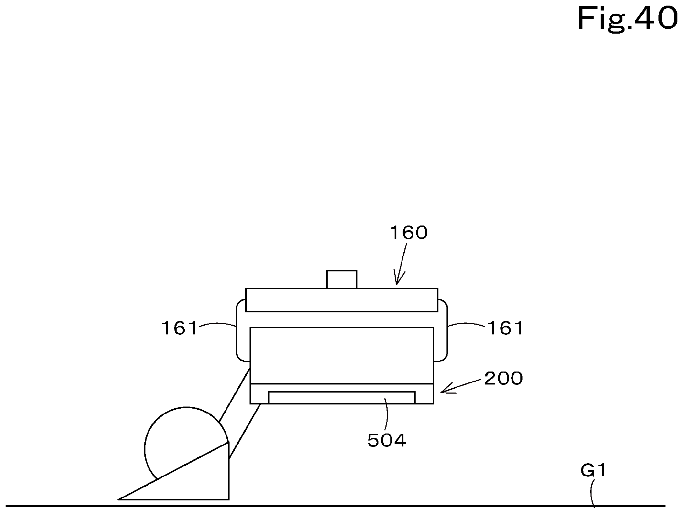

FIG. 40 to FIG. 43 illustrate a third example of a method of attaching the harvester 200 to the traveling machine body 100. Hereinafter, the third example of attachment method will be described. The third example of attachment method is utilized when the traveling machine body 100 and the harvester 200 have the above-described third example of structure of attachment.

First, as illustrated in FIG. 40, the harvester 200 is held in a state of being elevated from the ground surface G1 (holding step). Specifically, the harvester 200 is held in a state of being elevated from the ground surface G1 by hoisting the harvester 200 with the hoisting device 160 such as a crane. The hoisting device 160 includes a holding mechanism that can switch between a state where the harvester 200 is held and a state where holding of the harvester 200 is released. The hoisting device 160 illustrated in FIG. 40 includes a pair of openable and closable holding pawls 161 as a holding mechanism.

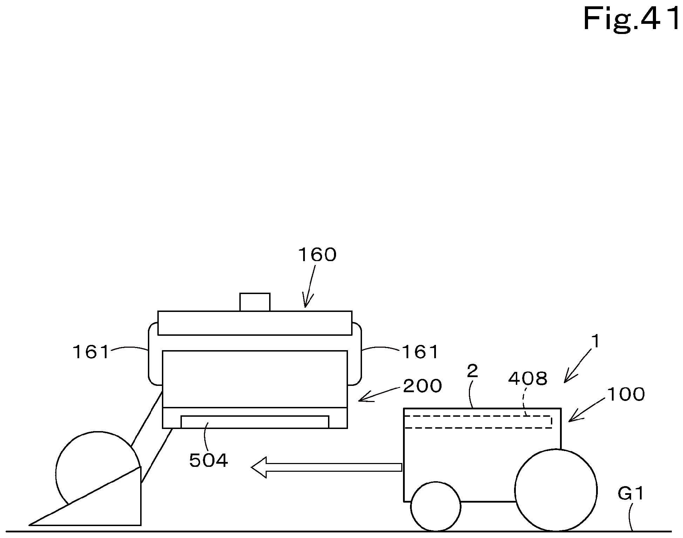

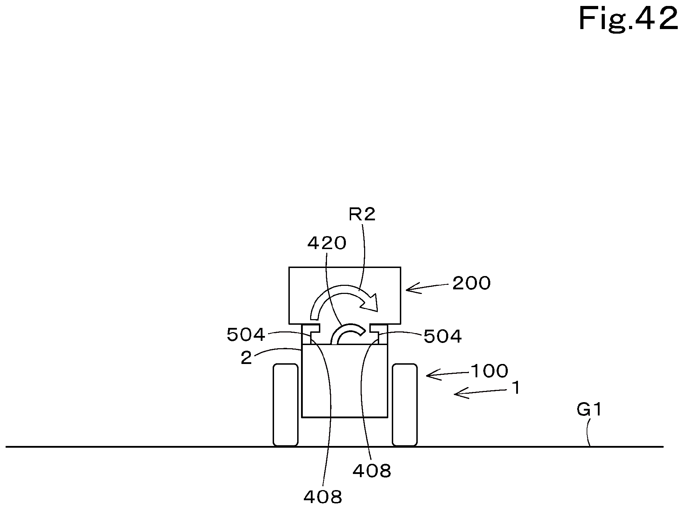

Next, as illustrated in FIG. 41, the harvester 200 is attached onto the vehicle body 2 by moving the traveling machine body 100 (forward or rearward) to the harvester 200 (attaching step). In this case, the projection 504 provided on the harvester 200 is slid and inserted into the groove 408 provided in the vehicle body 2 (see FIG. 42). The harvester 200 is then fixed to the top of the vehicle body 2 by actuating the locking mechanism 420 (see the arrow R2) with the projection 504 inserted in the groove 408. Thus, the harvester 200 is attached to the vehicle body 2.

The height of the vehicle body 2 in the attaching step is the above-described first height (the lower limit height) in the illustrated example, but may be higher than the first height. When the height of the vehicle body 2 is higher than the first height, after the later-described move-away step, the vehicle body 2 with the harvester 200 attached thereto is lowered to the first height.

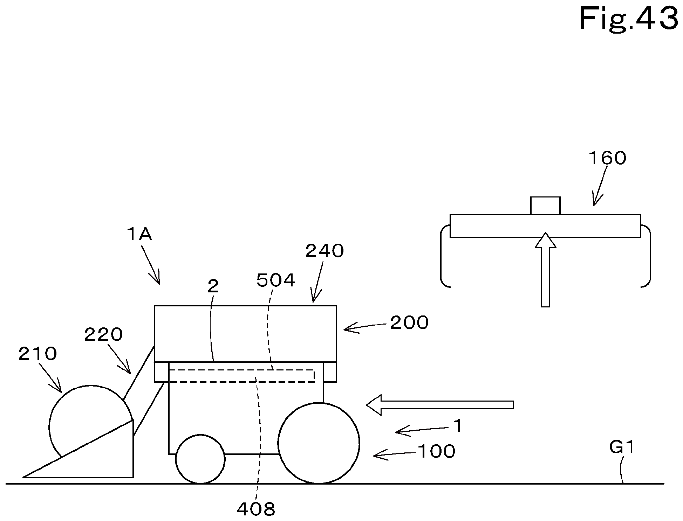

Finally, as illustrated in FIG. 43, along with raising the hoisting device 160 after releasing the holding of the harvester 200 by the hoisting device 160, the traveling machine body 100 with the harvester 200 attached to the vehicle body 2 is moved in a direction away from the hoisting device 160 (move-away step).

The operations in the above-described steps (the holding step, the attaching step, and the move-away step) are performed, and thus the harvester (working vehicle) 1A (see FIG. 11 to FIG. 14) including the traveling machine body 100 and the harvester 200 is implemented. Also, in the third example of attachment method, in the holding step, the rest 150 as in the first example does not need to be constructed. Since the rest 150 is not used, attachment work can be performed at various positions.

When the harvester 200 is detached from the traveling machine body 100, the harvester 200 is held by the holding mechanism of the hoisting device 160, fixing by the locking mechanism 420 is released, then the traveling machine body 100 is moved (forward or rearward) relative to the harvester 200. The direction of movement of the traveling machine body 100 then is opposite to the direction of movement in the attaching step. Due to this movement, the projection 504 provided in the harvester 200 is removed from the groove 408 provided in the vehicle body 2, and thus the harvester 200 can be detached from the vehicle body 2.

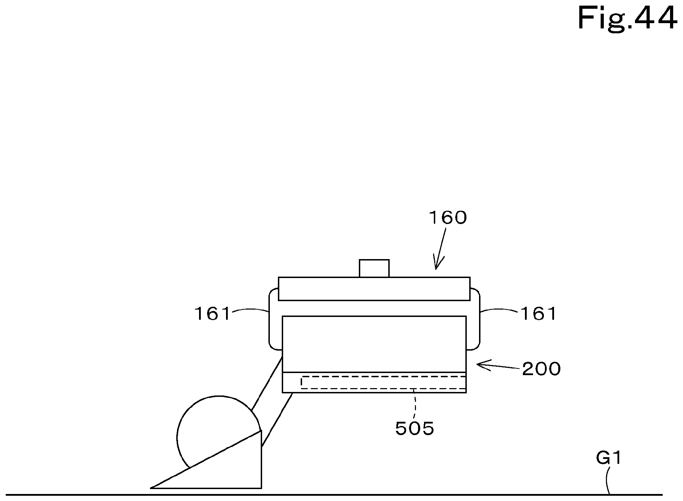

FIG. 44 to FIG. 47 illustrate a fourth example of a method of attaching the harvester 200 to the traveling machine body 100. Hereinafter, the fourth example of attachment method will be described. The fourth example of attachment method is utilized when the traveling machine body 100 and the harvester 200 have the above-described fourth example of structure of attachment.

First, as illustrated in FIG. 44, the harvester 200 is held in a state of being elevated from the ground surface G1 (holding step). Specifically, the harvester 200 is held in a state of being elevated from the ground surface G1 by hoisting the harvester 200 with the hoisting device 160 such as a crane. The hoisting device 160 includes a holding mechanism including the above-mentioned pair of holding pawls 161.

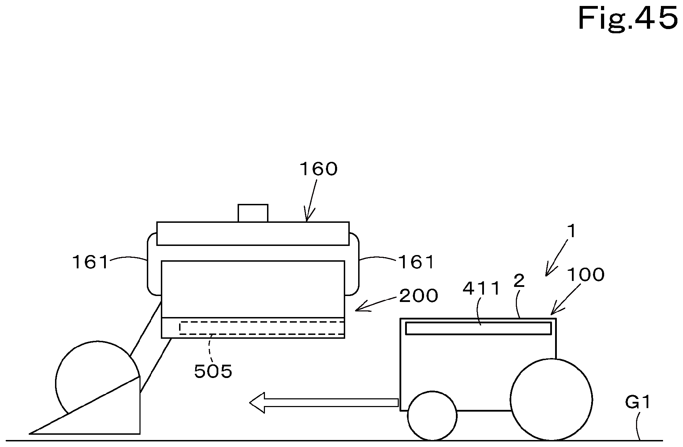

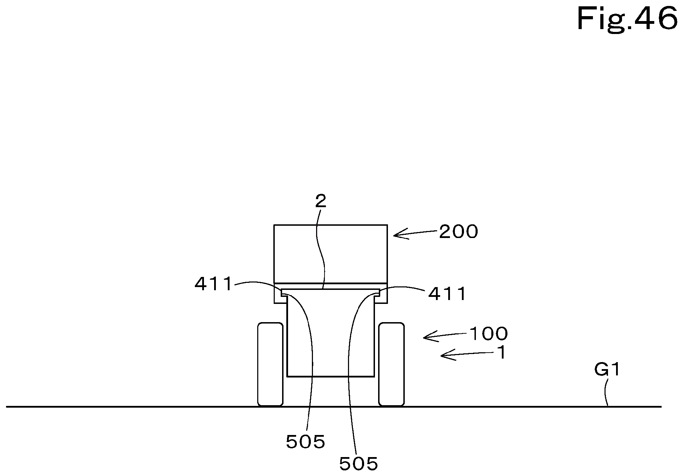

Next, as illustrated in FIG. 45, the harvester 200 is attached onto the vehicle body 2 by moving the traveling machine body 100 (forward or rearward) to the harvester 200 (attaching step). In this case, the projection 411 provided in the vehicle body 2 is slid and inserted into the groove 505 provided in the harvester 200 (see FIG. 46). The harvester 200 is then fixed to the top of the vehicle body 2 by actuating the locking mechanism (not illustrated) with the projection 411 inserted in the groove 505. Thus, the harvester 200 is attached to the vehicle body 2.

The height of the vehicle body 2 in the attaching step is the above-described first height (the lower limit height) in the illustrated example, but may be higher than the first height. When the height of the vehicle body 2 is higher than the first height, after the later-described move-away step, the vehicle body 2 with the harvester 200 attached thereto is lowered to the first height.

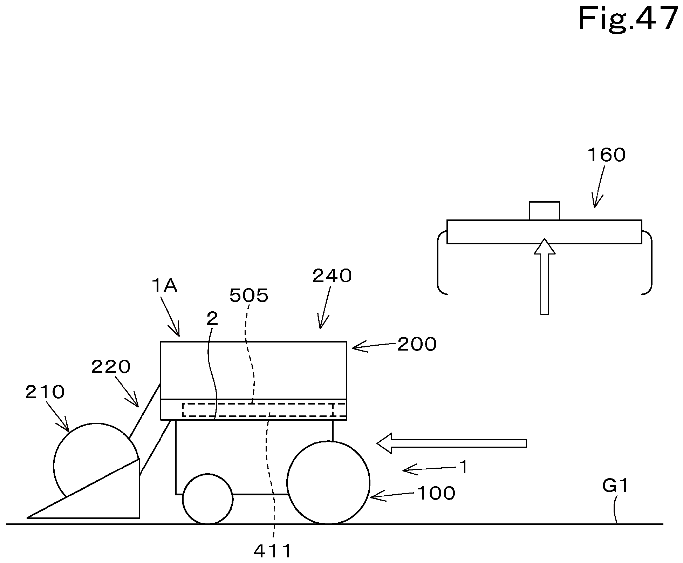

Finally, as illustrated in FIG. 47, along with raising the hoisting device 160 after releasing the holding of the harvester 200 by the hoisting device 160, the traveling machine body 100 with the harvester 200 attached to the vehicle body 2 is moved in a direction away from the hoisting device 160 (move-away step).

The operations in the above-described steps (the holding step, the attaching step, and the move-away step) are performed, and thus the harvester (working vehicle) 1A (see FIG. 11 to FIG. 14) including the traveling machine body 100 and the harvester 200 is implemented. Also, in the fourth example of attachment method, in the holding step, the rest 150 as in the first example does not need to be constructed. Since the rest 150 is not used, attachment work can be performed at various positions.

When the harvester 200 is detached from the traveling machine body 100, the harvester 200 is held by the holding mechanism of the hoisting device 160, fixing by the locking mechanism 420 is released, then the traveling machine body 100 is moved (forward or rearward) relative to the harvester 200. The direction of movement of the traveling machine body 100 then is opposite to the direction of movement in the attaching step. Due to this movement, the projection 411 provided in the vehicle body 2 is removed from the groove 505 provided in the harvester 200, and thus the harvester 200 can be detached from the vehicle body 2.

The first to fourth examples of attachment method have been described so far, but the method of attaching the harvester 200 to the traveling machine body 100 is not limited to the above-described methods. For example, also, in the holding step in the first example of attachment method described above, the holding step as in the second and third examples may be performed. Specifically, as a method of holding the harvester 200 in a state of being elevated from the ground surface G1, the harvester 200 may be hoisted by the hoisting device 160 instead of placing the harvester 200 on the rest 150. In this case, in the moving step, the vehicle body 2 is located below the harvester 200 by moving the traveling machine body 100 to the area under the hoisted harvester 200. In the attaching step, the harvester 200 is attached to the top of the vehicle body 2 by raising the vehicle body 2 to the hoisted harvester 200. After the attaching step, the hoisting device is removed from the harvester 200, and the lowering step is performed.

The protrusion 401, the projection 403, the groove 408, and the projection 411 in the above-described structure of attachment and attachment method are provided in the traveling machine body 100. Specifically, the protrusion 401, the projection 403, the groove 408, and the projection 411 are provided in the vehicle body 2 of the traveling machine body 100. Specifically, the protrusion 401, the projection 403, the groove 408, and the projection 411 can be provided on the top of the vehicle body 2 as follows.

As illustrated in FIG. 1 to FIG. 5, the upper surface of the vehicle body 2 is located above the upper surface of the frame structure 18. Thus, the top of each side surface of the vehicle body 2 projects upward of the frame structure 18. The groove 408 and the projection 411 can be provided in the portion of the vehicle body 2, projecting upward of the frame structure 18 on the side surfaces of the vehicle body 2. The upper surface of the vehicle body 2 is not covered by the frame structure 18 and is exposed. Thus, the protrusion 401 and the projection 403 can be provided on the upper surface of the vehicle body 2 which is not covered by the frame structure 18 and is exposed.

However, the protrusion 401, the projection 403, the groove 408, and the projection 411 may be provided in the area other than the vehicle body 2 of the traveling machine body 100. For example, the protrusion 401, the projection 403, the groove 408, and the projection 411 may be provided in the frame structure 18 of the traveling machine body 100. In this case, the structure of attachment to attach the working device 200 to the traveling machine body 100 is not a structure to directly attach the working device (harvester) 200 to the vehicle body 2, but a structure to indirectly attach the working device 200 to the vehicle body 2 through the frame structure 18. In short, the working device 200 is attached to the frame structure 18 of the traveling machine body 100.

When a structure to attach the working device 200 to the frame structure 18 is adopted, the upper surface of the vehicle body 2 does not need to be located above the upper surface of the frame structure 18. In this case, upper portions (an upper portion of the left surface of the second left frame 20L and an upper portion of the right surface of the second right frame 22R) of the side surfaces of the frame structure 18 can be provided with the groove 408 and the projection 411. Alternatively, part or all of the upper surface of the vehicle body 2 may be covered by the frame structure 18 (the above-mentioned connection frame). In this case, the upper surface (the upper surface of the connection frame) of the frame structure 18 can be provided with the protrusion 401 and the projection 403.

As described above, when a structure to attach the working device 200 to the frame structure 18 is adopted, the protrusion 401, the projection 403, the groove 408, and the projection 411 can be provided in the movable frame 32 (the second left frame 20L, the second right frame 22R, and the connection frame) of the frame structure 18. In this case, the working device 200 is indirectly attached to the vehicle body 2 through the movable frame 32.

Next, the power transmission path of the harvesting machine 1A (working vehicle 1A) will be described. Specifically, the path for transmitting power to drive the traveling device 3 and the harvester 200 included in the harvesting machine 1A will be described using several examples.

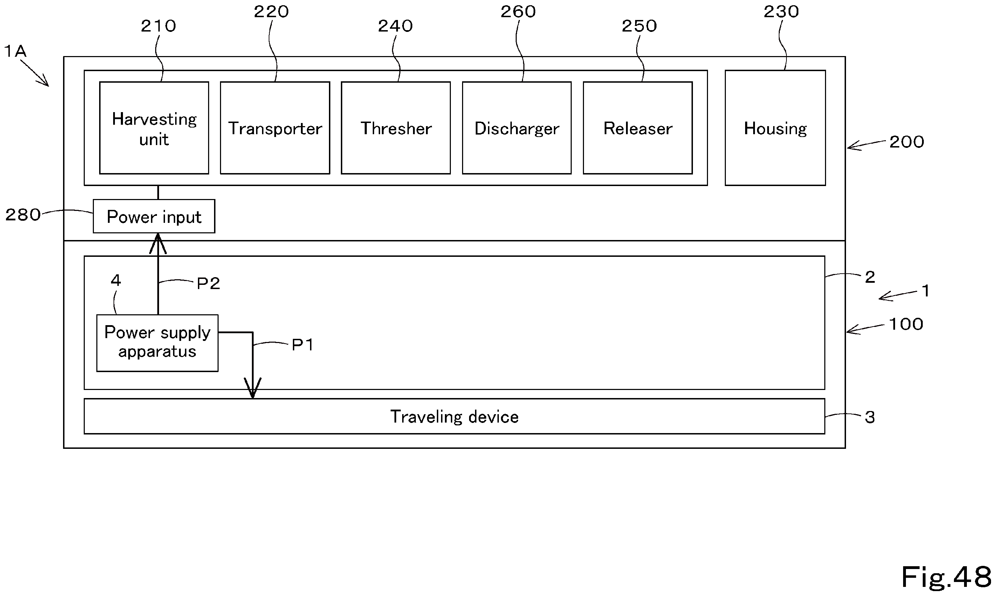

FIG. 48 illustrates an example (first example) of a power transmission path of the harvesting machine 1A. In the first example, the power generated by the power supply apparatus 4 mounted on the traveling machine body 100 is supplied to the traveling device 3 and the harvester 200 (see an arrow P1 and an arrow P2). Thus, in the harvesting machine 1A, power is supplied from the power supply apparatus 4 mounted on the traveling machine body 100 to the harvester 200. The power supplied from the power supply apparatus 4 to the harvester 200 is input to the power input 280 of the harvester 200.

Thus, the drive members (the harvester unit 210, the transporter 220, the thresher 240, the discharger 260, and the releaser 250) of the harvester 200 are driven, and the harvesting work can be performed. In this manner, the harvester 200 performs the harvesting work based on the power supplied from the power supply apparatus 4 mounted on the traveling machine body 100. Thus, the harvester 200 is not provided with a power supply apparatus that supplies power to perform the harvesting work. The harvester 200 includes no traveling device, and thus is not provided with a power supply apparatus to supply power for traveling.

Like this, in the harvesting machine 1A including the first example of power transmission path, the operation (harvesting work, traveling) can be performed by the power supply apparatus 4 mounted on the traveling machine body 100, and thus the harvester 200 is not provided with a power supply apparatus. Thus, the harvester 200 can be light-weighted and miniaturized.

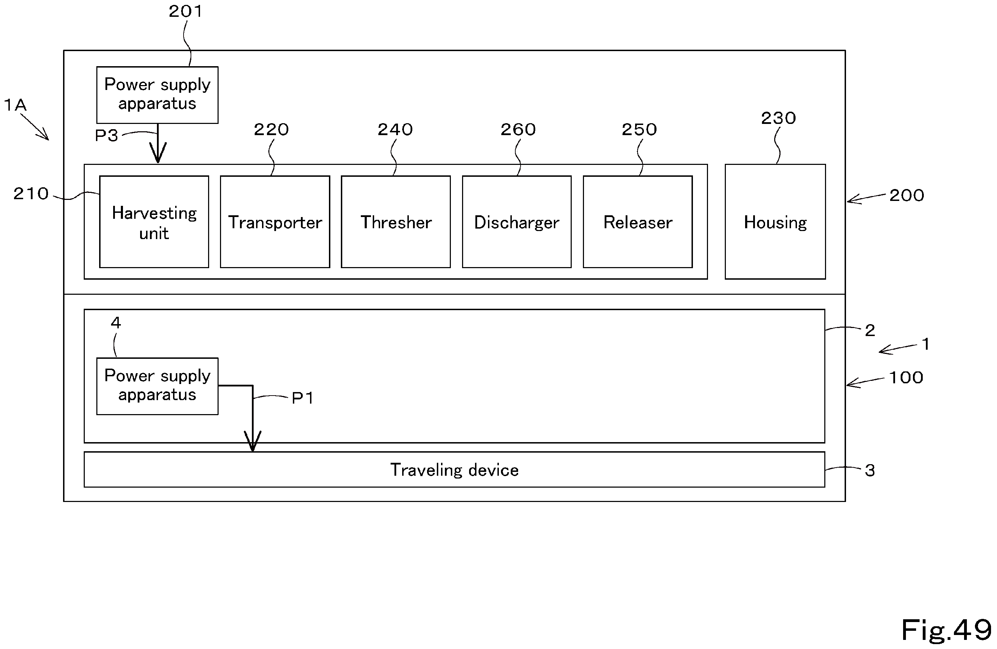

FIG. 49 illustrates another example (second example) of the power transmission path of the harvesting machine 1A. In the second example, the harvester 200 includes another power supply apparatus 201 that generates power to perform the harvesting work, separately from the power supply apparatus 4 mounted on the traveling machine body 100. The power generated by the power supply apparatus 4 mounted on the traveling machine body 100 is supplied to the traveling device 3 (see the arrow P1), but not supplied to the harvester 200. The power generated by the power supply apparatus 201 included in the harvester 200 is supplied to the drive members (the harvester unit 210, the transporter 220, the thresher 240, the discharger 260, and the releaser 250) of the harvester 200 (see an arrow P3).

Thus, the drive members (the harvester unit 210, the transporter 220, the thresher 240, the discharger 260, and the releaser 250) of the harvester 200 are driven, and harvesting work can be performed. In this manner, the harvester 200 performs the harvesting work based on the power supplied from the power supply apparatus 201 included in the harvester 200. Thus, power is not supplied to the harvester 200 from the power supply apparatus 4 mounted on the traveling machine body 100.

In the second example, the power supply apparatus 201 included in the harvester 200 is not limited to a specific one, and may include a motor and a battery as in the power supply apparatus 4 mounted on the traveling machine body 100. Alternatively, the power supply apparatus 201 included in the harvester 200 may include an engine or may include fuel cells instead of a motor.

Like this, in the harvesting machine 1A including the second example of power transmission path, the power from the power supply apparatus 4 mounted on the traveling machine body 100 is not transmitted to the harvester 200. Thus, it is possible to omit a mechanism for transmitting power from the traveling machine body 100 to the harvester 200.

Next, the mechanism for transmitting power from the traveling machine body 100 to the harvester 200 will be described. In the above-described harvesting machine 1A including the first example of power transmission path, the harvesting machine 1A is configured (see FIG. 48) to supply power to the harvester 200 from the power supply apparatus 4 mounted on the traveling machine body 100. When this configuration is adopted, the working vehicle 1 includes the power transmission mechanism 600 that can transmit the power generated by the power supply apparatus 4 to the harvester 200. The power transmission mechanism 600 outputs the power generated by the power supply apparatus 4 to an upper position of the traveling machine body 100 such that the power can be transmitted to the harvester 200.

Hereinafter, the working vehicle 1 including the power transmission mechanism 600 will be described. FIG. 50 is a view illustrating: the working vehicle 1 including the first example of the power transmission mechanism 600; and the harvester 200 to be attached to the traveling machine body 100 of the working vehicle 1.

First, the configuration of the working vehicle 1 including the first example of the power transmission mechanism 600 will be described. The first example of the power transmission mechanism 600 includes an upward output shaft 601 to extend upward, and output the power generated by the power supply apparatus 4 to an upper position of the traveling machine body 100. The upward output shaft 601 extends in a vertical direction or a substantially vertical direction.

The working vehicle 1 including the first example of the power transmission mechanism 600 includes, in addition to the upward output shaft 601, a horizontal output shaft 602 that outputs the power generated by the power supply apparatus 4 rearward. The horizontal output shaft 602 extends in a horizontal direction or a substantially horizontal direction. The front end of the horizontal output shaft 602 is connected to the working motor 6 of the power supply apparatus 4. The rear end of the horizontal output shaft 602 projects rearward from the vehicle body 2. The horizontal output shaft 602 can supply power to the working device (the second working device) attached to the lifting device 10 including a three-point linkage mechanism.

The upward output shaft 601 branches from an intermediate portion of the horizontal output shaft 602, and extends upward. Specifically, a first bevel gear 603 is attached to an intermediate portion of the horizontal output shaft 602 in the extension direction (front-rear direction). A second bevel gear 604 to be engaged with the first bevel gear 603 is attached to the lower end of the upward output shaft 601. The first bevel gear 603 and the second bevel gear 604 are engaged with each other, and thus the upward output shaft 601 branches from an intermediate portion of the horizontal output shaft 602. The upper end of the upward output shaft 601 is located in the vicinity of the upper end of the vehicle body 2. The upper end of the upward output shaft 601 is provided with a shaft coupling 605 which can connect shafts.

According to the first example of power transmission mechanism 600, the power generated by the power supply apparatus 4 is transmitted to the horizontal output shaft 602, and the horizontal output shaft 602 rotates around the axis in the front-rear direction. The rotation of the horizontal output shaft 602 is transmitted from the first bevel gear 603 to the second bevel gear 604. Thus, the upward output shaft 601 rotates around the axis in the up-down direction.

Next, the configuration of the harvester 200 attached to the traveling machine body 100 of the working vehicle 1 including the first example of power transmission mechanism 600 will be described. As illustrated in FIG. 50, the harvester 200 attached to the traveling machine body 100 of the working vehicle 1 including the first example of power transmission mechanism 600 includes the power input 280 that receives an input of the power which is output upward with respect to the traveling machine body 100 from the power transmission mechanism 600. The harvester 200 includes, as the power input 280, a downward input shaft 281 connected to the upward output shaft 601. The lower end of the downward input shaft 281 projects downward from the harvester 200.

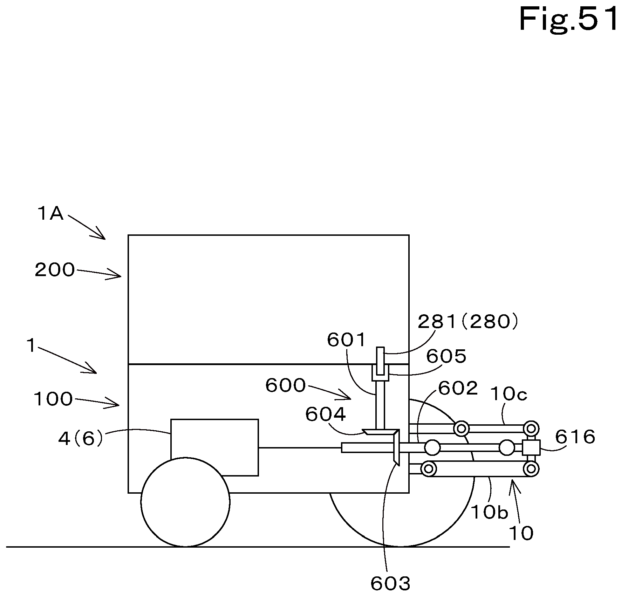

As indicated by a downward arrow in FIG. 50, when the harvester 200 is attached to the top of the traveling machine body 100 of the working vehicle 1 including the first example of power transmission mechanism 600, the upward output shaft 601 and the downward input shaft 281 are connected through the shaft coupling 605 (see FIG. 51). Thus, the rotational power output from the upward output shaft 601 is input to the downward input shaft 281. The drive members (the harvester unit 210, the transporter 220, the thresher 240, the discharger 260, and the releaser 250) of the harvester 200 are driven by the power input to the downward input shaft 281.

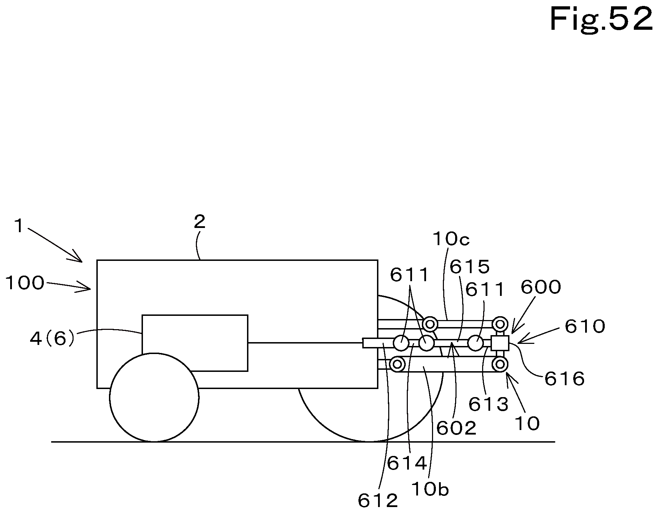

FIG. 52 is a view illustrating the traveling machine body 100 of the working vehicle 1 including the second example of the power transmission mechanism 600. The second example of the power transmission mechanism 600 includes an upward changeable changing mechanism 610 that extends the horizontal output shaft 602 upward, which outputs the power generated by the power supply apparatus 4 rearward. The changing mechanism 610 includes the lifting device 10 that raises and lowers the second working device 300 (see FIG. 2 and FIG. 3) located rearward of the traveling machine body 100. The second working device 300 located rearward of the traveling machine body 100 can be raised and lowered by attaching the second working device 300 to the lifting device 10 provided rearward of the vehicle body 2.

When the second working device 300 is not attached to the lifting device 10, the lifting device 10 changes the horizontal output shaft 602 to an upward shaft which extends upward. Specifically, when the second working device 300 is not attached to the lifting device 10, the lifting device 10 is raised with respect to the vehicle body 2, and thus changes the horizontal output shaft 602 to an upward shaft which extends upward. In other words, the horizontal output shaft 602 is changed from the horizontal direction to the upward direction with the raise of the lifting device 10. Also, the horizontal output shaft 602 is changed from the upward direction to the horizontal direction with lowering of the lifting device 10.

A portion projecting (hereinafter referred to as a "projection of the horizontal output shaft 602") from the traveling machine body 100 (vehicle body 2) of the horizontal output shaft 602 has a configuration in which a plurality of shafts are connected via a joint 611. The joint 611 is configured to be bendable in at least the up-down direction. As the joint 611, a universal joint bendable in multiple directions is preferably used. Hereinafter, a description will be given assuming that the joint 611 is a universal joint. However, the joint 611 is not limited to the universal joint.

As illustrated in FIG. 52, the plurality of shafts include at least a first shaft 612 located on the base end side (the vehicle body 2 side) of the projection of the horizontal output shaft 602, and a second shaft 613 located on the distal end side (opposite side to the vehicle body 2) of the projection of the horizontal output shaft 602.

Note that the plurality of shafts included in the horizontal output shaft 602 may be two or more than two. The number of universal joints 611 can be increased corresponding to the number of the plurality of shafts included in the horizontal output shaft 602. In the illustrated example, four shafts of the horizontal output shaft 602 are connected by three universal joints 611. Specifically, the horizontal output shaft 602 in the illustrated example further includes two shafts (a third shaft 614 and a fourth shaft 615) between the first shaft 612 and the second shaft 613 (see FIG. 52).

The projection of the horizontal output shaft 602 is bendable at the universal joints 611. The second shaft 613 can be rotated upward with respect to the first shaft 612 by bending the projection of the horizontal output shaft 602 at the universal joints 611.

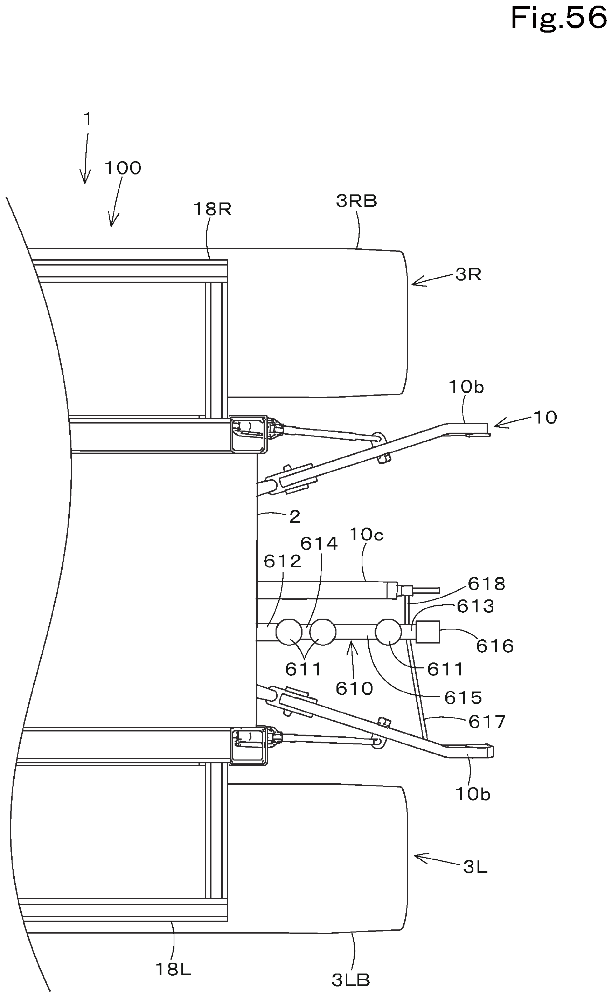

The projection of the horizontal output shaft 602 is connected to the lifting device 10. Specifically, the projection of the horizontal output shaft 602 is connected to the lower link 10b and/or the top link 10c of the lifting device 10. In the example illustrated in FIG. 56, the projection of the horizontal output shaft 602 is connected to the lower link 10b through a connection member 617, and is connected to the top link 10c through a connection member 618. Thus, the projection of the horizontal output shaft 602 is raised and lowered with the raising and lowering (raising and lowering of the lower link 10b and the top link 10c) of the lifting device 10. However, it is sufficient that the projection of the horizontal output shaft 602 be connected to at least one of the lower link 10b and the top link 10c.

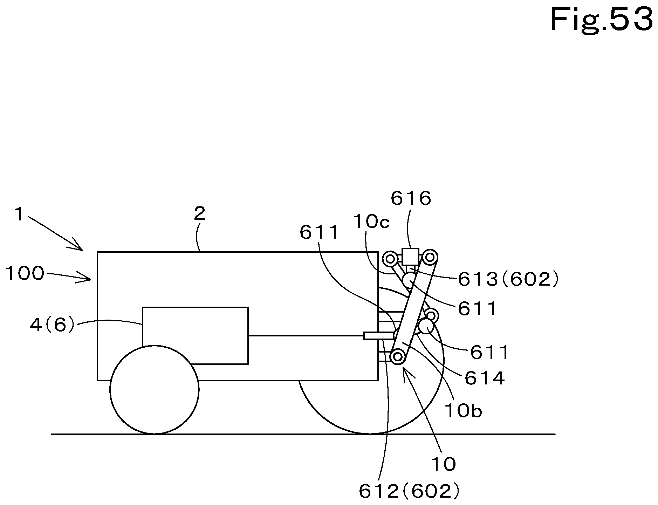

When the lower link 10b and the top link 10c are raised and lowered, the projection of the horizontal output shaft 602 is bent at the universal joints 611, and the second shaft 613 rotates upward or downward with respect to the first shaft 612. When the lower link 10b and the top link 10c are raised, the second shaft 613 rotates upward with respect to the first shaft 612. Thus, the horizontal output shaft 602 (specifically, the second shaft 613) is changed to an upward shaft that extends upward (see FIG. 53).

The distal end (the distal end of the second shaft 613) of the projection of the horizontal output shaft 602 is provided with a shaft coupling 616 which can connect shafts. When the lower link 10b and the top link 10c are raised, the second shaft 613 rotates upward with respect to the first shaft 612, and the shaft coupling 616 becomes upward (see FIG. 53).

The projection of the horizontal output shaft 602 is located below the top link 10c and above the lower link 10b of the lifting device 10 (see FIG. 52). The projection of the horizontal output shaft 602 is located at a position displaced from the top link 10c in the lateral direction (see FIG. 56). Thus, the horizontal output shaft 602 can be prevented from interfering with the top link 10c when the horizontal output shaft 602 (specifically, the second shaft 613) is changed to upward by raising or lowering the lower link 10b and the top link 10c.

Note that, as in the horizontal output shaft 602, the top link 10c and/or the lower link 10b may adopt a configuration in which a plurality of members are connected by a bendable joint (universal joint). Thus, the top link 10c and/or the lower link 10b are bendable at an intermediate portion in a longitudinal direction, and thus it is easy to change the horizontal output shaft 602 (specifically, the second shaft 613) connected to the top link 10c and/or the lower link 10b to upward.

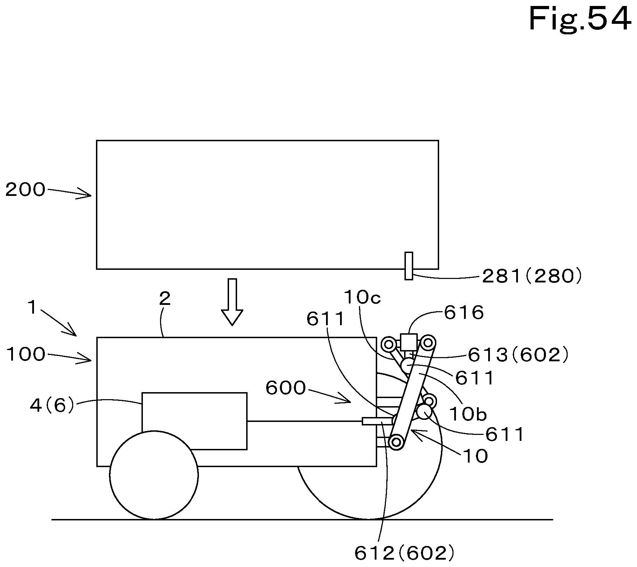

Next, the configuration of the harvester 200 attached to the traveling machine body 100 of the working vehicle 1 including the second example of the power transmission mechanism 600 will be described. As illustrated in FIG. 54, the harvester 200 attached to the traveling machine body 100 of the working vehicle 1 including the second example of the power transmission mechanism 600 includes the power input 280 that receives an input of the power which is output upward with respect to the traveling machine body 100 from the power transmission mechanism 600. The harvester 200 includes, as the power input 280, the downward input shaft 281 connected to the horizontal output shaft 602 changed upward. The lower end of the downward input shaft 281 projects downward from the harvester 200.

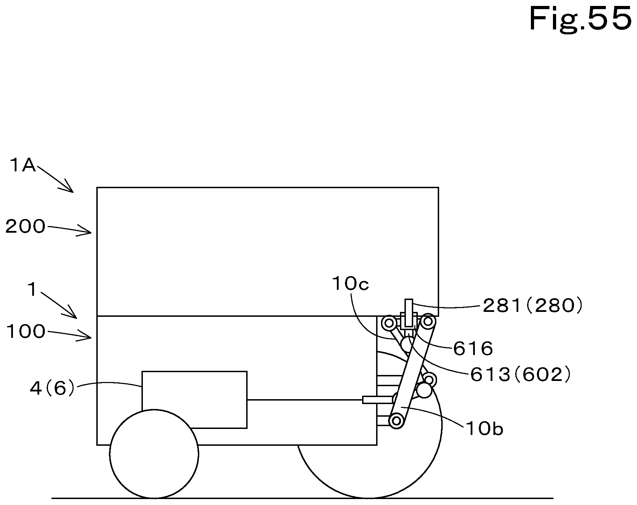

As illustrated in FIG. 54, in a state where the horizontal output shaft 602 (the second shaft 613) of the traveling machine body 100 of the working vehicle 1 including the second example of the power transmission mechanism 600 is changed to an upward shaft that extends upward, when the harvester 200 is attached to the top of the traveling machine body 100, the horizontal output shaft 602 (the second shaft 613) and the downward input shaft 281 are connected through the shaft coupling 616 (see FIG. 55). Thus, the rotational power output from the horizontal output shaft 602 changed upward is input to the downward input shaft 281. The drive members (the harvester unit 210, the transporter 220, the thresher 240, the discharger 260, and the releaser 250) of the harvester 200 are driven by the power input to the downward input shaft 281.

Note that the lifting device 10 may raise and lower the second working device 300 located forward of the traveling machine body 100. In this case, the second working device 300 located forward of the traveling machine body 100 can be raised and lowered by attaching the second working device 300 to the lifting device 10 provided forward of the vehicle body 2. In this case, the horizontal output shaft 602 outputs the power generated by the power supply apparatus 4 to the front, and the changing mechanism 610 changes the horizontal output shaft 602 that outputs power forward to an upward shaft that extends upward.

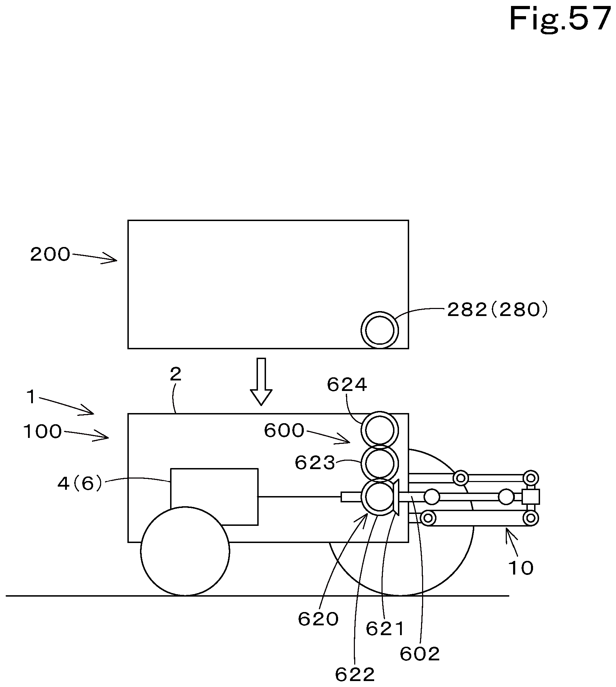

FIG. 57 is a view illustrating: the traveling machine body 100 of the working vehicle 1 including a third example of the power transmission mechanism 600; and the harvester 200 attached to the traveling machine body 100.

First, the configuration of the traveling machine body 100 of the working vehicle 1 including the third example of the power transmission mechanism 600 will be described. The third example of the power transmission mechanism 600 includes a gear transmission mechanism 620 to take power from an intermediate portion of the horizontal output shaft 602, and output the power upward with respect to the traveling machine body 100. The gear transmission mechanism 620 includes a plurality of gears. In the example illustrated in FIG. 57, the gear transmission mechanism 620 includes a first gear 621, a second gear 622, a third gear 623, and a fourth gear 624.

The first gear 621 and the second gear 622 are bevel gears. The first gear 621 is attached to an intermediate portion of the horizontal output shaft 602, and rotates around the axis of the horizontal output shaft 602. The second gear 622, the third gear 623, and the fourth gear 624 are arranged side by side in the up-down direction. The second gear 622 is engaged with the first gear 621. The first gear 621 and the second gear 622 are engaged with each other, and thus power can be taken from an intermediate portion of the horizontal output shaft 602.

The third gear 623 is a spur gear located above the second gear 622, and is engaged with the second gear 622. The fourth gear 624 is a spur gear located above the third gear 623, and is engaged with the third gear 623. The fourth gear 624 is located in the vicinity of the upper end of the vehicle body 2. The fourth gear 624 is an output gear 624 that outputs power upward with respect to the traveling machine body 100, the power being taken from an intermediate portion of the horizontal output shaft 602.

When the horizontal output shaft 602 rotates, the first gear 621 rotates, and the second gear 622 engaged with the first gear 621 rotates. When the second gear 622 rotates, the third gear 623 engaged with the second gear 622 rotates. When the third gear 623 rotates, the fourth gear 624 engaged with the third gear 623 rotates. The fourth gear (output gear) 624 at the uppermost position of the gear transmission mechanism 620 rotates, and thus the power can be output upward with respect to the traveling machine body 100.

The number of gears included in the gear transmission mechanism 620 can be changed (increased or decreased) as appropriate. For example, three gears (the first gear 621, the third gear 623, and the fourth gear 624) engaged with each other arranged in the up-down direction may be increased or decreased in number. When the gears are increased or decreased in number, the uppermost gear (output gear) is located in the vicinity of the upper end of the vehicle body 2 by adjusting the diameters of the gears.

Next, the configuration of the harvester 200 attached to the traveling machine body 100 of the working vehicle 1 including the third example of the power transmission mechanism 600 will be described. As illustrated in FIG. 57, the harvester 200 attached to the traveling machine body 100 of the working vehicle 1 including the third example of the power transmission mechanism 600 includes the power input 280 that receives an input of the power which is output upward with respect to the traveling machine body 100 from the power transmission mechanism 600. The harvester 200 includes, as the power input 280, an input gear 282 to be engaged with the output gear 624 (the fourth gear 624) of the gear transmission mechanism 620.

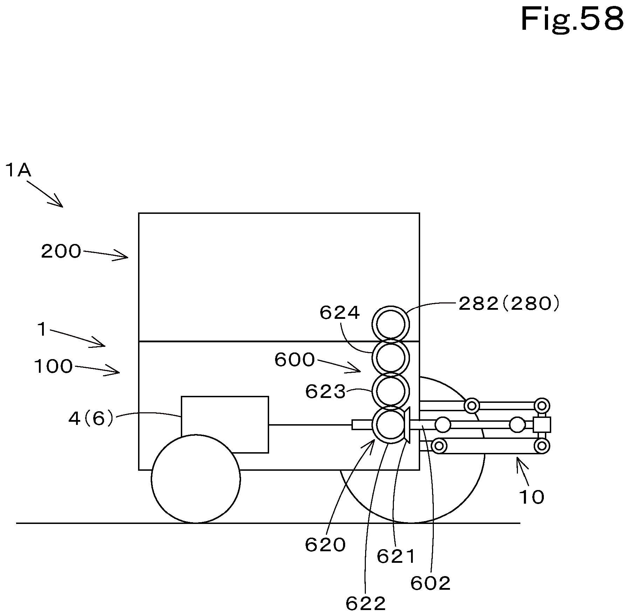

As indicated by a downward arrow in FIG. 57, when the harvester 200 is attached to the top of the traveling machine body 100 of the working vehicle 1 including the third example of the power transmission mechanism 600, the output gear 624 (the fourth gear 624) provided in the traveling machine body 100, and the input gear 282 provided in the harvester 200 are engaged with each other (see FIG. 58). Thus, the rotational power output from the output gear 624 (the fourth gear 624) is input to the input gear 282. The drive members (the harvester unit 210, the transporter 220, the thresher 240, the discharger 260, and the releaser 250) of the harvester 200 are driven by the power input to the input gear 282.

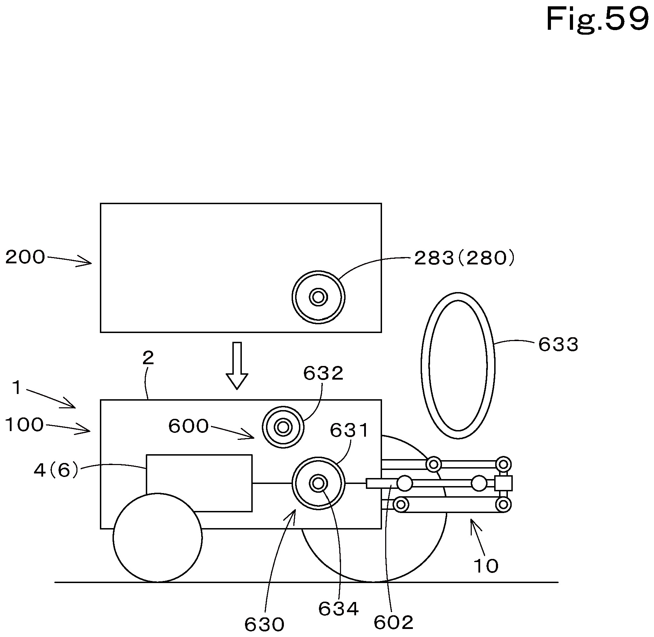

FIG. 59 is a view illustrating: the traveling machine body 100 of the working vehicle 1 including a fourth example of the power transmission mechanism 600; and the harvester 200 attached to the traveling machine body 100.

First, the configuration of the traveling machine body 100 of the working vehicle 1 including a fourth example of the power transmission mechanism 600 will be described. The fourth example of the power transmission mechanism 600 includes a belt transmission mechanism 630 to take power from an intermediate portion of the horizontal output shaft 602, and output the power upward with respect to the traveling machine body 100. The belt transmission mechanism 630 includes a plurality of pulleys. In the example illustrated in FIG. 59, the belt transmission mechanism 630 includes a plurality of pulleys (an output pulley 631 and a tension pulley 632), and an endless (looped) belt 633. The number of pulleys included in the belt transmission mechanism 630 can be changed (increased or decreased) as appropriate.

The output pulley 631 includes a central shaft 634 extending in the lateral direction. The rotational power of the horizontal output shaft 602 is transmitted to the central shaft 634 through a transmission mechanism and the like (not illustrated) such as a gear mechanism provided at an intermediate portion of the horizontal output shaft 602. The output pulley 631 is a pulley that takes power from an intermediate portion of the horizontal output shaft 602. The tension pulley 632 is a pulley that applies tension to the belt 633. The belt 633 is wound around the output pulley 631, and power is transmitted from the output pulley 631.

Next, the configuration of the harvester 200 attached to the traveling machine body 100 of the working vehicle 1 including the fourth example of the power transmission mechanism 600 will be described. As illustrated in FIG. 59, the harvester 200 attached to the traveling machine body 100 of the working vehicle 1 including the fourth example of the power transmission mechanism 600 includes the power input 280 that receives an input of the power which is output upward with respect to the traveling machine body 100 from the power transmission mechanism 600. The harvester 200 includes an input pulley 283 as the power input 280. The input pulley 283 has the belt 633 of the belt transmission mechanism 630 wound thereon, and power is transmitted from the output pulley 631.

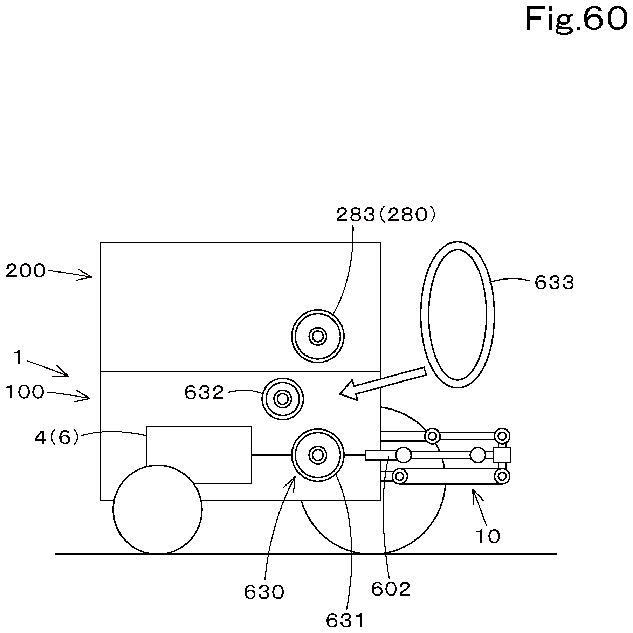

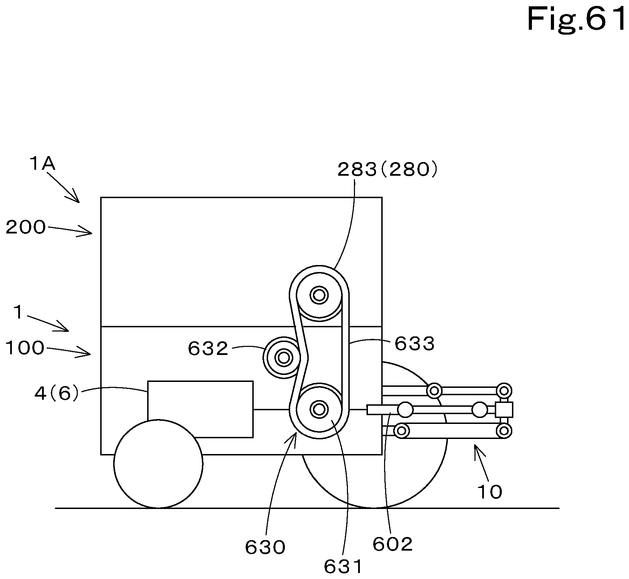

As illustrated in FIG. 60 and FIG. 61, when the harvester 200 is attached to the top of the traveling machine body 100 of the working vehicle 1 including the fourth example of the power transmission mechanism 600, the belt 633 is wound around the output pulley 631 provided in the traveling machine body 100 and the input pulley 283 provided in the harvester 200, and the tension pulley 632 is brought into contact with the outer surface of the belt 633. Thus, the rotational power output from the output pulley 631 is input to the input pulley 283 through the belt 633. The drive members (the harvester unit 210, the transporter 220, the thresher 240, the discharger 260, and the releaser 250) of the harvester 200 are driven by the power input to the input pulley 283.

In the first to fourth examples described above, the horizontal output shaft 602 may output the power generated by the power supply apparatus 4 to the front. In this case, the rear end of the horizontal output shaft 602 projects forward from the vehicle body. The lifting device 10 is preferably provided at a front portion of the vehicle body 2 such that the power output from the horizontal output shaft 602 forward of the vehicle body 2 can be input to the second working device 300 attached to the lifting device 10.

In the first to fourth examples described above, the horizontal output shaft 602 may output the power generated by the power supply apparatus 4 laterally (leftward or rightward). In this case, the rear end of the horizontal output shaft 602 projects laterally from the vehicle body 2. In this case, the lifting device 10 is preferably provided laterally of the vehicle body 2 such that the power output from the horizontal output shaft 602 laterally of the vehicle body 2 can be input to the second working device 300 attached to the lifting device 10.

The power transmission mechanism 600 described above may be a power transmission mechanism as a combination of the gear transmission mechanism 620 and the belt transmission mechanism 630. In this case, the power input 280 of the harvester 200 includes an input gear and/or an input pulley that can receive an input of power from the power transmission mechanism as a combination of the gear transmission mechanism 620 and the belt transmission mechanism 630.

As described above, the working vehicle 1 includes the upward output shaft 601 and/or the horizontal output shaft 602 as an external output shaft for taking off the power of the power supply apparatus 4 (the working motor 6) to the outside of the vehicle body 2. The power taken from the upward output shaft 601 can be input to the harvester 200 serving as a working device attached to an upper portion of the traveling machine body 100. When the horizontal output shaft 602 is in a horizontal state, the power taken from the horizontal output shaft 602 can be input to the second working device 300 different from the harvester 200, and when the horizontal output shaft 602 is changed to an upward state, the power can be input to the harvester 200.

The configuration of the embodiments described above is applicable not only when the harvester 200 is a reaping device to perform reaping of crops, but also when the harvester 200 is a digging machine to dig up crops and when the harvester 200 is a pulling up machine to pull up crops.

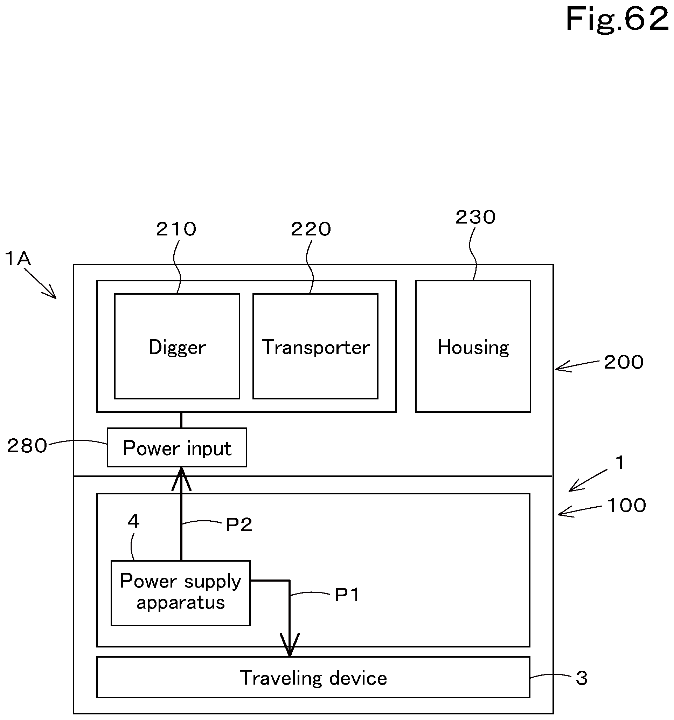

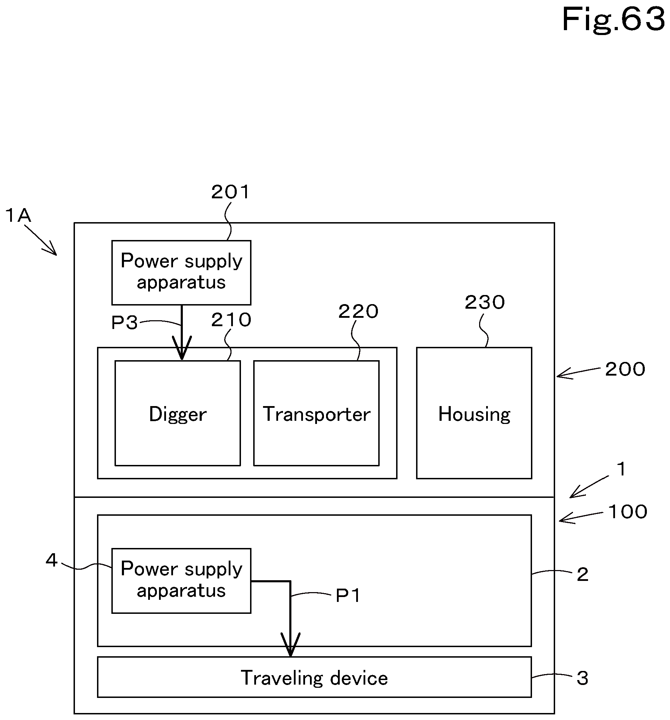

FIG. 62 and FIG. 63 are views illustrating the power transmission path of the harvesting machine 1A when the harvester 200 is a digging machine that digs up crops. The digging machine serving as the harvester 200 includes a digger (hereinafter referred to as a "digger 210") as the harvester 210, the transporter 220, and the housing 230.

The digger 210 includes, e.g., a plate-like or comb-like digging blade. The digger 210 digs up crops (such as potatoes) planted in an agricultural field, for example, by swinging a digging blade vertically with a cylinder device. The digger 210 is located forward of the harvester 200 (forward of the harvesting machine 1A). The digger 210 is provided forward (on the front wheel side) or rearward (on the rear wheel side) of the bottom of the traveling machine body 100.

The transporter 220 includes a conveyer that transports the crops dug up by the digger 210 upward (to an area above the traveling machine body 100). The front of the transporter 220 is connected to the digger 210. The transporter 220 extends to an area above the traveling machine body 100 in an upper diagonal direction from a portion connected to the digger 210. The transporter 220 transports the crops dug up by the digger 210 upward with respect to the traveling machine body 100 from a position forward (rearward) of the bottom of the traveling machine body 100. A rear portion of the transporter 220 is connected to the housing 230. The housing 230 houses the crop transported by the transporter 220. The housing 230 is located above the traveling machine body 100.

However, the configuration of the above-described digging machine is an example, and the configuration of the digging machine is not limited to the above configuration.

FIG. 62 is a view illustrating an example (first example) of the power transmission path of the harvesting machine 1A when the harvester 200 is a digging machine that digs up crops. As indicated by the arrow P2, in the harvesting machine 1A, power is supplied from the power supply apparatus 4 mounted on the traveling machine body 100 to the harvester (digging machine) 200. The power generated by the power supply apparatus 4 is also supplied to the traveling device 3 of the traveling machine body 100 (see the arrow P1).

The power supplied from the power supply apparatus 4 to the harvester (digging machine) 200 is input to the power input 280 of the harvester (digging machine) 200. Thus, the drive members (the digger 210 and the transporter 220) of the harvester (digging machine) 200 are driven, and the work (digging work) can be performed. In this manner, the harvester (digging machine) 200 can perform the harvesting work (digging work) based on the power supplied from the power supply apparatus 4 mounted on the traveling machine body 100.

FIG. 63 is a view illustrating another example (second example) of the power transmission path of the harvesting machine 1A when the harvester 200 is a digging machine. In the second example, the harvester (digging machine) 200 includes another power supply apparatus 201 that generates power to perform the harvesting work (digging work), separately from the power supply apparatus 4 mounted on the traveling machine body 100. Thus, as indicated by the arrow P3, power is supplied from the power supply apparatus 201 included in the harvester (digging machine) 200 to the drive members (the digger 210 and the transporter 220) of the harvester (digging machine) 200. Thus, the drive members (the digger 210 and the transporter 220) of the harvester (digging machine) 200 are driven, and the work (digging work) can be performed.

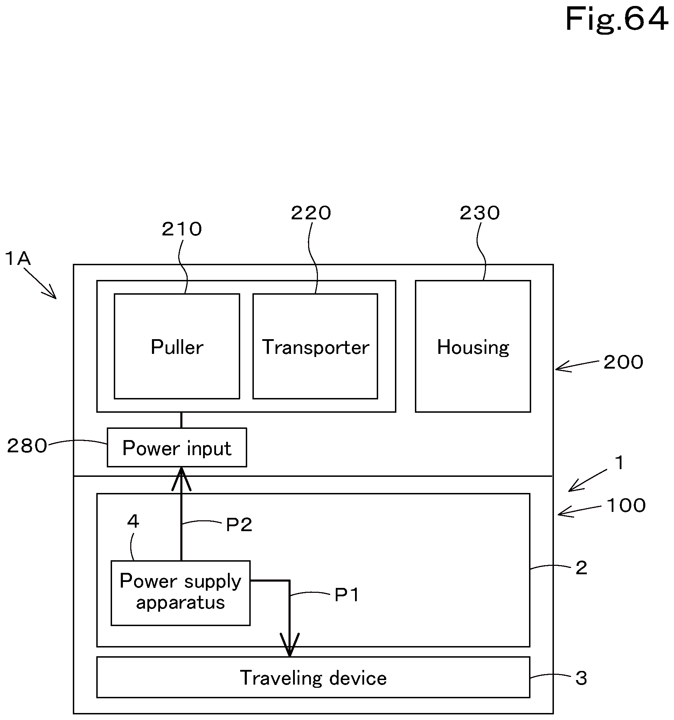

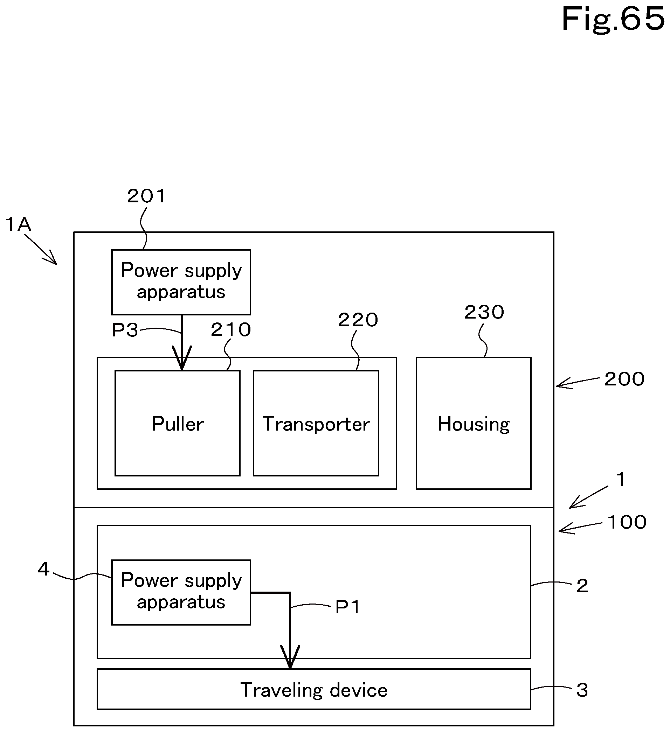

FIG. 64 and FIG. 65 illustrate the power transmission path of the harvesting machine 1A when the harvester 200 is a pulling up machine that pulls up crops. The pulling up machine serving as the harvester 200 includes a puller (hereinafter referred to as a "puller 210") as the harvester 210, the transporter 220, and the housing 230.

The puller 210 includes a holder that holds, e.g., the stem and leaves of crops (such as carrot and Japanese radish) planted in an agricultural field from the left and right sides. The puller 210 pulls up crops by pulling the stem and leaves held by the holder along an inclined surface as the puller 210 moves forward. The puller 210 is located forward of the harvester 200 (forward of the harvesting machine 1A). The puller 210 is provided forward (on the front wheel side) or rearward (on the rear wheel side) of the bottom of the traveling machine body 100.

The transporter 220 includes a conveyer that transports the crops pulled up by the puller 210 upward (to an area above the traveling machine body 100). A front portion of the transporter 220 is connected to the puller 210. The transporter 220 extends to an area above the traveling machine body 100 in an upper diagonal direction from a portion connected to the puller 210. The transporter 220 transports the crops pulled up by the puller 210 upward with respect to the traveling machine body 100 from a position forward (rearward) of the bottom of the traveling machine body 100. A rear portion of the transporter 220 is connected to the housing 230. The housing 230 houses the crop transported by the transporter 220. The housing 230 is located above the traveling machine body 100.

However, the configuration of the above-described pulling up machine is an example, and the configuration of the pulling up machine is not limited to the above configuration. For example, the puller 210 may be configured to pull the stem and leaves held by the holder by extension or retraction of the rod of a cylinder device.

FIG. 64 is a view illustrating an example (first example) of the power transmission path of the harvesting machine 1A when the harvester 200 is a pulling up machine. As indicated by the arrow P2, in the harvesting machine 1A, power is supplied from the power supply apparatus 4 mounted on the traveling machine body 100 to the harvester (pulling up machine) 200. The power generated by the power supply apparatus 4 is also supplied to the traveling device 3 of the traveling machine body 100 (see the arrow P1).

The power supplied from the power supply apparatus 4 to the harvester (pulling up machine) 200 is input to the power input 280 of the harvester (pulling up machine) 200. Thus, the drive members (the transporter 220, or the puller 210 and the transporter 220) of the harvester (pulling up machine) 200 are driven, and the work (pulling up work) can be performed. In this manner, the harvester (pulling up machine) 200 can perform the harvesting work (pulling up work) based on the power supplied from the power supply apparatus 4 mounted on the traveling machine body 100.

FIG. 65 is a view illustrating another example (second example) of the power transmission path of the harvesting machine 1A when the harvester 200 is a pulling up machine. In the second example, the harvester (pulling up machine) 200 includes another power supply apparatus 201 that generates power to perform the harvesting work (pulling up work), in addition to the power supply apparatus 4 mounted on the traveling machine body 100. Thus, as indicated by the arrow P3, power is supplied from the power supply apparatus 201 included in the harvester (pulling up machine) 200 to the drive member (the transporter 220) of the harvester (pulling up machine) 200. Thus, the drive member (the transporter 220) of the harvester 200 is driven, and the harvesting work (pulling up work) can be performed.

Preferred embodiments of the present invention provide working vehicles 1 and 1A, and methods of attaching the working device 200 thereto which are described in the following items.

(Item A1) A working vehicle 1 including a vehicle body 2, a traveling device 3 to support the vehicle body 2 such that the vehicle body 2 is allowed to travel, and a lifting mechanism 90 to raise and lower the vehicle body 2, wherein the lifting mechanism 90 is configured to raise the vehicle body 2 from a position below a working device 200 to attach the working device 200 to the vehicle body 2.

With the working vehicle 1 according to item A1, the working device 200 can be attached to an upper portion of the vehicle body 2. Specifically, the working device 200 can be easily attached to an upper portion of the vehicle body 2 by raising the vehicle body 2 located below the working device 200, by the lifting mechanism 90.

(Item A2) The working vehicle 1 according to item A1, wherein the lifting mechanism 90 is configured to lower, together with the vehicle body 2, the working device 200 attached to the vehicle body 2 from a position above a rest 150 toward the rest 150 to detach the working device 200 from the vehicle body 2.

With the working vehicle 1 according to item A2, the working device 200 attached to an upper portion of the vehicle body 2 can be detached. Specifically, when the working device 200 attached to the vehicle body 2 is lowered with the vehicle body 2 to the rest 150, and the vehicle body 2 can be lowered with the working device 200 left on the rest 150, therefore, the working device 200 can be detached from the vehicle body 2.

(Item A3) The working vehicle 1 according to item A1 or A2, wherein the vehicle body 2 has therein or thereon a power supply apparatus 4 and a power transmission mechanism 600 to transmit power generated by the power supply apparatus 4 to the working device 200, and the lifting mechanism 90 is configured to raise the vehicle body 2, which has therein or thereon the power supply apparatus 4 and the power transmission mechanism 600, to attach the working device 200 to the vehicle body 2.

With the working vehicle 1 according to item A3, the working device 200 can be attached to an upper portion of the vehicle body 2 with the power supply apparatus 4 and the power transmission mechanism 600 therein or thereon.

(Item A4) The working vehicle 1 according to item A3, wherein the power supply apparatus 4 includes a battery 7 and a motor 5, 6 to be driven by electricity supplied from the battery 7, and the lifting mechanism 90 is configured to raise the vehicle body 2, which has therein or thereon the battery 7 and the motor 5, 6, to attach the working device 200 to the vehicle body 2.

With the working vehicle 1 according to item A4, the working device 200 can be attached to an upper portion of the vehicle body 2 with the battery 7 and the motors 5 and 6 therein or thereon.

(Item A5) The working vehicle 1 according to any one of items A1 to A4, wherein the vehicle body 2 includes an attaching/detaching mechanism 400 to allow attachment and detachment of the working device 200 to and from the vehicle body 2.

With the working vehicle 1 according to item A5, the attaching/detaching mechanism 400 allows attachment and detachment of the working device 200 to and from the vehicle body 2.

(Item A6) The working vehicle 1 according to item A5, wherein the attaching/detaching mechanism 400 includes a locking mechanism 420 to secure the working device 200 to the vehicle body 2 when the working device 200 is placed on the vehicle body 2.

With the working vehicle 1 according to item A6, in a state where the working device 200 is placed on the vehicle body 2, the working device 200 can be secured to the vehicle body 2 by the locking mechanism 420. Thus, the working device 200 can be reliably prevented from being detached from the vehicle body 2 during work, for example.

(Item A7) The working vehicle 1 according to any one of items A1 to A6, wherein the vehicle body 2 includes a protrusion 401 raised upward at an upper portion thereof, and the working device 200 includes, at a lower portion thereof, a recess 501 to receive the protrusion 401 when the working device 200 is attached to the vehicle body 2.

With the working vehicle 1 according to item A7, the working device 200 can be reliably attached to an upper portion of the vehicle body 2 by fitting the recess 501 onto the protrusion 401.

(Item A8) The working vehicle 1 according to item A7, wherein the protrusion 401 includes a first inclined surface 402 inclined such that a width of the protrusion 401 decreases upward, and the recess 501 includes a second inclined surface 502 to contact the first inclined surface 402 when the working device 200 is attached to the vehicle body 2.

With the working vehicle 1 according to item A8, the working device 200 can be accurately positioned and attached to an upper portion of the vehicle body 2 by bringing the second inclined surface 502 into contact with the first inclined surface 402.

(Item A9) The working vehicle 1 according to any one of items A1 to A8, wherein the working device 200 includes a harvester 200 to perform harvesting work including at least one of reaping, digging or pulling a crop, and the harvester 200 is configured to perform the harvesting work with the vehicle body 2 in a lowered position.

With the working vehicle 1 according to item A9, the harvester 200 attached to an upper portion of the vehicle body 2 can be provided at a height suitable for reaping, digging and pulling crops and used for the harvesting work.

(Item A10) A method of attaching a working device 200 to a traveling machine body 100 which includes a vehicle body 2, a traveling device 3 to support the vehicle body 2 such that the vehicle body 2 is allowed to travel, and a lifting mechanism 90 to raise and lower the vehicle body 2, the method including an attaching step including raising the vehicle body 2 from a position below the working device 200 to attach the working device 200 to the vehicle body 2.

With the method of attaching the working device 200 according to item A10, the working device 200 can be attached to an upper portion of the vehicle body 2. Specifically, the working device 200 can be attached to an upper portion of the vehicle body 2 by raising the vehicle body 2 from a position below the working device 200 by the lifting mechanism 90.

(Item B1) A working vehicle 1 including a traveling machine body 100, a power supply apparatus 4 mounted in or on the traveling machine body 100, a mount 400 to allow a working device 200 including a power input 280 to receive an input of power to be attached to the traveling machine body 100, and to allow at least the power input 280 to be attached on the traveling machine body 100, and a power transmission mechanism 600 to output power generated by the power supply apparatus 4 upward with respect to the traveling machine body 100 such that the power is transmittable to the working device 200.

With the working vehicle 1 according to item B1, the power generated by the power supply apparatus 4 can be output upward with respect to the traveling machine body 100, and transmitted to the working device 200. Specifically, the power generated by the power supply apparatus 4 can be transmitted to the working device 200 through the power input 280 attached on the traveling machine body 100 via the mount 400.

(Item B2) The working vehicle 1 according to item B1, wherein the power transmission mechanism 600 includes an upward output shaft 601 extending upward to output power generated by the power supply apparatus 4 upward with respect to the traveling machine body 100.

With the working vehicle 1 according to item B2, the power generated by the power supply apparatus 4 can be output with respect to the traveling machine body 100 via the upward output shaft 601. Thus, the power generated by the power supply apparatus 4 can be easily and reliably transmitted to the power input 280 of the working device 200 attached on the traveling machine body 100.

(Item B3) The working vehicle 1 according to item B2, further including a horizontal output shaft 602 to output power generated by the power supply apparatus 4 forward, rearward or laterally, wherein the upward output shaft 601 branches from an intermediate portion of the horizontal output shaft 602 and extends upward.

With the working vehicle 1 according to item B3, the power generated by the power supply apparatus 4 can be partially drawn from an intermediate portion of the horizontal output shaft 602, and can be transmitted to the upward output shaft 601 that extends upward.

(Item B4) The working vehicle 1 according to any one of items B1 to B3, further including a horizontal output shaft 602 to output power generated by the power supply apparatus 4 forward, rearward or laterally, wherein the power transmission mechanism 600 includes a changing mechanism 610 to allow the horizontal output shaft 602 to be changed to an upward shaft that extends upward.

With the working vehicle 1 according to item B4, the power transmitted from the power supply apparatus 4 to the horizontal output shaft 602 can be output upward by changing the horizontal output shaft 602 to an upward shaft that extends upward. Also, an output shaft to output power upward does not need to be provided, separately from the horizontal output shaft 602.

(Item B5) The working vehicle 1 according to item B4, wherein the changing mechanism 610 includes a lifting device 10 to raise and lower a second working device 300 located forward or rearward of the traveling machine body 100, and the lifting device 10 is configured to, when the second working device 300 is not attached to the lifting device 10, change the horizontal output shaft 602 to an upward shaft.

With the working vehicle 1 according to item B5, when the second working device 300 is attached to the lifting device 10, power can be supplied to the second working device 300 attached to the lifting device 10 from the horizontal output shaft 602 which has not been changed to an upward shaft (and remains horizontal). When the second working device 300 is not attached to the lifting device 10, the horizontal output shaft 602 can be changed to an upward shaft, and power can be supplied to the working device 200 attached to the mount 400.

(Item B6) The working vehicle 1 according to item B1, further including a horizontal output shaft 602 to output power generated by the power supply apparatus 4 forward, rearward or laterally, wherein the power transmission mechanism 600 includes a gear transmission mechanism 620 to take power from an intermediate portion of the horizontal output shaft 602 and output the power upward with respect to the traveling machine body 100.

With the working vehicle 1 according to item B6, the power generated by the power supply apparatus 4 can be taken from an intermediate portion of the horizontal output shaft 602 and transmitted upward with respect to the traveling machine body 100 by the gear transmission mechanism 620.

(Item B7) The working vehicle 1 according to item B1, further including a horizontal output shaft 602 to output power generated by the power supply apparatus 4 forward, rearward or laterally, wherein the power transmission mechanism 600 includes a belt transmission mechanism 630 to take power from an intermediate portion of the horizontal output shaft 602 and output the power upward with respect to the traveling machine body 100.

In the working vehicle 1 according to item B7, the power generated by the power supply apparatus 4 can be taken from an intermediate portion of the horizontal output shaft 602, and transmitted upward with respect to the traveling machine body 100 via the belt transmission mechanism 630.

(Item B8) The working vehicle 1 according to any one of items B1 to B7, further including a working device 200 to be attached to the mount 400, wherein the working device 200 includes the power input 280 to receive an input of the power output upward from the power transmission mechanism 600 with respect to the traveling machine body 100.

With the working vehicle 1 according to item B8, the power output upward with respect to the traveling machine body 100 can be input, via the power input 280, into the working device 200 attached to the mount 400.

(Item B9) The working vehicle 1 according to item B8 taken in combination with item B2, wherein the working device 200 includes, as the power input 280, a downward input shaft 281 to be connected to the upward output shaft 601.

With the working vehicle 1 according to item B9, the power output upward with respect to the traveling machine body 100 by the upward output shaft 601 can be input, through the downward input shaft 281, into the working device 200 attached to the mount 400.

(Item B10) The working vehicle 1 according to item B8 taken in combination with item B4, wherein the working device 200 includes, as the power input 280, a downward input shaft 281 to be connected to the horizontal output shaft 602 which is in the form of the upward shaft.

With the working vehicle 1 according to item B10, the power output upward with respect to the traveling machine body 100 via the horizontal output shaft 602 in the form of an upward shaft can be input, through the downward input shaft 281, into the working device 200 attached to the mount 400.

(Item B11) The working vehicle 1 according to item B8 taken in combination with item B6, wherein the gear transmission mechanism 620 includes an output gear 624 to output power upward with respect to the traveling machine body 100, the power being taken from the intermediate portion of the horizontal output shaft 602, and the working device 200 includes, as the power input 280, an input gear 282 to be engaged with the output gear 624.

With the working vehicle 1 according to item B11, the power output upward with respect to the traveling machine body 100 by the output gear 624 can be input, through the input gear 282, into the working device 200 attached to the mount 400.

(Item B12) The working vehicle 1 according to item B8 taken in combination with item B7, wherein the belt transmission mechanism 630 includes an output pulley 631 to take power from the intermediate portion of the horizontal output shaft 602, and a belt 633 wound around the output pulley 631 to transmit power from the output pulley 631, and the working device 200 includes, as the power input 280, an input pulley 283 with the belt 633 wound thereon to receive power transmitted from the output pulley 631.

With the working vehicle 1 according to item B12, the power output upward with respect to the traveling machine body 100 by the output pulley 631 can be input, through the belt 633 and the input pulley 283, into the working device 200 attached to the mount 400.

(Item B13) A working vehicle 1A including a traveling machine body 100, a power supply apparatus 4 mounted in or on the traveling machine body 100, a working device 200 including a power input 280 to receive an input of power, a mount 400 to allow the working device 200 to be attached to the traveling machine body 100 and allow at least the power input 280 to be attached on the traveling machine body 100, and a power transmission mechanism 600 to output power generated by the power supply apparatus 4 upward with respect to the traveling machine body 100 such that the power is transmittable to the working device 200.

With the working vehicle 1A according to item B13, the working vehicle 1A including the working device 200 allows the power generated by the power supply apparatus 4 to be transmitted to the working device 200 through the power input 280 attached on the traveling machine body 100 via the mount 400.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1, 1A: working vehicle
- 4: power supply apparatus
- 10: lifting device
- 100: traveling machine body
- 200: working device
- 280: power input
- 281: downward input shaft
- 282: input gear
- 283: input pulley
- 400: mount
- 600: power transmission mechanism
- 601: upward output shaft
- 602: horizontal output shaft
- 610: changing mechanism
- 620: gear transmission mechanism
- 624: output gear
- 630: belt transmission mechanism
- 631: output pulley
- 633: belt

## Claims

1. A working vehicle comprising:
a traveling machine body;
a power supply apparatus mounted in or on the traveling machine body;
a mount to allow a working device including a power input to receive an input of power to be attached to the traveling machine body, and to allow at least the power input to be attached on the traveling machine body; and
a power transmission mechanism to output power generated by the power supply apparatus upward with respect to the traveling machine body such that the power is transmittable to the working device.

2. The working vehicle according to claim 1, wherein the power transmission mechanism includes an upward output shaft extending upward to output power generated by the power supply apparatus upward with respect to the traveling machine body.

3. The working vehicle according to claim 2, further including a horizontal output shaft to output power generated by the power supply apparatus forward, rearward or laterally; wherein
the upward output shaft branches from an intermediate portion of the horizontal output shaft and extends upward.

4. The working vehicle according to claim 1, further comprising a horizontal output shaft to output power generated by the power supply apparatus forward, rearward or laterally; wherein
the power transmission mechanism includes a changing mechanism to allow the horizontal output shaft to be changed to an upward shaft that extends upward.

5. The working vehicle according to claim 4, wherein
the changing mechanism includes a lifting device to raise and lower a second working device located forward or rearward of the traveling machine body; and
the lifting device is configured to, when the second working device is not attached to the lifting device, change the horizontal output shaft to an upward shaft.

6. The working vehicle according to claim 1, further comprising a horizontal output shaft to output power generated by the power supply apparatus forward, rearward or laterally; wherein
the power transmission mechanism includes a gear transmission mechanism to take power from an intermediate portion of the horizontal output shaft and output the power upward with respect to the traveling machine body.

7. The working vehicle according to claim 1, further comprising a horizontal output shaft to output power generated by the power supply apparatus forward, rearward or laterally; wherein
the power transmission mechanism includes a belt transmission mechanism to take power from an intermediate portion of the horizontal output shaft and output the power upward with respect to the traveling machine body.

8. The working vehicle according to any one of claims 1 to 7, further comprising a working device to be attached to the mount; wherein
the working device includes the power input to receive an input of the power output upward from the power transmission mechanism with respect to the traveling machine body.

9. The working vehicle according to claim 8 taken in combination with claim 2, wherein the working device includes, as the power input, a downward input shaft to be connected to the upward output shaft.

10. The working vehicle according to claim 8 taken in combination with claim 4, wherein the working device includes, as the power input, a downward input shaft to be connected to the horizontal output shaft which is in a form of the upward shaft.

11. The working vehicle according to claim 8 taken in combination with claim 6, wherein
the gear transmission mechanism includes an output gear to output power upward with respect to the traveling machine body, the power being taken from the intermediate portion of the horizontal output shaft; and
the working device includes, as the power input, an input gear to be engaged with the output gear.

12. The working vehicle according to claim 8 taken in combination with claim 7, wherein
the belt transmission mechanism includes an output pulley to take power from the intermediate portion of the horizontal output shaft, and a belt wound around the output pulley to transmit power from the output pulley; and
the working device includes, as the power input, an input pulley with the belt wound thereon to receive power transmitted from the output pulley.

13. A working vehicle comprising:
a traveling machine body;
a power supply apparatus mounted in or on the traveling machine body;
a working device including a power input to receive an input of power;
a mount to allow the working device to be attached to the traveling machine body and allow at least the power input to be attached on the traveling machine body; and
a power transmission mechanism to output power generated by the power supply apparatus upward with respect to the traveling machine body such that the power is transmittable to the working device.
